# EUROPÄISCHE PATENTSCHRIFT

(11) **EP 4 157 140 B1**
(45) Veröffentlichungstag und Bekanntmachung des Hinweises auf die Patenterteilung: **15.10.2025**
(21) Anmeldenummer: 21728866.1
(22) Anmeldetag: 21.05.2021
(51) Int. Cl.: A61C 11/00, A61C 11/08, A61C 13/01, A61C 13/10, A61C 13/36, A61C 13/00

(54) **EINKLEBEHILFSVORRICHTUNG FÜR KÜNSTLICHE ZÄHNE**
ADHESIVE BOND AID DEVICE FOR ARTIFICIAL TEETH
DISPOSITIF D'AIDE AU COLLAGE POUR DENTS ARTIFICIELLES

(30) Priorität: 25.05.2020 DE 102020113928
(43) Veröffentlichungstag der Anmeldung: 05.04.2023
(73) Patentinhaber: Exocad GmbH, 64293 Darmstadt (DE)
(72) Erfinder: MATTINA, Claudio, 64293 Darmstadt (DE)
(74) Vertreter: Richardt Patentanwälte PartG mbB
(86) Internationale Anmeldenummer: PCT/EP2021/063688
(87) Internationale Veröffentlichungsnummer: WO 2021/239628

(56) Entgegenhaltungen:
- WO-A1-2008/040400
- DE-U1- 202006 015 388
- US-A- 4 705 476
- US-A1- 2012 276 502
- US-A1- 2019 090 995
- US-A1- 2020 030 063

## Beschreibung

Die Erfindung betrifft eine Einklebehilfsvorrichtung für ein Anordnen, Ausrichten und Fixieren einer Mehrzahl künstlicher Zähne zum Einkleben in eine künstliche Gingiva einer Zahnprothese. Ferner betrifft die Erfindung ein System, welches eine entsprechende Einklebehilfsvorrichtung, die einzuklebenden Zähne und die künstliche Gingiva umfasst. Zudem betrifft die Erfindung ein Verfahren zum Herstellen einer Okklusionsvorrichtung für eine entsprechende Einklebehilfsvorrichtung und ein Verfahren zur Verwendung einer entsprechenden Einklebehilfsvorrichtung.

Verfahren und Vorrichtungen zur Herstellung von Prothesenkomponenten sind beispielsweise aus der WO2008040400 A1 bekannt.

Im Zuge des Herstellens von Zahnprothesen mit künstlichen Zähen werden die Zähne zumeist in eine künstliche Gingiva der Zahnprothese, welche als Prothesenbasis konfiguriert ist, unter Verwendung eines Klebemittels eingeklebt, z.B. einpolymerisiert. Damit die Zähne zusammen mit dem Klebemittel in die Gingiva eingebracht werden können, weisen Aufnahmen der Gingiva zur Aufnahme der Zähne ein Spiel, d.h. einen gewissen Bewegungsfreiraum für die Zähne, auf. Solange das weiche Klebemittel nicht ausgehärtet ist, sind die Zähen in der Gingiva beweglich. Dadurch wird eine exakte Positionierung der Zähne erheblich erschwert. Dies gilt umso mehr, als die Position der Zähne für das Aushärten des Klebemittels meist über einen längeren Zeitraum exakt beibehalten werden muss, um eine exakte Positionierung der Zähne sicherstellen zu können.

Der Erfindung liegt demgegenüber die Aufgabe zugrunde, eine Einklebehilfsvorrichtung zu schaffen, welche das Einkleben von künstlichen Zähnen in eine künstliche Gingiva zum Herstellen einer Zahnprothese vereinfacht.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Die Einklebehilfsvorrichtung umfasst beispielsweise drei Komponenten. Eine erste Komponente, z.B. eine Okklusionsvorrichtung, umfasst ein oder mehrere Abdrücke von Zähnen bzw. Zahnimpressionen. Eine zweite Komponente, z.B. eine Stützvorrichtung, umfasst ein oder mehrere Stützelemente. Eine dritte Komponente, z.B. ein Klemmelement, ist dazu konfiguriert Druck beispielsweise auf die erste und die zweite Komponente aufzubringen. Beispielsweise sind die drei Komponenten so anordbar bzw. so angeordnet, dass der von dem Klemmelement auf die Stützvorrichtung aufgebrachte Druck in Richtung auf die Zahnabdrücke der Okklusionsvorrichtung und der von dem Klemmelement auf die Okklusionsvorrichtung aufgebrachte Druck in Richtung auf die Stützelemente der Stützvorrichtung gerichtet ist. Beispielsweise sind die Stützvorrichtung und die Okklusionsvorrichtung so anordbar bzw. so angeordnet, dass die Zahnimpressionen der Okklusionsvorrichtung während des Aufbringens des Drucks den Stützelemente der Stützvorrichtung zugewandt sind. Das Klemmelement ist beispielsweise dazu konfiguriert mit der Okklusionsvorrichtung und der Stützvorrichtung zum Aufbringen des Drucks in Kontakt zu treten, entweder direkt oder indirekt über Zwischenkomponenten. Beispielsweise ist das Klemmelement zerstörungsfrei lösbar oder nicht zerstörungsfrei lösbar mit der Okklusionsvorrichtung und/der Stützvorrichtung verbunden. Beispielsweise ist das Klemmelement einstückig mit der Okklusionsvorrichtung und/der Stützvorrichtung ausgestaltet.

Beispielsweise wird eine Einklebehilfsvorrichtung für ein Anordnen, Ausrichten und Fixieren einer Mehrzahl erster künstlicher Zähne zum Einkleben in einer ersten künstlichen Gingiva einer ersten Zahnprothese bereitgestellt. Die Einklebehilfsvorrichtung umfasst eine Okklusionsvorrichtung zum Anordnen und Ausrichten der ersten Zähne relativ zueinander gemäß einer vordefinierten Okklusion, eine erste Stützvorrichtung zum Stützen eines die erste Gingiva umfassenden ersten Prothesenkörpers der ersten Zahnprothese mit ein oder mehreren ersten Stützelementen, welche an einer ersten Seite der ersten Stützvorrichtung angeordnet sind, und ein Klemmelement zum Fixieren der mittels der Okklusionsvorrichtung angeordneten und ausgerichteten ersten Zähne in der ersten Gingiva. Die Okklusionsvorrichtung umfasst auf einer ersten Seite erste Abdrücke von Zahnkronenoberseiten der ersten Zähne gemäß der vordefinierten Okklusion, in welchen die Zahnkronen der ersten Zähne zum Anordnen und Ausrichten positionierbar sind. Das Klemmelement ist dazu konfiguriert, Druck auf eine der ersten Seite abgewandte zweite Seite der Okklusionsvorrichtung und auf eine der ersten Seite abgewandte zweite Seite der ersten Stützvorrichtung aufzubringen zum Fixieren der mittels der Okklusionsvorrichtung angeordneten und ausgerichteten ersten Zähne in der ersten Gingiva des mittels der ersten Stützvorrichtung gestützten ersten Prothesenkörpers.

Dies könnte den Vorteil haben, dass es die Okklusionsvorrichtung ermöglicht die einzuklebenden Zähne in exakt vordefinierten Positionen zueinander auszurichten. Somit kann sichergestellt werden, dass die resultierende Okklusion einer für die Zahnprothese vordefinierten, d.h. geplanten, Okklusion entspricht. Insbesondere kann dadurch vermieden werden, dass nach einem Einkleben der Zähne mangelhafte Okklusionseigenschaften der Zahnprothese festgestellt werden, welche ein Herstellen einer neuen Zahnprothese erforderlich machen. Zumal für die neue Zahnprothese unter Umstände vor einem abschließenden Ergebnistest, etwa im Mund des Patienten, ebenso wenig sichergestellt werden kann, dass deren Okklusionseigenschaften tatsächlich zufriedenstellen sein werden. Dies könnte beispielsweise den Vorteil haben, dass ein Zurücksetzen der Zahnprothese nach dem Einkleben in einen Artikulator zum Testen der Okklusion entfallen kann, da beispielsweise eine exakte Okklusion bereits mittels der Einklebehilfsvorrichtung eingestellt werden kann bzw. die Einklebehilfsvorrichtung zum Einstellen einer solchen exakten Okklusion konfiguriert sein kann.

Die Klemmvorrichtung kann ferner sicherstellen, dass die Zähne während eines Aushärteprozesses des Klebemittels in der mittels Okklusionsvorrichtung erzielten Ausrichtung konstant fixiert werden können. Somit lassen sich unerwünschte Verschiebungen der Zähne während des Aushärteprozesses vermeiden.

Die Stützvorrichtung mit den Stützelementen kann eine stabile Abstützung des Prothesenkörpers mit der Gingiva bereitstellen. Beispielsweise ist eine der Gingiva gegenüberliegende bzw. von der Gingiva abgewandte Unterseite des Prothesenkörpers an eine Geometrie des Kiefers und der natürlichen Gingiva des Patienten, für welchen die entsprechende Zahnprothese vorgesehen ist, angepasst. Solche Mundraumgeometrien sind im Allgemeinen komplex und unregelmäßig. Die Unterseite des Prothesenkörpers stellt beispielsweise einen Abdruck, d.h. ein Negativ, der entsprechenden Geometrie des Kiefers und der natürlichen Gingiva dar, an welche sie angepasst ist. Dabei weist die Unterseite des Prothesenkörpers beispielsweise eine ebenso komplexe und gegebenenfalls unregelmäßige Geometrie auf. Die entsprechende Geometrie des Kiefers und der natürlichen Gingiva des Patienten wird beispielsweise eingescannt und als Vorlage für die Unterseite des Prothesenkörpers mit der künstlichen Gingiva verwendet, um einen möglichst passgenauen Sitz der Zahnprothese sicherzustellen. Es könnte ermöglicht werden, selbst solch komplexe Geometrie effizient abzustützen. Eine effiziente Abstützung kann beispielsweise mittels einer einstellbaren Dreipunktabstützung, einer Abstützung durch eine Mehrzahl elastischer Stützelemente, welche sich an die Geometrie anpassen, oder durch Stützflächen von ein oder mehreren Stützelementen erzielt werden, welche mit der Form der natürlichen Gingiva des Patienten übereinstimmen, d.h. ein Positiv derselben darstellen. Diese Form der natürlichen Gingiva des Patienten passt beispielsweise exakt zu der Form der Unterseite des Prothesenkörpers, die an die natürliche Gingiva angepasst ist. Die Form der natürlichen Gingiva des Patienten kann beispielsweise mittels eines Scans erfasst und zur Verwendung als Vorlage für die Herstellung entsprechender Stützelemente bereitgestellt werden.

Wenn die Zahnprothese zwischen der Stützvorrichtung und der Okklusionsvorrichtung angeordnet ist, d.h. die Zähne mittels der Okklusionsvorrichtung in der Gingiva des mittels der Stützvorrichtung abgestützten Prothesenkörpers positioniert werden, kann die Klemmvorrichtung jeweils einen konstanten Druck auf die der Zahnprothese abgewandte Seite der Okklusionsvorrichtung und der Stützvorrichtung aufzubringen. Somit kann über die Okklusionsvorrichtung ein konstanter Druck auf die Zähne und über die Stützvorrichtung ein konstanter Druck auf die Gingiva aufgebracht werden. Die Zähne können mittels des Drucks in ein oder mehreren zum Aufnehmen der entsprechenden Zähne vorgesehenen Aufnahmen der Gingiva fixiert werden. Dabei kann sichergestellt werden, dass ein von dem Klemmelement ein konstanter Druck aufrechterhalten werden kann, welcher Positionsverschiebungen der Zähne selbst im Zuge eines zeitlich ausgedehnten Aushärtungsprozesses unterbindet.

Dies könnte ferner den Vorteil haben, dass es die Zahnprothese mit den mittels der Einklebehilfsvorrichtung in der künstlichen Gingiva fixierten Zähnen vor einem Aushärten des Klebemittels auf eine exakte Positionierung überprüft werden können. Die Fixierung der Zähne kann dabei eine unbeabsichtigte Verschiebung der Zähne verhindern. Ferner kann die Verteilung des eingebrachten Klebemittels geprüft werden. Wurde beispielsweise lokal zu viel Klebemittel eingebracht, sodass dieses aus der Aufnahme der Zähne herausgedrückt wird, kann dieses überflüssige Klebemittel vor dem Aushärten entfernt werden. Ferner kann beispielsweise geprüft werden, ob lokal Klebemittel fehlt und gegebenenfalls zu ergänzen ist.

Werden Mängel hinsichtlich der Positionierung der Zähne, der Ausgestaltung der Zähne oder der Gingiva im Zusammenspiel miteinander, oder des eingebrachten Klebemittels festgestellt, können Korrekturen vorgenommen werden. Gegebenenfalls kann die Einklebehilfsvorrichtung gelöst und falls nötig können ein oder mehrere der Zähne oder der Prothesenkörper mit der Gingiva ausgetauscht werden. Somit kann vermieden werden, dass entsprechende Mängel erst nach dem Aushärten entdeckt werden und ein vollständiger Austausch der Zahnprothese notwendig werden könnte.

Unter Einkleben wird hier ein Herstellen einer nicht zerstörungsfrei lösbaren stoffschlüssigen Verbindung unter Verwendung eines Klebemittels verstanden. Beispielsweise wird ein weiches, etwa flüssiges, Klebemittel eingebracht und unter Aushärten des Klebemittels eine nicht zerstörungsfrei lösbare stoffschlüssige Verbindung hergestellt. Das Einkleben umfasst beispielsweise eine Polymerisation unter Verwendung eines Polymerisationsklebemittel. Dabei werden die künstlichen Zähne unter Verwendung einer Polymerisation in die künstliche Gingiva einpolymerisiert.

Das Aushärten des Klebemittels kann beispielsweise mittels Lichthärtung erfolgen. Im Zuge der Lichthärtung findet beispielsweise ein Härteprozess mit einer Polymerisation, etwa einer Kettenpolymerisation, statt. Als Klebemittel für eine Polymerisation wird beispielsweise Kunststoff verwendet. Je nach Anwendung kann es sich bei dem Kunststoff um ein Komposit zum erzielen gewünschter Eigenschaften mittels einer Mischpolymerisate handeln. Das weiche bzw. plastische Klebemittel wird in einem Lichthärtegerät unter Verwendung einer Polymerisationslampe mittels Lichthärtung irreversibel ausgehärtet. Eine Lichthärtung ermöglicht einen hohen Polymerisationsgrad, eine genaue Bestimmbarkeit des Polymerisationsbeginns sowie eine schnelle vollständige Polymerisation.

Beispielsweise kann die Zahnprothese zusammen, d.h. gleichzeitig, mit der Einklebehilfsvorrichtung in das Lichthärtegerät eingebracht werden, um die Zähne mittels der Einklebehilfsvorrichtung während des gesamten Polymerisationsprozesses an den exakten vorbestimmten Positionen in der Gingiva zu fixieren.

Die Zahnprothese umfasst einen Prothesenkörper, welcher eine künstliche Gingiva umfasst. Die künstliche Gingiva bildet beispielsweise eine Oberfläche einer Oberseite des Prothesenkörpers. Die künstliche Gingiva umfasst ein oder mehrere Aufnahmen, in welchen eine Mehrzahl von künstlichen Zähnen angeordnet wird. Die Aufnahmen sind dazu konfiguriert zusätzlich zu den künstlichen Zähnen ein Klebemittel aufzunehmen zum Einkleben der künstlichen Zähne in den Aufnahmen. Beispielsweise weisen die Aufnahmen der Gingiva zur Aufnahme der Zähne ein Spiel, d.h. einen gewissen Bewegungsfreiraum für die Zähne, auf, damit zusätzlich zu den Zähnen das Klebemittel aufgenommen werden kann. Eine der künstlichen Gingiva gegenüberliegende bzw. von der Gingiva abgewandte Unterseite des Prothesenkörpers ist dazu konfiguriert auf einer natürlichen Gingiva eines Patienten angeordnet zu werden. Beispielsweise weist die Unterseite die Form eines Abdrucks der natürlichen Gingiva auf. Bei der Zahnprothese handelt es sich beispielsweise um eine Voll- oder Teilprothese.

Die Mehrzahl von künstlichen Zähnen umfasst beispielsweise ein oder mehrere Einzelzähne und/oder eine Mehrzahl von miteinander verbundenen Zähnen, etwa in Form von ein oder mehreren Zahnbrücken. Die Mehrzahl von künstlichen Zähnen kann beispielsweise einen Teilzahnkranz oder einen vollständigen Zahnkranz bilden. Die künstlichen Zähne umfassen beispielsweise gedruckte und/oder gefräste Zähne, etwa in Form von ein oder mehrere Einzelzähne und/oder ein oder mehrere Zahnbrücken.

Bei dem Prothesenkörper handelt es sich beispielsweise um einen gedruckte und/oder gefräste Prothesenkörper. Bei der künstlichen Gingiva handelt es sich beispielsweise um eine gedruckte und/oder gefräste Gingiva. Die künstliche Gingiva umfasst ein oder mehrere Aufnahmen zur Aufnahme der künstlichen Zähne sowie des Klebemittels zum Festkleben, z.B. Festpolymerisieren, der in den Aufnahmen angeordneten künstlichen Zähne. Beispielsweise sind die ein oder mehreren Aufnahmen so geplant und in die künstliche Gingiva eingebracht, dass sie mit einem Klebemittel gefühlt werden können, in welches die einzuklebenden künstlichen Zähne eingebracht werden.

Beispielsweise ist die Stützvorrichtung plattenförmig, d.h. als Stützplatte, ausgestaltet. Beispielsweise ist die Okklusionsvorrichtung plattenförmig, d.h. als Okklusionsplatte, ausgestaltet.

Beispielsweise tritt das Klemmelement zum Aufbringen des Drucks in direkten Kontakt mit der Okklusionsvorrichtung und/oder der ersten Stützvorrichtung. Dies könnte den Vorteil haben, dass sich der Druck, d.h. die Kraft pro Fläche, auf die Okklusionsvorrichtung und/oder die Stützvorrichtung und damit auf die mit der Okklusionsvorrichtung bzw. der Stützvorrichtung in direktem Kontakt stehen Zähnen und Gingiva präzise steuern lässt. Dadurch lässt sich beispielsweise der auf das zwischen den Zähnen und der Gingiva angeordneten Klebemittel ausgeübte Druck präzise einstellen. Ist der Druck zu gering, kann die Fixierung der Zähne unzureichend sein und es kann zu Verschiebungen kommen. Ferner besteht die Gefahr, dass das Klebemittel in den Aufnahmen der Gingiva nicht vollständig zwischen Zähnen und Gingiva verteilt wird. Dies kann zu Hohlräumen führen, welche den Halt der Zähne in der fertigen Zahnprothese beeinträchtigen können. Ist der Druck zu hoch besteht die Gefahr, dass zu viel Klebemittel aus dem Bereich zwischen Zähnen und Gingiva herausgedrückt wird und lokal beispielsweise zu wenig Klebemittel zwischen Zähnen und Gingiva verleibt, um einen stabilen Halt der Zähne nach dem Aushärten des Klebemittels sicherstellen zu können.

Beispielsweise ist das Klemmelement dazu konfiguriert, den Druck über ein oder mehrere Zwischenelemente auf die Okklusionsvorrichtung und/oder die erste Stützvorrichtung aufzubringen. Beispielsweise kann die Einklebehilfsvorrichtung dazu konfiguriert sein, als Einklebehilfsvorrichtung für zwei Zahnprothesen simultan zu dienen. Bei einer der beiden Zahnprothesen handelt es sich beispielsweise um eine Zahnprothese für eine Oberkiefer eines Patienten, während es sich bei der anderen Zahnprothese beispielsweise um eine Zahnprothese für eine Unterkiefer des Patienten handelt. Die Okklusionsvorrichtung ist beispielsweise zwischen den Zähnen der beiden Zahnprothesen angeordnet und die Prothesenkörper der beiden Zahnprothesen mit den Gingivae werden jeweils durch eine Stützvorrichtung gestützt, auf welche das Klemmelement den Druck aufbringt. In diesem Fall wird der Druck auf die Okklusionsvorrichtung von dem Klemmelement beispielsweise nicht direkt aufgebracht, sondern über Zwischenelemente in Form der zweiten Zahnprothese und der zweiten Stützvorrichtung. Dies könnte den Vorteil haben, dass sich dadurch der auf die Zähne und Gingivae beider Zahnprothesen aufgebrachte Druck simultan steuern lässt und sich damit beispielsweise in beiden Zahnprothesen der auf das Klebemittel ausgeübte Druck präzise einstellen lässt. Dies könnte beispielsweise den Vorteil haben, dass ein Zurücksetzen der Zahnprothesen nach dem Einkleben in einen Artikulator zum Testen der Okklusion entfallen kann, da beispielsweise eine exakte Okklusion bereits mittels der Einklebehilfsvorrichtung eingestellt werden kann bzw. die Einklebehilfsvorrichtung zum Einstellen einer solchen exakten Okklusion konfiguriert sein kann.

Beispielsweise treten die ein oder mehreren ersten Stützelemente im Zuge des Stützens mit der Unterseite des ersten Prothesenkörpers mit, der die erste Gingiva umfasst, in Kontakt und stützen diese Unterseite bzw. übertragen den von dem Klemmelement auf die ersten Stützvorrichtung aufgebrachten Druck auf die Unterseite. Dies könnte den Vorteil haben, dass die Stützelemente an die Geometrie der Unterseite des Prothesenkörpers angepasst werden können, um eine effektive Stützung breitzustellen. Beispielsweise kann sich um generische Stützelemente handeln, welche beispielsweise aus einem elastischen Material bestehen und sich die entsprechende Geometrie anpassen. Alternativ kann es sich um Stützelemente handeln, deren Position und/oder Länge an die entsprechende Geometrie anpassbar ist, um etwa eine Dreipunktabstützung bereitzustellen. Mit drei nicht auf einer gemeinsamen Linie liegenden Punkten lassen sich beispielsweise Flächen mit beliebiger Geometrie abstützen. Bei einer Verwendung der minimalen notwendigen Anzahl von drei Stützpunkten könnten die für eine stabile Abstützung notwendigen Anpassungen minimiert werden, wodurch ein effektives Anpassen an beliebige Geometrien ermöglicht werden kann. Alternativ kann eine Mehrzahl von Stützelementen mit unterschiedlichen Längen bereitgestellt werden, sodass Stützelemente mit für die entsprechende Geometrie passenden Längen aus der bereitgestellten Mehrzahl ausgewählt werden können. Alternativ kann es sich bei den Stützelementen um prothesenindividuelle und damit patientenindividuelle Stützelemente handeln, welche eine Stützfläche aufweisen, welche einen Abdruck einer vorgesehen Kontaktfläche der Unterseite des Prothesenkörpers darstellen. Die entsprechenden Stützelemente sind beispielsweise spezifisch zum Abstützen der individuellen Zahnprothese konfiguriert und stellen einen passgenauen Kontakt zwischen Stützfläche und Kontaktfläche sicher.

Beispielsweise handelt es sich bei der Stützvorrichtung um eine prothesenindividuelle bzw. patientenindividuelle Stützvorrichtung, deren Größe, Form und/oder verwendeten Stützelemente spezifisch für eine individuelle Zahnprothese konfiguriert sind. Beispielsweise handelte es sich bei der Stützvorrichtung um eine generische Stützvorrichtung, deren Verwendung nicht auf eine individuelle Zahnprothese für einen individuellen Patienten begrenzt ist. Beispielsweise handelte es sich bei der Stützvorrichtung um eine generische Stützvorrichtung, welche sich für die verschiedene Zahnprothese bzw. Patienten jeweils individuell einstellen lässt. Beispielsweise handelt es sich bei der Stützvorrichtung um eine generische Stützvorrichtung, deren Größe, Form und/oder verwendeten Stützelemente nicht spezifisch für individuelle Zahnprothese konfiguriert sind. Eine solche generische Stützvorrichtung kann beispielsweise für unterschiedliche Zahnprothese verwendet und/oder gegebenenfalls an unterschiedliche Zahnprothese angepasst werden.

Beispielsweise handelt es sich bei der Okklusionsvorrichtung um eine prothesenindividuelle bzw. patientenindividuelle Okklusionsvorrichtung mit prothesenindividuellen bzw. patientenindividuellen ersten Abdrücken der Zahnkronenoberseiten der ersten Zähne. Beispielsweise handelt es sich bei der Okklusion um eine prothesenindividuelle bzw. patientenindividuelle Okklusion. Dies könnte den Vorteil haben, dass bei einer Verwendung patientenindividueller Zähne oder generischer Zähne, deren Position und/oder Ausrichtung an patientenindividuelle Antagonisten anzupassen sind, sichergestellt werden kann, dass die Zähne so positionsgenaue angeordnet und ausgerichtet werden, dass eine für den individuellen Patienten maßgeschneiderte Okklusion realisiert werden kann. Mit anderen Worten kann sichergestellt werden, dass die entsprechende Zahnprothese beim Einsetzen in den Mund des Patienten keine okklusionsbedingten Probleme versursacht.

Beispielsweise können für die Zahnprothese generische Zähne, beispielsweise aus einer Zahnbibliothek verwendet werden, die bei verschiedenen Zahnprothesen bzw. bei Zahnprothesen für verschiede Patienten zum Einsatz kommen können. In diesem Fall handelt es sich bei den Abdrücken der Okklusionsvorrichtung beispielsweise nicht um prothesenindividuellen bzw. patientenindividuellen Abdrücke, sondern beispielsweise um generische Abdrücke.

Beispielsweise umfasst das Klemmelement eine Einstellvorrichtung zum Einstellen eines auf die Okklusionsvorrichtung und die erste Stützvorrichtung aufgebrachten Drucks. Dies könnte den Vorteil haben, dass mit der Einstellvorrichtung ein geeigneter Druck eingestellt werden kann. Beispielsweise kann der Druck so eingestellt werden, dass das Klebemittel durch den Druck in den Aufnahmen der künstlichen Gingiva verteilt wird und die Zwischenräume zwischen den in den Aufnahmen angeordneten Zähen und den Wänden der Aufnahmen vollständig ausgefüllt wird. Die Einstellvorrichtung zum Einstellen des Drucks kann beispielsweise eine Schraubvorrichtung, etwa mit einer Gewindespindel, umfassen, durch welche ein Abstand zwischen der Okklusionsvorrichtung und der Stützvorrichtung und damit der auf die Zahnprothese ausgeübte Druck eingestellt werden kann. Beispielsweise umfasst die Einstellvorrichtung eine Feder mit einstellbarer Federkonstante und/oder mit einstellbarer Position. Beispielsweise umfasst die Einstellvorrichtung eine Anzeige zum Anzeigen der gewählten Einstellung, sodass eine vordefinierte Einstellung zum bereitstellen eines vordefinierten Drucks gewählt werden kann.

Beispielsweise ist das Klemmelement dazu konfiguriert, einen vordefinierten Druck auf die Okklusionsvorrichtung und die erste Stützvorrichtung aufzubringen. Dies könnte den Vorteil haben, dass ein vordefinierter Druck auf Okklusionsvorrichtung und Stützvorrichtung aufgebracht wird und damit auf die Zähne und die Gingiva einer zwischen der Okklusionsvorrichtung und Stützvorrichtung angeordneten Zahnprothese aufgebracht werden kann. So kann beispielsweise sichergestellt werden, dass ein vordefinierter Druck auf das Klebemittel zwischen Zähnen und Gingiva aufgebracht wird, welcher eine vollständige Verteilung des Klebemittels zwischen Zähnen und Gingiva sicherstellt und zugleich sicherstellt, dass nicht zu viel Klebemittel zwischen Zähnen und Gingiva herausgedrückt wird.

Beispielsweise handelt es sich bei dem Klemmelement um ein prothesenindividuelles bzw. patientenindividuelles Klemmelement. Beispielsweise handelt es sich bei dem Klemmelement um ein prothesenindividuelles Klemmelement, welches dazu konfiguriert ist, einen prothesenindividuellen vordefinierten Druck auf die Okklusionsvorrichtung und die erste Stützvorrichtung aufzubringen, wenn die erste Zahnprothese mit dem ersten Prothesenkörper und den ersten Zähnen zwischen der Okklusionsvorrichtung und der Stützvorrichtung angeordnet ist. Dies könnte den Vorteil haben, dass das Klemmelement dazu konfiguriert sein kann, auf eine gegebene Zahnprothese einen vordefinierten Druck aufzubringen.

Beispielsweise handelte es sich bei dem Klemmelement um ein generisches Klemmelement, dessen Verwendung nicht auf eine individuelle Zahnprothese für einen individuellen Patienten begrenzt ist. Beispielsweise handelte es sich bei dem Klemmelement um ein generisches Klemmelement, welches sich für verschiedene Zahnprothesen bzw. Patienten jeweils individuell einstellen lässt. Beispielsweise kann das Klemmelement an Abmessungen einer individuellen Zahnprothese angepasst werden, um einen vordefinierten Druck einzustellen, welcher auf die Okklusionsvorrichtung und die Stützvorrichtung sowie im Ergebnis auf die Zähne und die Gingiva aufgebracht wird.

Beispielsweise umfasst das Klemmelement eine Feder. Die Feder kann beispielsweise dazu konfiguriert sein, in Abhängigkeit einer Position und/oder Federkonstante der Feder eine Federkraft zu erzeugen, welche den vordefinierten Druck auf die Okklusionsvorrichtung und die erste Stützvorrichtung aufbringt.

Beispielsweise ist eine Auslenkung der Feder beim Aufbringen des Drucks auf die Okklusionsvorrichtung und die erste Stützvorrichtung mit der dazwischen angeordneten ersten Zahnprothese abhängig von der Position der Feder, sodass über die Position der Feder die Federkraft gesteuert werden kann. Beispielsweise ist eine Auslenkung der Feder beim Aufbringen des Drucks auf die Okklusionsvorrichtung und die erste Stützvorrichtung mit der dazwischen angeordneten ersten Zahnprothese abhängig von einer Ruhelänge bzw. Ruheauslenkung der Feder.

Beispielsweise wird der erzeugte Druck, d.h. Kraft pro Fläche, von der durch die Feder bereitgestellten Federkraft bestimmt. Diese Federkraft ist beispielsweise abhängig von der Auslenkung der Feder beim Aufbringen des Drucks und von der Federkonstante der Feder. Die Auslenkung ist beispielsweise abhängig von der Position der Feder. Durch Wahl einer bestimmten Feder mit einer bestimmten Federkonstante, welche beim Aufbringen des Drucks eine bestimmte Auslenkung aufweist, beispielsweise in Abhängigkeit von einer Ruhelänge bzw. Ruheauslenkung, und/oder einer Wahl der Position der Feder, kann die Federkraft und damit beispielsweise der aufgebrachte Druck eingestellt werden. Beispielsweise wird eine Mehrzahl unterschiedlicher Federn mit unterschiedlichen Federkonstanten und/oder Abmessungen bereitgestellt, aus welchen eine passende Feder zum Erzeugen des vordefinierten Drucks ausgewählt wird. Die Abmessungen der Federn bestimmen beispielsweise eine Ruheauslenkung der Feder.

Beispielsweise ist die Feder zerstörungsfrei austauschbar. Beispielsweise kann eine aktuelle Feder gegen eine Feder mit einer größeren oder kleineren Federkonstante als die Federkonstante der aktuellen Feder und/oder einer anderen Abmessung als die aktuelle Feder ausgetauscht werden. So kann beispielsweise durch eine Wahl der verwendeten Feder die aufgebrachte Federkraft und damit der Druck auf die Okklusionsvorrichtung und die erste Stützvorrichtung mit der dazwischen angeordneten ersten Zahnprothese individuell für die erste Zahnprothese eingestellt werden.

Beispielsweise ist die Position der Feder zerstörungsfrei änderbar. Beispielsweise ist eine Mehrzahl von Positionen für die Feder durch das Klemmelement vorgegeben. Beispielsweise kann die Position der Federkonstant mittels Wechsel von einer vorgegebenen Position zu nächsten in diskreten Schritten geändert werden. Beispielsweise weist die Feder in unterschiedlichen Positionen beim Aufbringen des Drucks auf die Okklusionsvorrichtung und die erste Stützvorrichtung mit der dazwischen angeordneten ersten Zahnprothese unterschiedliche Auslenkungen auf. Beispielsweise kann über die Wahl der Position der Feder mit der jeweils positionsabhängigen Auslenkung die Federkraft gesteuert werden. So kann beispielsweise durch eine Wahl der Position der Feder die aufgebrachte Federkraft und damit der Druck auf die Okklusionsvorrichtung und die erste Stützvorrichtung mit der dazwischen angeordneten ersten Zahnprothese für die erste Zahnprothese individuell eingestellt werden.

Beispielsweise umfasst das Klemmelement eine Einstellvorrichtung zum individuellen mechanischen Einstellen der Kraft, beispielsweise durch Erhöhung oder Verringerung der auf die Stützvorrichtung und/oder die Okklusionsvorrichtung aufgebrachten Kraft. Somit könnte beispielsweise der auf die künstlichen Zähne und die künstliche Gingiva aufgebrachte Druck präzise eingestellt bzw. angepasst werden.

Beispielsweise weist das Klemmelement einen ersten und einen zweiten Schenkel auf, welche relativ zueinander um eine gemeinsame Schwenkachse verschwenkbar miteinander verbunden sind. Die beiden Schenkel sind über eine zwischen den beiden Schenkeln angeordnete Feder miteinander verbunden. Dies könnte den Vorteil haben, dass die Feder bei einem relativen Verschwenken der Schenkel gedehnt wird und eine Federkraft bereitstellt, welche der Dehnung entgegenwirkt. Werden die beiden Schenkel verschwenkt, beispielsweise damit ein erstes Ende des ersten Schenkels mit der zweiten Seite der Okklusionsvorrichtung und ein zweites Ende des zweiten Schenkels mit der zweiten Seite der Stützvorrichtung in Kontakt tritt, werden die beiden Enden beispielsweise durch die dem Verschwenken entgegenwirkende Feder auf die Okklusionsvorrichtung und die Stützvorrichtung gedrückt, so dass sie diese mit Druck beaufschlagen. Je weiter die beiden Schenkel relativ zueinander verschwenkt, d.h. gespreizt, werden, desto größer ist die aufgebrachte Federkraft und damit der aufgebrachte Druck.

Beispielsweise steht die Schwenkachse senkrecht auf den beiden Schenkeln bzw. auf einer Längserstreckungsrichtung der jeweiligen Schenkel. Beispielsweise handelt es sich bei der Feder um eine Schenkelfeder. Beispielsweise erstreckt sich die Schwenkachse durch die Feder. Beispielsweise ist die Feder als Gelenk konfiguriert, um welches die beiden Schenkel relativ zueinander verschwenkbar sind. Bei einer Schenkelfeder handelt es sich um eine schraubenförmig gewickelte bzw. gewundene Federn, etwa eine Drahtfeder, welche zwei abstehenden geraden Enden bzw. Schenkel aufweist, die zur Einleitung eines die Federwicklungen biegenden Drehmoments konfiguriert ist. Eine Schenkelfeder kann beispielsweise als Gelenk für eine Rotations- bzw. Schwenkbewegung verwendet werden. Beispielsweise kann es sich bei der Feder um eine andere bekannte Art von Feder, wie etwa eine Schraubenfeder, handeln.

Beispielsweise umfassen die beiden Schenkel des Klemmelements eine Mehrzahl von Bohrungen, welche entlang einer Längsrichtung der Schenkel angeordnet und für eine Aufnahme der Schenkel der Schenkelfeder konfiguriert sind. Dies könnte den Vorteil haben, dass die Position der Schenkelfeder entlang der Längsrichtung der Schenkel geändert werden kann, indem die Schenkel der Schenkelfeder von einem ersten Paar von Bohrungen an einer ersten Position entlang der Längsrichtung der Schenkel in ein zweites Paar an einer zweiten Position entlang der Längsrichtung der Schenkel umgesteckt werden.

Beispielsweise umfassen die Schenkel des Klemmelements jeweils einen ersten und einen zweiten geraden Abschnitt, welche einen flachen Winkel miteinander einschließen. Beispielsweise sind die beiden Schenkel so angeordnet, dass die beiden ersten Schenkelabschnitte, welche jeweils das mit der Okklusionsvorrichtung bzw. mit der Stützvorrichtung in Kontakt tretende Ende umfassen, sich parallel zueinander erstrecken, während die zweiten Abschnitte einander zugeneigt sind. Beispielsweise berühren sich die Enden der zweiten Abschnitte.

Beispielsweise umfasst das Klemmelement ein Führungselement, welches dazu konfiguriert ist, die Bewegung der beiden Schenkel bei einem Verschwenken um die Schwenkachse zu führen. Beispielsweise hat das Führungselement eine Kreisbogenform. Beispielsweise ist das Führungselement als kreisbogenförmige Scheibe ausgestaltet. Beispielsweise ist das Führungselement mit einem ersten der beiden Schenkel verbunden und durch eine Durchgangsöffnung in dem zweiten Schenkel geführt. Wird der zweite Schenkel relativ zu dem ersten Schenkel versschwenkt, wird dieser entlang dem Führungselement geführt.

Beispielsweise umfasst das Klemmelement ein Begrenzungselement, welches dazu konfiguriert ist, eine Annäherung der beiden Enden der Schenkel, welche vorgesehen sind mit der Okklusionsvorrichtung und/oder der Stützvorrichtung in Kontakt zu treten, zu begrenzen. Beispielsweise werden die entsprechenden Enden durch die Feder aufeinander zu gezogen. Das Begrenzungselement stellt eine Mindestöffnung des Klemmelements bzw. einen Mindestabstand zwischen den entsprechenden Enden sicher. Das Begrenzungselement kann den Vorteil haben, dass durch den Mindestabstand zwischen den Enden der Schenkel der zusätzliche Öffnungsweg beschränkt werden kann, welcher notwendig ist, um einen ausreichenden Abstand zwischen den beiden Enden sicherzustellen, sodass die Stützvorrichtung und die Okklusionsvorrichtung mit der dazwischen angeordneten Zahnprothese zwischen den entsprechenden Enden eingebracht werden kann. Beispielsweise handelt es sich bei dem Begrenzungselement um ein Element, welches alternativ oder zusätzlich zu dem Führungselement vorgesehenen ist. Beispielsweise ist das Begrenzungselement gerade oder kreisbogenförmig ausgestaltet und an einem ersten der beiden Schenkel befestig, während es sich dem anderen Schenkel entgegenstreckt und dessen mögliche Annährung an bzw. Verschwenken auf den ersten Schenkel zu begrenzt. Beispielsweise ist das Begrenzungselement in das Führungselement integriert. Beispielsweise handelt es sich bei den Begrenzungsabschnitt um einen zwischen den beiden Schenkeln angeordneten erster Anschnitt des Führungselements, welcher einen größeren Durchmesser, etwa eine größeren maximalen Durchmesser, als ein durch den zweiten Schenkel geführter zweiter Abschnitt des Führungselements aufweist. Beispielsweise ist ein Durchmesser eines Querschnitts des Begrenzungselements senkrecht zur Erstreckungsrichtung der Durchgangsöffnung in dem zweiten Schenkel zumindest in einer Richtung größer als ein Durchmesser der Durchgangsöffnung, durch welche sich der zweiter Abschnitt des Führungselements erstreckt, sodass das Begrenzungselement nicht durch die Durchgangsöffnung passt und ein mögliches Verschwenken des zweiten Schenkels auf den ersten Schenkel zu begrenzt.

Beispielsweise umfasst das Klemmelement ein oder mehrere elastische Bögen, welche sich beispielsweise von der ersten Stützvorrichtung zu der Okklusionsvorrichtung erstrecken und eine Federkonstante aufweisen, welche dazu konfiguriert ist, mittels Federkraft den vordefinierten Druck auf die Okklusionsvorrichtung und die erste Stützvorrichtung aufzubringen. Bei der Federkonstante handelt es sich beispielsweise um die Kombination, etwa eine Summe, der Federkonstanten der einzelnen Bögen. Dies könnte den Vorteil haben, dass das Klemmelement einen einfachen Aufbau aufweisen kann. Die Federkraft, welche den Druck auf die Okklusionsvorrichtung und/oder die Stützvorrichtung ausübt, könnte aus der Elastizität des Klemmelements selbst resultiert, wenn die ein oder mehreren Bögen aufgebogen werden, sodass einander gegenüberliegend angeordnete Enden der ein oder mehreren Bögen über Okklusionsvorrichtung und Stützvorrichtung mit der dazwischen angeordneten Zahnprothese geschoben werden können. Beispielsweise ist das Klemmelement einstückig als ein elastischer Bogen oder mehrere miteinander verbundene elastische Bögen ausgestaltet. Beispielsweise wird eine Mehrzahl von Klemmelement verwendet, welche beispielsweise jeweils einstückig als ein elastischer Bogen konfiguriert sind.

Beispielsweise sind ein oder mehreren der Bögen jeweils halbkreisförmig ausgestaltet. Beispielsweise handelt es sich bei ein oder mehreren der Bögen um Kreisbögen. Beispielsweise sind ein oder mehrere der Bögen halbellipsenförmig ausgestaltet. Beispielsweise handelt es sich bei ein oder mehreren der entsprechenden Halbellipsen um eine hohe oder eine breite Halbellipse. Im Falle der hohen Halbellipse handelt es sich bei der die entsprechende Ellipse halbierenden Achse um die Nebenachse der Ellipse, welche sich durch den Mittelpunkt und zwei Scheitelpunkte der Ellipse, aber keinen der Brennpunkte erstreckt. Im Falle der breiten Halbellipse handelt es sich bei der die entsprechende Ellipse halbierenden Achse um die Hauptachse der Ellipse, welche sich durch den Mittelpunkt, zwei Scheitelpunkte sowie die beiden Brennpunkte erstreckt. Beispielsweise handelt es sich bei ein oder mehrere der Bögen um Ellipsenbögen.

Beispielsweise ist das Klemmelement einstückig ausgestaltet. Dies könnte den Vorteil haben, dass das Klemmelement einfach herzustellen ist. Beispielsweise kann es mittels eines 3D-Druckers gedruckt werden oder mittels eines spananhebenden Verfahrens, wie etwa Fräsens, hergestellt werden. Beispielsweise umfasst das Klemmelement ein oder mehrere elastische Bögen. Beispielsweise ist das Klemmelement als ein elastischer Bogen ausgestaltet. Beispielsweise ist das Klemmelement als eine Mehrzahl miteinander verbundener elastischer Bögen ausgestaltet. Beispielsweise sind die Bögen jeweils mit einem Ende oder mit beiden Enden miteinander verbunden.

Beispielsweise ist das Klemmelement zusammen mit der ersten Stützvorrichtung und/oder der Okklusionsvorrichtung einstückig ausgestaltet. Dies könnte den Vorteil haben, dass die Kombination aus Klemmelement und Stützvorrichtung und/oder Okklusionsvorrichtung einfach herzustellen ist. Beispielsweise kann eine solche Kombination mittels eines 3D-Druckers gedruckt werden oder mittels eines spananhebenden Verfahrens, wie etwa Fräsens, hergestellt werden. Beispielsweise ist das Klemmelement als ein sich von der Stützvorrichtung und/oder Okklusionsvorrichtung aus erstreckender elastischer Bogen ausgestaltet. Beispielsweise ist das Klemmelement als eine Mehrzahl sich von der Stützvorrichtung und/oder Okklusionsvorrichtung aus erstreckenden elastischen Bögen ausgestaltet. Beispielsweise verbindet das Klemmelement Stützvorrichtung und Okklusionsvorrichtung.

Beispielsweise ist das Klemmelement an der zweiten Seite der ersten Stützvorrichtung und/oder an der zweiten Seite der Okklusionsvorrichtung unter Verwendung eines Halteelements zerstörungsfrei lösbar befestigt. Dies könnte den Vorteil haben, dass das Klemmelement an der Stützvorrichtung und/oder der Okklusionsvorrichtung befestigt werden kann, bevor die Zähne in der Gingiva angeordnet werden und die entsprechende Zahnprothese zwischen Stützvorrichtung und Okklusionsvorrichtung angeordnet wird. Durch das Halteelement kann ein Lösen der Befestigung im Zuge des Einbringers der Zahnprothese verhindert werden. Dies kann von Vorteil sein, wenn das Klemmelement zum Einbringen mit nur zwei Händen aufgebogen werden soll. Mit einer Hand kann die Zahnprothese mit Okklusionsvorrichtung und/oder Stützvorrichtung gehalten werden, während mit der anderen Hand das Klemmelement aufgebogen wird, welches an Okklusionsvorrichtung und/oder Stützvorrichtung befestigt ist.

Beispielsweise handelt es sich bei dem Halteelement um eine Schraube. Beispielsweise handelt es sich bei dem Halteelement um ein Element einer bekannten, vorzugsweise zerstörungsfrei lösbaren Verbindungform, wie etwa einer Steckverbindung, Klemmverbindung, Rastverbindung, oder eines Bajonettverschlusses etc. Beispielsweise ist das Halteelement im Zentrum der Okklusionsvorrichtung und/oder Stützvorrichtung angeordnet. Beispielsweise ist das Halteelement über ein elastisches Element gelagert, etwa einen Gummipuffer oder Federelement, durch welches sich das Halteelement, etwa in Form einer Schraube, hindurch erstreckt. Die elastische Lagerung ermöglicht beispielsweise einen Ausgleich bei Verwendung von Stützelementen unterschiedlicher Längen oder bei unterschiedlichen Abmessungen der Zahnprothese, etwa unterschiedlicher Kieferkammverhältnisse des Prothesenkörpers bzw. der künstlichen Gingiva, um etwa eine Höhennivellierung auszugleichen bei gleichbleibendem Druck auf alle zwischen der Stützvorrichtung und der Okklusionsvorrichtung angeordneten Elemente.

Beispielsweise ist das Halteelement dazu konfiguriert, eine eindimensionale elastische laterale Verschiebung der ersten Stützvorrichtung und/oder der Okklusionsvorrichtung relativ zu dem Halteelement zu ermöglichen. Beispielsweise erfolgt die eindimensionale elastische laterale Verschiebung entlang einer Verschiebungsachse, welche senkrecht auf einer Erstreckungsebene der ersten Stützvorrichtung und/oder der Okklusionsvorrichtung steht. Eine solche laterale Verschiebbarkeit kann durch Verwendung einer oben beschriebenen elastischen Lagerung implementiert werden.

Beispielsweise ist das Halteelement dazu konfiguriert, eine Rotation der von dem Halteelement gehaltenen ersten Stützvorrichtung und/oder der Okklusionsvorrichtung um eine Rotationsachse zu ermöglichen, welche senkrecht auf einer Erstreckungsebene der ersten Stützvorrichtung und/oder der Okklusionsvorrichtung steht. Dies könnte den Vorteil haben, dass eine zwischen Stützvorrichtung und Okklusionsvorrichtung angeordnete Zahnprothese relativ zu dem Klemmelement um die Rotationsachse rotiert werden kann. Somit kann ein Zugang zu der Zahnprothese von allen Seiten zu Bearbeitungs- und/oder Prüfzwecken sichergestellt werden. Die Rotationsfähigkeit kann beispielsweise durch Verwendung eines Halteelements in Form einer elastisch gelagerten Schraube oder unter Verwendung eines Drehlagers implementiert werden. Ein entsprechendes Drehlager kann beispielsweise zusätzlich zu einem Halteelement oder selbst als Halteelement verwendet werden.

Beispielsweise umfasst das Klemmelement ein erstes Kontaktelement, welches dazu konfiguriert ist, in eine erste Vertiefung in der zweiten Seite der ersten Stützvorrichtung eingebracht zu werden.

Dies könnte beispielsweise den Vorteil haben, dass die erste Vertiefung Bewegungen des Kontaktelements begrenzen könnte, insbesondere in einer Erstreckungsebene der ersten Stützvorrichtung bzw. einer Ebene senkrecht zu einer Richtung, in welcher das erste Kontaktelement in die erste Vertiefung eingebracht wird. Mithin könnte ein Verschieben des Klemmelements relativ zu der ersten Stützvorrichtung verhindert werden. Beispielsweise könnte der Druck von dem Klemmelement über das erste Kontaktelement auf die erste Stützvorrichtung aufgebracht werden. Dabei könnte das erste Kontaktelement durch den Druck in der ersten Vertiefung gehalten werden, wodurch ein Lösen des ersten Kontaktelements aus der ersten Verbindung verhindert werden könnte. Dies könnte ferner den Vorteil haben, dass für ein Einbringen des Kontaktelements in eine Vertiefung kein über das Niveau eines Rands der Vertiefung hinausgehendes Aufdehnen der Klemmvorrichtung notwendig ist.

Beispielsweise umfasst das Klemmelement ein zweites Kontaktelement, welches dazu konfiguriert ist, in eine zweite Vertiefung in der zweiten Seite der Okklusionsvorrichtung eingebracht zu werden.

Dies könnte beispielsweise den Vorteil haben, dass die zweite Vertiefung Bewegungen des Kontaktelements begrenzen könnte, insbesondere in einer Erstreckungsebene der zweiten Okklusionsvorrichtung bzw. einer Ebene senkrecht zu einer Richtung, in welcher das zweite Kontaktelement in die zweite Vertiefung eingebracht wird. Mithin könnte ein Verschieben des Klemmelements relativ zu der zweiten Okklusionsvorrichtung verhindert werden. Beispielsweise könnte der Druck von dem Klemmelement über das zweite Kontaktelement auf die zweite Okklusionsvorrichtung aufgebracht werden. Dabei könnte das zweite Kontaktelement durch den Druck in der zweiten Vertiefung gehalten werden, wodurch ein Lösen des zweiten Kontaktelements aus der zweiten Verbindung verhindert werden könnte. Dies könnte ferner den Vorteil haben, dass für ein Einbringen des Kontaktelements in eine Vertiefung kein über das Niveau eines Rands der Vertiefung hinausgehendes Aufdehnen der Klemmvorrichtung notwendig ist.

Beispielsweise umfasst das Klemmelement ein erstes abgerundetes, etwa ein halbkugelförmiges oder ein kugelförmiges, Kontaktelement, welches dazu konfiguriert ist, in eine erste abgerundete, etwa eine halbkugelförmige, Vertiefung in der zweiten Seite der ersten Stützvorrichtung in Kontakt eingebracht zu werden. Beispielsweise umfasst das Klemmelement ein zweites abgerundetes, etwa ein halbkugelförmiges oder ein kugelförmiges, Kontaktelement, welches dazu konfiguriert ist, in eine erste abgerundete, etwa eine halbkugelförmige, Vertiefung in der zweiten Seite der Okklusionsvorrichtung eingebracht zu werden.

Eine Verwendung eines halbkugelförmigen oder kugelförmigen Kontaktelements bzw. eines Kugeladapters kann den Vorteil haben, dass eine einfach herstellbare und lösbare Verbindung zwischen dem Klemmelement und der Okklusionsvorrichtung und/oder Stützvorrichtung bereitgestellt werden kann. Beispielsweise ermöglicht diese eine Rotation der mit dem halbkugelförmigen oder kugelförmigen Kontaktelement in Kontakt befindlichen Stützvorrichtung und/oder Okklusionsvorrichtung um eine Rotationsachse. Dabei ermöglicht das kugelförmige Kontaktelement beispielsweise ein positionsgerechtes Druckverhalten bei einem Schwenken bzw. Drehen des Klemmelements.

Beispielsweise ist die Vertiefung in der zweiten Seite der ersten Stützvorrichtung als Aufnahme für das ersten kugelförmige Kontaktelement des Klemmelements konfiguriert. Beispielsweise ist die Vertiefung in der zweiten Seite der Okklusionsvorrichtung als Aufnahme für das zweite kugelförmige Kontaktelement des Klemmelements konfiguriert.

Beispielsweise weist die Okklusionsvorrichtung eine Mehrzahl von Durchgangsöffnung auf, welche einen Zugang zu ein oder mehreren Aufnahmen in der ersten Gingiva zur Aufnahme der ersten Zähne ermöglicht. Dies könnte den Vorteil haben, dass ein Zugang zu den in der Aufnahme angeordneten Zähnen ermöglicht werden kann. Beispielsweise wird ein Zugang zu der Innenseite der Zähne, etwa lingual oder platinal, ermöglicht. Über diesen Zugang kann beispielsweise überflüssiges Klebemittel, welches aus einer Ausnahme der Gingiva für die Zähne gedrückt wird, vor einem Aushärten entfernt werden. Ferner können die entsprechenden Zahninnenseiten, falls notwendig, bearbeitet werden.

Beispielsweise weisen die ein oder mehreren an der ersten Stützvorrichtung angeordneten ersten Stützelemente jeweils eine Stützfläche auf, welche dazu konfiguriert ist, jeweils mit einer Kontaktfläche einer der ersten Gingiva gegenüberliegenden Unterseite des ersten Prothesenkörpers in Kontakt zu treten und deren Form ein Negativ der Form der jeweiligen Kontaktfläche darstellt. Beispielsweise stellen die Formen der Stützflächen jeweils einen Abdruck der Form der Kontaktfläche dar, mit welcher sie in Kontakt treten sollen. Dies könnte den Vorteil haben, dass die Stützflächen als Abdrücke der jeweiligen Kontaktflächen eine passgenaue Verbindung mit der entsprechenden Kontaktfläche ermöglichen können. Die von der künstlichen Gingiva abgewandte Unterseite des Prothesenkörpers mit ist beispielsweise an die Oberfläche der natürlichen Gingiva eines Patienten angepasst, auf welcher sie positioniert werden soll. Die Unterseite des Prothesenkörpers weist beispielsweise eine unregelmäßige Geometrie auf, sodass die Stützfläche nur zu der zugehörigen Kontaktfläche passt und mithin eine relative Ausrichtung zwischen Stützelement und Gingiva der Zahnprothese vorgegeben sein kann. Beispielsweise entspricht die Unterseite des Prothesenkörpers einem Abdruck der natürlichen Gingiva des Patienten, deren Oberflächengeometrie unter Verwendung eines Scan-Verfahrens erfasst wird. Das Scan-Ergebnis wird zur Konfiguration der Unterseite des Prothesenkörpers verwendet. Ebenso kann das Scan-Ergebnis zur Konfiguration der Stützfläche verwendet werden. Beispielsweise stimmt die Geometrie der Stützfläche mit der eingescannten Geometrie der natürlichen Gingiva des Patienten überein.

Beispielsweise sind an der ersten Stützvorrichtung drei oder mehr der ersten Stützelemente in Form länglich gestreckte Stützelemente angeordnet und für eine Drei- oder Mehrpunktabstützung der ersten Gingiva konfiguriert. Dies könnte den Vorteil haben, dass mit einer Punktabstützung eine Fläche mit beliebiger Geometrie, auch mit einer komplexen Geometrie, effektiv abgestützt werden kann. Für eine stabile Abstützung einer Fläche mit einer beliebigen Geometrie sind mindesten drei nicht auf einer gemeinsamen geraden Linie angeordnete Punkte notwendig. Beispielsweise sind an der ersten Stützvorrichtung drei erste Stützelemente angeordnet, welche eine Dreipunktabstützung der ersten Gingiva bereitstellen. Eine solche Dreipunktabstützung kann aufgrund der minimalen Anzahl an Stützpunkten effizient implementiert bzw. an die geometrischen Gegebenheiten der zu stützenden Gingiva angepasst werden. Werden mehr als drei Stützpunkte verwendet ist das System überbestimmt. Dennoch kann dadurch gegebenenfalls die Stabilität der Stützung weiter erhöht werden, da sie über mehr Stützelemente verteilt ist.

Beispielsweise sind die ersten Stützelemente jeweils stiftförmig ausgestaltet. Beispielsweise verjüngen sich die ersten Stützelemente jeweils zu einer Spitze hin, welche dazu konfiguriert ist, mit der Unterseite des ersten Prothesenkörpers in Kontakt zu treten. Beispielsweise ist die Spitze abgeflacht oder abgerundet. Beispielsweise sind die sich verjüngenden ersten Stützelemente jeweils kegelförmig oder kegelstumpfförmig ausgestaltet. Beispielsweise sind die sich verjüngenden ersten Stützelemente jeweils gummiert oder rutschfest ausgestaltet, etwa beschichtet. Beispielsweise wird ein Satz von ersten Stützelementen mit unterschiedlichen Längen und/oder Formen zur Auswahl bereitgestellt, welche unterschiedlich miteinander kombinierbar sind. Aus diesem Satz von ersten Stützelemente können für eine individuelle Zahnprothese passende, beispielsweise identische und/oder unterschiedliche, Stützelemente ausgesucht und an der Stützvorrichtung angeordnet werden, um eine optimale Abstützung zu ermöglichen. Beispielsweise stellt die Stützvorrichtung eine Mehrzahl von vorgegebenen Befestigungspositionen für die Stützelemente bereit, aus welcher für die ausgesuchten Stützelemente passende Befestigungspositionen ausgewählt erden können. Beispielsweise kann die Auswahl der Befestigungsformen in Abhängigkeit von den ausgesuchten Stützelementen und/oder von der Form der individuellen Zahnprothese erfolgen.

Beispielsweise bestehen die ersten Stützelemente aus einem elastisch verformbaren Material. Dies könnte den Vorteil haben, dass die Stützelemente nicht an die abzustützende Gingiva angepasst werden müssen, um eine stabile Abstützung bereitzustellen. So müssen beispielsweise weder die Längen, die Form, insbesondere Oberflächenform oder Position der Stützelemente angepasst werden. Vielmehr passt sich das elastische Material und damit das jeweilige Stützelement selbst an die geometrischen Gegebenheiten des abzustützenden Prothesenkörpers an. Beispielsweise sind die ersten Stützelemente nicht zerstörungsfrei lösbar mit der Stützvorrichtung verbunden. Beispielsweise sind die ersten Stützelemente an festen Positionen auf der ersten Seite der ersten Stützvorrichtung angeordnet. Passen sich die Stützelemente selbst an, müssen diese weder zerstörungsfrei lösbar ausgestaltet werden, noch muss deren Position angepasst werden. Mithin können die Stützvorrichtung und die Stützelemente beispielsweise einfacher ausgestaltete und mithin leichter herzustellen sowie zu handhaben sein. Beispielsweise handelt es sich bei der Stützvorrichtung um eine generische Stützvorrichtung, welche zum stützen unterschiedlicher Zahnprothesen, insbesondere ohne individuelle Anpassungen der Stützvorrichtung an die entsprechenden Zahnprothesen, geeignet ist. Beispielsweise sind Stützvorrichtung und Stützelemente einstückig ausgestaltet.

Beispielsweise tritt eine Teilmenge der ersten Stützelemente im Zuge des Stützens mit der Unterseite des Prothesenkörpers in Kontakt, während ein oder mehrere der ersten Stützelemente nicht mit der Unterseite des Prothesenkörpers in Kontakt treten. Beispielsweise ist es prothesenabhängig, wie viele und welche der ersten Stützelemente im Zuge des Stützens mit der Unterseite des Prothesenkörpers in Kontakt treten. Beispielsweise sind die ersten Stützelemente auf der ersten Seite der ersten Stützvorrichtung so verteilt angeordnet, dass prothesenunabhängig mindestens drei, vier, fünf, sechs, sieben, acht, neun, zehn oder mehr der Stützelemente im Zuge des Stützens mit der Unterseite des Prothesenkörpers in Kontakt treten.

Beispielsweise bestehen die ersten Stützelemente aus einem steifen Material, welches nicht elastisch verformbar ist bzw. dessen elastische Verformbarkeit vernachlässigbar ist. Dies könnte den Vorteil haben, dass selbst mit wenigen Stützelementen, wie etwa ein oder zwei Stützelementen mit ausgedehnten Stützflächen oder drei Stützelementen zur Dreipunktabstützung, eine stabile Abstützung für eine Gingiva einer Zahnprothese bereitgestellt werden kann.

Beispielsweise treten alle ersten Stützelemente im Zuge des Stützens mit der Unterseite des ersten Prothesenkörpers in Kontakt. Beispielsweise sind die ersten Stützelemente nicht zerstörungsfrei lösbar mit der Stützvorrichtung verbunden. Beispielsweise sind die Stützelemente auf die zu stützende Zahnprothese individuell abgestimmt, etwa hinsichtlich Länge, Form und/der Position der Stützelemente.

Beispielsweise sind ein oder mehrere der ersten Stützelemente jeweils zerstörungsfrei lösbar mit der ersten Stützvorrichtung verbunden. Beispielsweise sind die Positionen der ersten Stützelemente zerstörungsfrei änderbar. Die erste Stützvorrichtung ist dazu konfiguriert, für jedes der entsprechenden, d.h. zerstörungsfrei lösbar verbundenen, ersten Stützelemente beispielsweise jeweils eine Mehrzahl von Positionen vorzugeben, an welchen das entsprechende Stützelement mit der ersten Stützvorrichtung verbindbar ist. Dies könnte den Vorteil haben, dass die Positionen der Stützelemente individuell an die abzustützende Gingiva angepasst werden können. Ferner können die Stützelemente je nach Geometrie der zu stützenden Prothesenkörpers ausgetauscht und somit individuell an die entsprechende Geometrie angepasst werden. Beispielsweise können Stützelemente gegen Stützelemente mit anderer Länge ausgetaucht werden, etwa gegen kürzere oder längere Stützelemente.

Beispielsweise werden die vorgegebenen Positionen zum Anordnen der ersten Stützelemente von Gewindebohrungen in der ersten Stützvorrichtung definiert, in welche die ersten Stützelemente mit einem Schraubgewinde hineingeschraubt werden können Beispielsweise sind die Längen der ersten Stützelemente einstellbar, beispielsweise mittels eines Schraubgewindes.

Beispielsweise handelt es sich bei der ersten Zahnprothese um eine Teilprothese oder eine Totalprothese.

Die Einklebehilfsvorrichtung umfasst beispielsweise vier Komponenten. Eine erste Komponente, z.B. eine Okklusionsvorrichtung, umfasst auf einer ersten Seite ein oder mehrere erste Abdrücke von Zähnen bzw. Zahnimpressionen und auf einer der ersten Seite abgewandten zweiten Seite ein oder mehrere zweite Abdrücke von Zähnen bzw. Zahnimpressionen. Eine zweite Komponente, z.B. eine erste Stützvorrichtung, umfasst ein oder mehrere erste Stützelemente. Eine dritte Komponente, z.B. eine zweite Stützvorrichtung, umfasst ein oder mehrere zweite Stützelemente. Eine vierte Komponente, z.B. ein Klemmelement, ist dazu konfiguriert Druck beispielsweise auf die zweite und dritte Komponente aufzubringen. Die erste Komponente ist beispielsweise dazu konfiguriert zwischen der zweiten und dritten Komponente angeordnet zu werden, sodass von der vierten Komponente beispielsweise über die dritte Komponente auch Druck auf die erste Komponente aufgebracht werden kann. Beispielsweise sind die vier Komponenten so anordbar bzw. so angeordnet, dass der von dem Klemmelement auf die beiden Stützvorrichtung aufgebrachte Druck von zwei Seiten auf die Okklusionsvorrichtung bzw. auf die beiden voneinander abgewandten Gruppen von Zahnabdrücken der Okklusionsvorrichtung gerichtet ist. Beispielsweise sind die beiden Stützvorrichtung und die Okklusionsvorrichtung so anordbar bzw. so angeordnet, dass die beiden voneinander abgewandten Gruppen von Zahnimpressionen der Okklusionsvorrichtung während des Aufbringens des Drucks jeweils den Stützelementen einer der Stützvorrichtung zugewandt sind. Das Klemmelement ist beispielsweise dazu konfiguriert mit den beiden Stützvorrichtung zum Aufbringen des Drucks in Kontakt zu treten, entweder direkt oder indirekt über Zwischenkomponenten. Beispielsweise ist das Klemmelement zerstörungsfrei lösbar oder nicht zerstörungsfrei lösbar mit den beiden Stützvorrichtung verbunden. Beispielsweise ist das Klemmelement einstückig mit den beiden Stützvorrichtung ausgestaltet.

Beispielsweise ist die Einklebehilfsvorrichtung ferner für ein Anordnen, Ausrichten und Fixieren einer Mehrzahl zweiter künstlicher Zähne zum Einkleben in einer zweiten künstlichen Gingiva einer zweiten Zahnprothese konfiguriert. Die erste Zahnprothese ist für einen ersten Kiefer und die zweite Zahnprothese für einen zweiten Kiefer vorgesehen. Bei dem zweiten Kiefer handelt es sich um einen Gegenkiefer zu dem ersten Kiefer. Die Einklebehilfsvorrichtung umfasst eine zweite Stützvorrichtung zum Stützen eines die zweite Gingiva umfassenden zweiten Prothesenkörpers der ersten Zahnprothese mit ein oder mehreren zweiten Stützelementen, welche an einer ersten Seite der zweiten Stützvorrichtung angeordnet sind. Die Okklusionsvorrichtung umfasst auf einer der ersten Seite abgewandten zweiten Seite zweite Abdrücke von Zahnkronenoberseiten der zweiten Zähne gemäß der vordefinierten Okklusion, in welchen die Zahnkronen der zweiten Zähne zum Anordnen und Ausrichten positionierbar sind. Das Klemmelement ist dazu konfiguriert, Druck auf die zweite Seite der Okklusionsvorrichtung über eine der ersten Seite abgewandte zweite Seite der zweiten Stützvorrichtung aufzubringen. Der aufgebrachte Druck dient ferner zum Fixieren der mittels der Okklusionsvorrichtung angeordneten und ausgerichteten zweiten Zähne in der zweiten Gingiva des mittels der zweiten Stützvorrichtung gestützten zweiten Prothesenkörpers.

Dies könnte den Vorteil haben, dass Zähne in zwei Zahnprothesen, welche für Ober- und Unterkiefer desselben Patienten vorgesehen sind, simultan zum Einkleben angeordnet, ausgerichtet und fixiert werden können. In diesem Fall ist die Okklusionsvorrichtung beispielsweise zwischen den beiden Zahnprothesen bzw. zwischen den Zähnen der beiden Zahnprothesen positioniert und stellt auf gegenüberliegenden Seiten jeweils Abdrücke zum Anordnen und Ausrichten der Zähne bereit. Die Zähne sind beispielsweise jeweils in Aufnahmen in den Oberseiten der Gingivae, beispielsweise zusammen mit einem Klebemittel angeordnet. Außen, d.h. an den Unterseiten, werden die Prothesenkörper mit den Gingivae jeweils von einer Stützvorrichtung mit Stützelementen abgestützt. Die außen angeordneten Stützelemente werden von dem Klemmelement jeweils mit einem auf die Zahnprothesen zu gerichteten Druck beaufschlagt.

Beispielsweise kann die zweite Stützvorrichtung analog zu jedem der zuvor beschriebenen Beispiele der ersten Stützvorrichtung konfiguriert sein.

Beispielsweise ist das Klemmelement dazu konfiguriert, zum Aufbringen des Drucks in Kontakt, etwa einen direkten Kontakt, mit den zweiten Seiten der beiden Stützvorrichtungen zu treten.

Beispielsweise umfasst das Klemmelement einen oder mehrere elastische Bögen, welche sich beispielsweise von der ersten Stützvorrichtung zu der zweiten Stützvorrichtung erstrecken und eine Federkonstante aufweisen, welche dazu konfiguriert ist, mittels Federkraft einen Druck auf die beiden Stützvorrichtungen aufzubringen, aus welchem der vordefinierter Druck auf das erste Stützelement und die Okklusionsvorrichtung sowie auf die zweite Stützvorrichtung und die Okklusionsvorrichtung resultiert. Bei der Federkonstante handelt es sich beispielsweise um die Kombination, etwa eine Summe, der Federkonstanten der einzelnen Bögen.

Beispielsweise ist das Klemmelement zusammen mit der ersten Stützvorrichtung und/oder der zweiten Stützvorrichtung einstückig ausgestaltet. Dies könnte den Vorteil haben, dass die Kombination aus Klemmelement sowie erster und/oder zweiter Stützvorrichtung einfach herzustellen ist. Beispielsweise kann eine solche Kombination mittels eines 3D-Druckers gedruckt werden oder mittels eines spananhebenden Verfahrens, wie etwa Fräsens, hergestellt werden. Beispielsweise ist das Klemmelement als ein oder mehrere sich von der ersten und/oder zweiten Stützvorrichtung aus erstreckende elastische Bögen ausgestaltet. Beispielsweise verbindet das Klemmelement erste und zweite Stützvorrichtung.

Beispielsweise ist das Klemmelement an der zweiten Seite der ersten Stützvorrichtung und/oder an der zweiten Seite der zweiten Stützvorrichtung unter Verwendung eines Halteelements zerstörungsfrei befestigt.

Dies könnte den Vorteil haben, dass das Klemmelement an der ersten und/oder zweiten Stützvorrichtung befestigt werden kann, bevor die Zähne in den Gingivae angeordnet werden und die entsprechenden Zahnprothesen mit der Okklusionsvorrichtung zwischen den Stützvorrichtungen angeordnet werden. Durch das Halteelement kann ein versehentliches Lösen der Befestigung im Zuge des Einbringers der Zahnprothesen verhindert werden. Dies kann von Vorteil sein, wenn das Klemmelement zu Einbringen mit nur zwei Händen aufgebogen werden soll. Mit einer Hand können die Zahnprothesen mit Okklusionsvorrichtung sowie erster und/oder zweiter Stützvorrichtung gehalten werden, während mit der anderen Hand das Klemmelement aufgebogen wird, welches an der ersten und/oder zweiten Stützvorrichtung befestigt ist.

Beispielsweise handelt es sich bei dem Halteelement um eine Schraube. Beispielsweise handelt es sich bei dem Halteelement um ein Element einer bekannten, vorzugsweise zerstörungsfrei lösbaren Verbindungform, wie etwa einer Steckverbindung, Klemmverbindung, Rastverbindung, oder eines Bajonettverschlusses etc. Beispielsweise ist das Halteelement im Zentrum der ersten und/oder zweiten Stützvorrichtung angeordnet. Beispielsweise ist das Halteelement über ein elastisches Element gelagert, etwa einen Gummipuffer oder ein Federelement, durch welches sich das Halteelement, etwa in Form einer Schraube, hindurch erstreckt. Die elastische Lagerung ermöglicht beispielsweise einen Ausgleich bei Verwendung von Stützelementen unterschiedlicher Längen oder unterschiedlicher Abmessungen der Zahnprothesen, etwa unterschiedlicher Kieferkammverhältnisse des Prothesenkörpers bzw. der künstlichen Gingivae.

Beispielsweise ist das Halteelement dazu konfiguriert, eine eindimensionale elastische laterale Verschiebung der zweiten Stützvorrichtung relativ zu dem Halteelement zu ermöglichen. Beispielsweise erfolgt die eindimensionale elastische laterale Verschiebung entlang einer Verschiebungsachse, welche senkrecht auf einer Erstreckungsebene der zweiten Stützvorrichtung steht.

Beispielsweise ist das Halteelement dazu konfiguriert, eine Rotation der von dem Halteelement gehaltenen zweiten Stützvorrichtung um eine Rotationsachse zu ermöglichen, welche senkrecht auf einer Erstreckungsebene der zweiten Stützvorrichtung steht. Dies könnte den Vorteil haben, dass eine zwischen den Stützvorrichtungen angeordnete Zahnprothese relativ zu dem Klemmelement um die Rotationsachse rotiert werden kann. Somit kann ein Zugang zu den Zahnprothesen von allen Seiten zu Bearbeitungs- und/oder Prüfzwecken sichergestellt werden. Die Rotationsfähigkeit kann beispielsweise durch Verwendung eines Halteelements in Form einer elastisch gelagerten Schraube oder unter Verwendung eines Drehlagers implementiert werden. Ein entsprechendes Drehlager kann beispielsweise zusätzlich zu einem Halteelement oder selbst als Halteelement verwendet werden.

Beispielsweise umfasst das Klemmelement ein erstes kugelförmiges Kontaktelement, welches dazu konfiguriert ist, mit einer halbkugelförmigen Vertiefung in der zweiten Seite der ersten Stützvorrichtung in Kontakt zu treten, und/oder ein zweites kugelförmiges Kontaktelement umfasst, welches dazu konfiguriert ist, mit einer halbkugelförmigen Vertiefung in der zweiten Seite der zweiten Stützvorrichtung in Kontakt zu treten.

Eine Verwendung eines kugelförmiges Kontaktelements bzw. eines Kugeladapters kann den Vorteil haben, dass eine einfach herstellbare und lösbare Verbindung zwischen dem Klemmelement der ersten und/oder zweiten Stützvorrichtung bereitgestellt wird. Beispielsweise ermöglicht diese eine Rotation der mit dem kugelförmigen Kontaktelement in Kontakt befindlichen ersten und/oder zweiten Stützvorrichtung um eine Rotationsachse. Dabei ermöglicht das kugelförmige Kontaktelement beispielsweise ein positionsgerechtes Druckverhalten bei einem Schwenken bzw. Drehen des Klemmelements.

Beispielsweise ist die Vertiefung in der zweiten Seite der zweiten Stützvorrichtung als Aufnahme für das zweite kugelförmige Kontaktelement des Klemmelements konfiguriert.

Beispielsweise handelt es sich bei der zweiten Zahnprothese um eine Teilprothese oder eine Totalprothese.

Beispielsweise ist die Okklusionsvorrichtung als Doppelelement, etwa Doppelplatte, mit zwei parallel zueinander angeordneten Okklusionselemente, etwa Plattenelementen, konfiguriert. Bei der ersten Seite der Okklusionsvorrichtung handelt es sich um eine dem zweiten Okklusionselement abgewandte Seite des ersten Okklusionselements. Bei der zweiten Seite der Okklusionsvorrichtung handelt es sich um eine dem ersten Okklusionselement abgewandte Seite des zweiten Okklusionselements. Die beiden Okklusionselemente sind durch Abstandselemente voneinander beabstandet und weisen jeweils eine Mehrzahl von Durchgangsöffnung auf, welche einen Zugang zu ein oder mehreren Aufnahmen in der ersten Gingiva zur Aufnahme der ersten Zähne und zu ein oder mehreren Aufnahmen in der zweiten Gingiva zur Aufnahme der zweiten Zähne ermöglichen.

Dies könnte den Vorteil haben, dass ein Zugang zu den in den Aufnahmen angeordneten Zähnen ermöglicht werden kann. Beispielsweise wird ein Zugang zu der Innenseite der Zähne, etwa lingual oder platinal, beider Zahnprothesen ermöglicht. Über diesen Zugang kann beispielsweise überflüssiges Klebemittel, welches aus einer Ausnahme der Gingivae für die Zähne gedrückt wird, vor einem Aushärten entfernt werden. Ferner können die entsprechenden Zahninnenseiten, falls notwendig, bearbeitet werden.

Beispielsweise sind die Abstandselemente säulenförmig ausgestaltet und erstrecken sich zwischen den einander zugewandten Seiten der beiden Plattenelemente. Beispielsweise sind die Abstandselemente entlang des Umfangs der Plattenelemente angeordnet. Beispielsweise sind ein oder mehrere Abstandselemente im Zentrum der Platenelemente angeordnet. Beispielsweise sind Abstandelemente ausgehend vom Zentrum der Plattenelemente jeweils auf radialen Linien bis zu einem Rand der Plattenelemente angeordnet. Dies könnte den Vorteil haben, dass der Abstand zwischen den Platenelementen effektiv stabilisiert werden kann und zugleich ein Zugang zwischen den Abstandselementen zu den Durchgangsöffnungen in den Plattenelementen und damit zu den in den Zahnprothesen angeordneten Zähnen bereitgestellt werden kann.

Beispielsweise sind die Okklusionsvorrichtung, die erste Stützvorrichtung, die zweite Stützvorrichtung und/oder das Klemmelement jeweils mit einem 3D-Drucker gedruckt. Beispielsweise sind die Okklusionsvorrichtung, die erste Stützvorrichtung, die zweite Stützvorrichtung und/oder das Klemmelement jeweils teilweise und/oder vollständig mit einem 3D-Drucker gedruckt.

Beispielsweise sind die Okklusionsvorrichtung, die erste Stützvorrichtung, die zweite Stützvorrichtung und/oder das Klemmelement jeweils teilweise und/oder vollständig mittels eines spanabhebenden Verfahrens hergestellt.

Beispielsweise wird ein System bereitgestellt, welches eine Einklebehilfsvorrichtung nach einem der zuvor beschriebenen Beispiele der Einklebehilfsvorrichtung und eine erste Zahnprothese mit einer Mehrzahl erster künstlicher Zähne zum Einkleben in eine erste künstliche Gingiva eines ersten Prothesenkörpers der ersten Zahnprothese umfasst.

Beispielsweise sind die ersten Zähne, der erste Prothesenkörper und/oder die erste Gingiva jeweils mit einem 3D-Drucker gedruckt. Beispielsweise sind die ersten Zähne, der erste Prothesenkörper und/oder die erste Gingiva jeweils mittels eines spanabhebenden Verfahrens hergestellt.

Beispielsweise umfasst das System ferner eine zweite Zahnprothese mit einer Mehrzahl zweiter künstlicher Zähne zum Einkleben in eine zweite künstliche Gingiva eines zweiten Prothesenkörpers der zweiten Zahnprothese.

Beispielsweise sind die zweiten Zähne, der zweite Prothesenkörper und/oder die zweite Gingiva jeweils mit einem 3D-Drucker gedruckt. Beispielsweise sind die zweiten Zähne, der zweite Prothesenkörper und/oder die zweite Gingiva jeweils mittels eines spanabhebenden Verfahrens hergestellt

Beispielsweise wird ein Verfahren zum Herstellen einer Okklusionsvorrichtung für eine Einklebehilfsvorrichtung unter Verwendung eines Computersystems bereitgestellt.

Das Verfahren umfasst beispielsweise:
- Bereitstellen eines dreidimensionalen Computermodells eines Zahnmusters,
- Bereitstellen eines generischen dreidimensionalen Computermodells einer Okklusionsvorrichtung,
- Erzeugen von Zahnabrücken in dem dreidimensionalen Computermodell der Okklusionsvorrichtung unter Verwendung des Computermodells des Zahnmusters,
- Herstellen der Okklusionsvorrichtung unter Verwendung des dreidimensionalen Computermodells der Okklusionsvorrichtung mit den Zahnabdrücken.

Das Verfahren umfasst beispielsweise:
- Bereitstellen eines dreidimensionalen Computermodells einer ersten herzustellenden Zahnprothese, wobei die erste Zahnprothese eine Mehrzahl von ersten künstlichen Zähnen mit einer vordefinierten Okklusion umfasst, welche in einer ersten künstliche Gingiva eines ersten Prothesenkörpers angeordnet sind,
- Bereitstellen eines generischen dreidimensionalen Computermodells einer Okklusionsvorrichtung,
- Erzeugen erster Abdrücke von Zahnkronenoberseiten der ersten Zähne in einer ersten Seite des dreidimensionalen Computermodells der Okklusionsvorrichtung, in welchen die Zahnkronen der ersten Zähne zum Anordnen und Ausrichten positionierbar sind,
- Herstellen der Okklusionsvorrichtung unter Verwendung des dreidimensionalen Computermodells der Okklusionsvorrichtung mit den ersten Abdrücken der Zahnkronenoberseiten der ersten Zähne.

Dies könnte den Vorteil haben, dass die herzustellende Zahnprothese unter Verwendung eines Computers geplant werden kann und das resultierende Computermodell zum Erzeugen eines Modells der Abdrücke der Zahnkronenoberseiten der Zähne, d.h. der Okklusalflächen der Zähne, in der Okklusionsvorrichtung verwendet werden können. Somit kann ein passgenauer Sitz der Zähne in den Abdrücken mit den Okklusalflächen sichergestellt werden, welcher nicht nur ein präzises Anordnen und Ausrichten der Zähne in der Okklusionsvorrichtung ermöglicht, sondern zusätzlich einen ausreichenden Halt für die Zähne an der Okklusionsvorrichtung bereitstellt. Durch ein solchen Halt kann die Gefahr eines ungewollten Verschiebens der Zähne im Zuge eines Einbringens in Aufnahmen der künstlichen Gingiva bzw. des Prothesenkörpers oder eines Anordnens des Klemmelements zum Aufbringen von Druck vermieden werden. Die Okklusionsvorrichtung kann beispielsweise mittels 3D-Druckers gedruckt oder mittels eines spanabhebenden Verfahrens hergestellt werden. Hierzu kann das unter Verwendung des Computersystems erstellte und/oder bearbeitete Computermodell, etwa als CAD-Datei, an eine CAM-Vorrichtung, wie etwa einen 3D-Drucker oder eine Fräsvorrichtung, gesendet werden, welche die Okklusionsvorrichtung gemäß den Modellvorgaben automatisch herstellt.

Beispielsweise werden die ersten Abdrücke in dem dreidimensionalen Computermodells der Okklusionsvorrichtung durch Abziehen der Zahnkronenoberseiten der ersten Zähne von dem dreidimensionalen Computermodells der Okklusionsvorrichtung erzeugt.

Beispielsweise umfasst das Verfahren:
- Bereitstellen eines generischen dreidimensionalen Computermodells einer ersten Stützvorrichtung zum Stützen eines die erste Gingiva umfassenden ersten Prothesenkörpers der ersten Zahnprothese mit ein oder mehreren ersten Stützelementen, welche an einer ersten Seite der ersten Stützvorrichtung angeordnet sind, wobei die ein oder mehreren an der ersten Stützvorrichtung angeordneten ersten Stützelemente jeweils eine Stützfläche aufweisen, welche dazu vorgesehen ist jeweils mit einer Kontaktfläche einer der ersten Gingiva gegenüberliegenden Unterseite des ersten Prothesenkörpers in Kontakt zu treten,
- Anpassen von Formen der Stützflächen, sodass die Formen jeweils ein Negativ der Form der jeweiligen Kontaktfläche darstellen,
- Herstellen der ersten Stützvorrichtung unter Verwendung des dreidimensionalen Computermodells der ersten Stützvorrichtung mit angepassten Stützflächen.

Dies könnte den Vorteil haben, dass die herzustellende Zahnprothese unter Verwendung eines Computers geplant und das resultierende Computermodell zum Erzeugen eines Modells des oder der Stützelemente der Stützvorrichtung, insbesondere der Stützflächen, verwendet werden kann. Somit kann ein passgenauer Sitz der Stützelemente bzw. der Stützflächen an der Unterseite des Prothesenkörpers bzw. der Kontaktflächen sichergestellt werden. Für die Konstruktion der Unterseite des Prothesenkörpers, welche der künstlichen Gingiva gegenüberliegt, können beispielsweise Scan-Daten eines Scans der Oberfläche der natürlichen Gingiva des Patienten verwendet werden, für welchen die Zahnprothese herzustellen ist.

Beispielsweise stellt die Unterseite des Prothesenkörpers einen Abdruck, d.h. ein Negativ, der Oberfläche der natürlichen Gingiva des Patienten dar, sodass ein passgenauer Sitz der Zahnprothese auf der natürlichen Gingiva sichergestellt werden kann. Die Form der Oberfläche der natürlichen Gingiva kann dann beispielsweise als Form für die Stützfläche verwendet werden. Alternativ kann die künstliche Gingiva bzw. die der künstlichen Gingiva gegenüberliegende Unterseite des Prothesenkörpers von dem Stützelement abgezogen werden. Die Stützvorrichtung kann beispielsweise mittels 3D-Druckers gedruckt oder mittels eines spanabhebenden Verfahrens hergestellt werden. Hierzu kann das unter Verwendung des Computersystems erstellte und/oder bearbeitete Computermodell, etwa als CAD-Datei, an eine CAM-Vorrichtung, wie etwa einen 3D-Drucker oder eine Fräsvorrichtung, gesendet werden, welche die Stützvorrichtung gemäß den Modellvorgaben automatisch herstellt.

Beispielsweise umfasst das Verfahren:
- Bereitstellen eines dreidimensionalen Computermodells eines generischen Klemmelements, welches dazu konfiguriert ist, Druck auf eine der ersten Seite abgewandte zweite Seite der Okklusionsvorrichtung und auf eine der ersten Seite abgewandte zweite Seite der ersten Stützvorrichtung aufzubringen zum Fixieren der mittels der Okklusionsvorrichtung angeordneten und ausgerichteten ersten Zähne in der ersten Gingiva des mittels der ersten Stützvorrichtung gestützten ersten Prothesenkörpers, wobei das Klemmelement ein oder mehrere elastische Bögen umfasst,
- Bestimmen einer Federkonstante für die ein oder mehreren Bögen, mit welcher der vordefinierte Druck auf die Okklusionsvorrichtung und die erste Stützvorrichtung aufgebracht wird, wenn die erste Zahnprothese zwischen der Okklusionsvorrichtung und der ersten Stützvorrichtung angeordnet ist,
- Anpassen der Materialstärke der ein oder mehreren Bögen des dreidimensionalen Computermodells, sodass die ein oder mehreren Bögen die bestimmte Federkonstante aufweisen,
- Herstellen des Klemmelements unter Verwendung des dreidimensionalen Computermodells der ein oder mehreren Bögen mit der angepassten Materialstärke.

Dies könnte den Vorteil haben, dass ausgehend von einem generischen Modell ein prothesenindividuelles Computermodell eines Klemmelements mit ein oder mehreren angepassten Bögen erzeugt werden. Somit kann sichergestellt werden, dass das Klemmelement dazu geeignet ist einen vordefinierten Druck auf die Zahnprothese aufzubringen. Das Klemmelement kann beispielsweise mittels 3D-Druckers gedruckt oder mittels eines spanabhebenden Verfahrens hergestellt werden. Hierzu kann das unter Verwendung des Computersystems erstellte und/oder bearbeitete Computermodell, etwa als CAD-Datei, an eine CAM-Vorrichtung, wie etwa einen 3D-Drucker oder eine Fräsvorrichtung, gesendet werden, welche das Klemmelement gemäß den Modellvorgaben automatisch herstellt. Die ein oder mehreren elastischen Bögen des generischen Klemmelements erstrecken sich beispielsweise von der ersten Stützvorrichtung zu der Okklusionsvorrichtung. Bei der Federkonstante handelt es sich beispielsweise um die Kombination, etwa eine Summe, der Federkonstanten der einzelnen Bögen.

Beispielsweise werden ferner die ersten Zähne, der erste Prothesenkörper und/oder die erste Gingiva unter Verwendung des dreidimensionalen Computermodells der ersten Zahnprothese hergestellt. Dies könnte den Vorteil haben, dass das Modell der Zahnprothese ferner zum Herstellen der Elemente der Zahnprothese, d.h. der Zähne, des ersten Prothesenkörper und/oder der Gingiva, verwendet werden kann. Die Zähne, der erste Prothesenkörper und/oder die Gingiva können beispielsweise mittels 3D-Druckers gedruckt oder mittels eines spanabhebenden Verfahrens hergestellt werden. Hierzu kann das unter Verwendung des Computersystems erstellte und/oder bearbeitete Computermodell, etwa als CAD-Datei, an eine CAM-Vorrichtung, wie etwa einen 3D-Drucker oder eine Fräsvorrichtung, gesendet werden, welche die Zähne, den ersten Prothesenkörper und/oder die Gingiva gemäß den Modellvorgaben automatisch herstellt.

Beispielsweise umfasst das Verfahren:
- Bereitstellen eines dreidimensionalen Computermodells einer zweiten herzustellenden Zahnprothese, wobei die zweite Zahnprothese eine Mehrzahl von zweiten künstlichen Zähnen mit einer vordefinierten Okklusion umfasst, welche in einer zweiten künstlichen Gingiva eines zweiten Prothesenkörpers angeordnet sind,
- Erzeugen zweiter Abdrücke von Zahnkronenoberseiten der zweiten Zähne in einer der ersten Seite abgewandten zweiten Seite des dreidimensionalen Computermodells der Okklusionsvorrichtung, in welchen die Zahnkronen der zweiten Zähne zum Anordnen und Ausrichten positionierbar sind,
wobei zum Herstellen der Okklusionsvorrichtung das dreidimensionalen Computermodells der Okklusionsvorrichtung mit den ersten und zweiten Abdrücken der Zahnkronenoberseiten der ersten und zweiten Zähne verwendet wird.

Dies könnte den Vorteil haben, dass eine Okklusionsvorrichtung hergestellt werden kann, welche dazu konfiguriert ist, nicht nur den Zähnen für eine Zahnprothese, sondern für zwei Zahnprothesen Halt im Zuge für ein präzises Einkleben zu geben. Dabei ermöglicht die Okklusionsvorrichtung mit den beidseitig angeordneten Abdrücken, ein präzises Anordnen und Ausrichten von Zähnen auf beiden Seiten der zwischen den Zähnen bzw. Zahnprothesen angeordneten Okklusionsvorrichtung. Beispielsweise werden die zweiten Abdrücke in dem dreidimensionalen Computermodells der Okklusionsvorrichtung durch Abziehen der Zahnkronenoberseiten der zweiten Zähne von dem dreidimensionalen Computermodells der Okklusionsvorrichtung erzeugt.

Beispielsweise umfasst das Verfahren:
- Bereitstellen eines generischen dreidimensionalen Computermodells einer zweiten Stützvorrichtung zum Stützen eines die zweite Gingiva umfassenden ersten Prothesenkörpers der ersten Zahnprothese mit ein oder mehreren zweiten Stützelementen, welche an einer ersten Seite der zweiten Stützvorrichtung angeordnet sind, wobei die ein oder mehreren an der zweiten Stützvorrichtung angeordneten zweiten Stützelemente jeweils eine Stützfläche aufweisen, welche dazu vorgesehen ist jeweils mit einer Kontaktfläche einer der zweiten Gingiva gegenüberliegenden Unterseite des zweiten Prothesenkörpers in Kontakt zu treten,
- Anpassen von Formen der Stützflächen, sodass die Formen jeweils ein Negativ der Form der jeweiligen Kontaktfläche darstellen,
- Herstellen der zweiten Stützvorrichtung unter Verwendung des dreidimensionalen Computermodells der zweiten Stützvorrichtung mit angepassten Stützflächen.

Dies könnte den Vorteil haben, dass die herzustellende zweite Zahnprothese unter Verwendung eines Computers geplant und das resultierende Computermodell zum Erzeugen eines Modells des oder der Stützelemente der Stützvorrichtung, insbesondere der Stützflächen, verwendet werden kann. Somit kann ein passgenauer Sitz der Stützelemente bzw. der Stützflächen an der Unterseite des Prothesenkörpers bzw. der Kontaktflächen sichergestellt werden. Für die Konstruktion der Unterseite des Prothesenkörpers können beispielsweise Scan-Daten eines Scans der Oberfläche der natürlichen Gingiva des Patienten verwendet werden, für welchen die zweite Zahnprothese herzustellen ist.

Beispielsweise stellt die Unterseite des Prothesenkörpers einen Abdruck, d.h. ein Negativ, der Oberfläche der natürlichen Gingiva des Patienten dar, sodass ein passgenauer Sitz der zweiten Zahnprothese auf der natürlichen Gingiva sichergestellt werden kann. Die Form der Oberfläche der natürlichen Gingiva kann dann beispielsweise als Form für die Stützfläche verwendet werden. Alternativ kann die künstliche Gingiva bzw. die der künstlichen Gingiva gegenüberliegende Unterseite des Prothesenkörpers von dem Stützelement abgezogen werden. Die Stützvorrichtung kann beispielsweise mittels 3D-Druckers gedruckt oder mittels eines spanabhebenden Verfahrens hergestellt werden. Hierzu kann das unter Verwendung des Computersystems erstellte und/oder bearbeitete Computermodell, etwa als CAD-Datei, an eine CAM-Vorrichtung, wie etwa einen 3D-Drucker oder eine Fräsvorrichtung, gesendet werden, welche die Stützvorrichtung gemäß den Modellvorgaben automatisch herstellt.

Beispielsweise ist das Klemmelement gemäß dem dreidimensionale Computermodell des generischen Klemmelements dazu konfiguriert, Druck auf eine der ersten Seite abgewandte zweite Seite der ersten Stützvorrichtung und auf eine der ersten Seite abgewandte zweite Seite der zweiten Stützvorrichtung aufzubringen zum Fixieren der mittels der Okklusionsvorrichtung angeordneten und ausgerichteten zweiten Zähne in der zweiten Gingiva des mittels der zweiten Stützvorrichtung gestützten zweiten Prothesenkörpers. Die ein oder mehreren elastischen Bögen erstreckt sich beispielsweise von der ersten Stützvorrichtung zu der zweiten Stützvorrichtung. Es wird die Federkonstante der ein oder mehreren Bögen bestimmt, mit welcher der vordefinierte Druck auf die erste und zweite Stützvorrichtung aufgebracht wird, wenn die erste und zweite Zahnprothese zwischen der ersten und zweiten Stützvorrichtung angeordnet sind. Bei der Federkonstante handelt es sich beispielsweise um die Kombination, etwa eine Summe, der Federkonstanten der einzelnen Bögen. Die Materialstärke der ein oder mehreren Bögen des dreidimensionalen Computermodells wird angepasst, sodass die ein oder mehreren Bögen die bestimmte Federkonstante aufweisen. Das Klemmelement wird unter Verwendung des dreidimensionalen Computermodells der ein oder mehreren Bögen mit der angepassten Materialstärke hergestellt.

Dies könnte den Vorteil haben, dass ausgehend von einem generischen Modell ein prothesenindividuelles Computermodell eines Klemmelements mit ein oder mehreren angepassten Bögen erzeugt werden. Somit kann sichergestellt werden, dass das Klemmelement dazu geeignet ist einen vordefinierten Druck auf die beiden Zahnprothesen aufzubringen. Das Klemmelement kann beispielsweise mittels 3D-Druckers gedruckt oder mittels eines spanabhebenden Verfahrens hergestellt werden. Hierzu kann das unter Verwendung des Computersystems erstellte und/oder bearbeitete Computermodell, etwa als CAD-Datei, an eine CAM-Vorrichtung, wie etwa einen 3D-Drucker oder eine Fräsvorrichtung, gesendet werden, welche das Klemmelement gemäß den Modellvorgaben automatisch herstellt.

Beispielsweise werden ferner die zweiten Zähne, der zweite Prothesenkörper und/oder die zweite Gingiva unter Verwendung des dreidimensionalen Computermodells der zweiten Zahnprothese hergestellt. Dies könnte den Vorteil haben, dass Modell der Zahnprothese ferner zum Herstellen der Elemente der Zahnprothese, d.h. der Zähne, des zweiten Prothesenkörper und/oder der Gingiva, verwendet werden kann. Die Zähne, der zweite Prothesenkörper und/oder die Gingiva können beispielsweise mittels 3D-Druckers gedruckt oder mittels eines spanabhebenden Verfahrens hergestellt werden. Hierzu kann das unter Verwendung des Computersystems erstellte und/oder bearbeitete Computermodell, etwa als CAD-Datei, an eine CAM-Vorrichtung, wie etwa einen 3D-Drucker oder eine Fräsvorrichtung, gesendet werden, welche die Zähne, den zweiten Prothesenkörper und/oder die Gingiva gemäß den Modellvorgaben automatisch herstellt.

Beispielsweise wird ein Verfahren zum Verwenden einer Einklebehilfsvorrichtung zum Einkleben einer Mehrzahl erster Zähne in eine erste künstliche Gingiva bereitgestellt. Die Einklebehilfsvorrichtung umfasst eine Okklusionsvorrichtung zum Anordnen und Ausrichten der ersten Zähne relativ zueinander gemäß einer vordefinierten Okklusion, eine erste Stützvorrichtung zum Stützen eines die erste Gingiva umfassenden ersten Prothesenkörpers der ersten Zahnprothese mit ein oder mehreren ersten Stützelementen, welche an einer ersten Seite der ersten Stützvorrichtung angeordnet sind, und ein Klemmelement zum Fixieren der mittels der Okklusionsvorrichtung angeordneten und ausgerichteten ersten Zähne in der ersten Gingiva.

Die Okklusionsvorrichtung umfasst auf einer ersten Seite erste Abdrücke von Zahnkronenoberseiten der ersten Zähne gemäß der vordefinierten Okklusion, in welchen die Zahnkronen der ersten Zähne zum Anordnen und Ausrichten positionierbar sind. Das Klemmelement ist dazu konfiguriert, Druck auf eine der ersten Seite abgewandte zweite Seite der Okklusionsvorrichtung und auf eine der ersten Seite abgewandte zweite Seite der ersten Stützvorrichtung aufzubringen zum Fixieren der mittels der Okklusionsvorrichtung angeordneten und ausgerichteten ersten Zähne in der ersten Gingiva des mittels der ersten Stützvorrichtung gestützten ersten Prothesenkörpers.

Das Verfahren umfasst:
- Anordnen und Ausrichten der ersten Zähne in der Okklusionsvorrichtung, wobei die Zahnkronen der ersten Zähne in den ersten Abdrücken der Okklusionsvorrichtung positioniert werden,
- Einbringen eines Klebemittels in die erste Gingiva,
- Einbringen der ersten Zähne in die erste Gingiva,
- Fixieren der ersten Zähne in der ersten Gingiva, wobei die Unterseite des ersten Prothesenkörpers von dem ersten Stützvorrichtung gestützt und unter Verwendung des Klemmelements Druck auf die zweite Seite der Okklusionsvorrichtung und auf die zweite Seite der ersten Stützvorrichtung aufgebracht wird,
- Aushärten des Klebemittels,
- Entfernen der Einklebehilfsvorrichtung.

Dies könnte den Vorteil haben, dass unter Verwendung der Einklebehilfsvorrichtung sichergestellt werden kann, dass Zähne an präzise definierten Positionen mit präzise definierten Ausrichtungen eingeklebt werden. Dabei werden die Positionen und Ausrichtungen der Zähne, insbesondere auch deren relative Höhen zueinander, durch die Okklusionsvorrichtung vorgegeben. Zudem bietet die Okklusionsvorrichtung den Zähnen einen ausreichenden Halt, sodass ein ungewolltes Verschieben der Zähne im Zuge des Einbringens in die Gingiva vermieden werden kann.

Mit dem Klemmelement können die Zähne während des Aushärtens fixiert werden, sodass Verschiebungen vermieden werden können. Dabei kann das Klemmelement einen vordefinierten Druck aufbringen, welcher ein gleichmäßiges Verteilen des Klebemittels zwischen den Zähnen und der Gingiva sicherstellen kann. Vor dem Aushärten kann der Sitz der Zähne in der Gingiva geprüft werden. Zudem kann beispielsweise Klebemittel, welches im Zuge des Aufbringens des Drucks aus den zwischen räumen zwischen Zähnen und Gingiva gedrückt wurde, vor dem Aushärten entfernt werden. Dies erlaubt es mehr Klebemittel als eigentlich notwendig zwischen Zähne und Gingiva einzubringen. Durch den Druck kann eine gleichmäßige und vollständige Verteilung des Klebemittels sichergestellt werden, ohne dass Hohlräume zwischen Zähnen und Gingiva verbleiben, welche später die Stabilität der Zähne beeinträchtigen könnten. Überzähliges Klebemittel kann leicht entfernt werden.

Beispielsweise ist das Verfahren dazu konfiguriert, jedes der zuvor beschriebenen Beispiele der Einklebehilfsvorrichtung zu verwenden.

Beispielsweise ist die Einklebehilfsvorrichtung ferner für ein Anordnen, Ausrichten und Fixieren einer Mehrzahl zweiter künstlicher Zähne zum Einkleben in einer zweiten künstlichen Gingiva einer zweiten Zahnprothese konfiguriert. Die erste Zahnprothese ist für einen ersten Kiefer und die zweite Zahnprothese für einen zweiten Kiefer vorgesehen. Bei dem zweiten Kiefer handelt es sich um einen Gegenkiefer zu dem ersten Kiefer. Die Einklebehilfsvorrichtung umfasst eine zweite Stützvorrichtung zum Stützen eines die zweite Gingiva umfassenden zweiten Prothesenkörpers der zweiten Zahnprothese mit ein oder mehreren zweiten Stützelementen, welche an einer ersten Seite der zweiten Stützvorrichtung angeordnet sind. Die Okklusionsvorrichtung umfasst auf einer der ersten Seite abgewandten zweiten Seite zweite Abdrücke von Zahnkronenoberseiten der zweiten Zähne gemäß der vordefinierten Okklusion, in welchen die Zahnkronen der zweiten Zähne zum Anordnen und Ausrichten positionierbar sind. Das Klemmelement ist dazu konfiguriert, Druck auf die zweite Seite der Okklusionsvorrichtung über eine der ersten Seite abgewandte zweite Seite der zweiten Stützvorrichtung aufzubringen. Der aufgebrachte Druck dient ferner zum Fixieren der mittels der Okklusionsvorrichtung angeordneten und ausgerichteten zweiten Zähne in der zweiten Gingiva des mittels der zweiten Stützvorrichtung gestützten zweiten Prothesenkörpers.

Das Verfahren umfasst ferner:
- Anordnen und Ausrichten der zweiten Zähne in der Okklusionsvorrichtung, wobei die Zahnkronen der zweiten Zähne in den zweiten Abdrücken der Okklusionsvorrichtung positioniert werden,
- Einbringen eines Klebemittels in die zweite Gingiva,
- Einbringen der zweiten Zähne in die zweite Gingiva,
- Fixieren der zweiten Zähne in der zweiten Gingiva, wobei eine Unterseite eines zweiten Prothesenkörpers von dem zweiten Stützvorrichtung gestützt und unter Verwendung des Klemmelements Druck auf die zweite Seite der zweiten Stützvorrichtung aufgebracht wird, sodass der Druck auf die zweite Seite der Okklusionsvorrichtung über die zweite Stützvorrichtung und die zweite Zahnprothese aufgebracht wird.

Dies könnte den Vorteil haben, dass unter Verwendung der Einklebehilfsvorrichtung für zwei Zahnprothesen zugleich sichergestellt werden kann, dass Zähne an präzise definierten Positionen mit präzise definierten Ausrichtungen eingeklebt werden. Dabei werden die Positionen und Ausrichtungen der Zähne, insbesondere auch deren relative Höhen zueinander, durch die Okklusionsvorrichtung vorgegeben. Zudem bietet die Okklusionsvorrichtung den Zähnen beider Zahnprothesen einen ausreichenden Halt, sodass ein ungewolltes Verschieben der Zähne im Zuge des Einbringens in die Gingiva vermieden werden kann. Mit dem Klemmelement können die Zähne beider Zahnprothesen während des Aushärtens fixiert werden, sodass Verschiebungen vermieden werden können. Dabei kann das Klemmelement einen vordefinierten Druck auf beide Zahnprothesen aufbringen, welcher ein gleichmäßiges Verteilen des Klebemittels zwischen den Zähnen und der Gingiva sicherstellen kann.

Ordinalzahlen wie "erste", "zweite", "dritte" etc. werden hierin in erster Linie zur Unterscheidung unterschiedlicher Elemente mit gleicher Bezeichnung verwendet und legen nicht notwendiger Weise eine Vorrangstellung oder zeitliche Abfolge fest.

Im Weiteren werden Beispiele mit Bezugnahme auf die Zeichnungen näher erläutert. Es zeigen:
- Figur 1: eine exemplarische Einklebehilfsvorrichtung,
- Figuren 2: eine exemplarische Okklusionsvorrichtung,
- Figuren 3: eine exemplarische Okklusionsvorrichtung in Verbindung mit einer exemplarischen Zahnprothese,
- Figuren 4: eine exemplarische Stützvorrichtung mit Stützelementen,
- Figuren 5: eine exemplarische Stützvorrichtung mit Stützelementen,
- Figur 6: ein exemplarisches Klemmelement,
- Figuren 7: eine exemplarische Einklebehilfsvorrichtung in Verbindung mit einer exemplarischen Zahnprothese,
- Figuren 8: eine exemplarische Einklebehilfsvorrichtung in Verbindung mit einer exemplarischen Zahnprothese,
- Figuren 9: exemplarische Elemente einer Einklebehilfsvorrichtung und einer exemplarischen Zahnprothese,
- Figuren 10: eine exemplarische Einklebehilfsvorrichtung in Verbindung mit einer exemplarischen Zahnprothese,
- Figuren 11: exemplarische Einklebehilfsvorrichtungen,
- Figur 12: ein exemplarisches Computersystem zum Erstellen eines Computermodells einer Einklebehilfsvorrichtung,
- Figur 13: ein exemplarisches Herstellungssystem zum Herstellen einer Einklebehilfsvorrichtung,
- Figur 14: ein exemplarisches Herstellungssystem zum Herstellen einer Einklebehilfsvorrichtung,
- Figur 15: ein schematisches Flussdiagramm eines exemplarischen Verfahrens zum Herstellen einer Okklusionsvorrichtung für eine Einklebehilfsvorrichtung,
- Figur 16: ein schematisches Flussdiagramm eines exemplarischen Verfahrens zum Herstellen einer Stützvorrichtung für eine Einklebehilfsvorrichtung,
- Figur 17: ein schematisches Flussdiagramm eines exemplarischen Verfahrens zum Herstellen eines Klemmelements für eine Einklebehilfsvorrichtung, und
- Figur 18: ein schematisches Flussdiagramm eines exemplarischen Verfahrens zum Verwenden einer Einklebehilfsvorrichtung zum Einkleben einer Mehrzahl von Zähnen in eine künstliche Gingiva.

Elemente der nachfolgenden Beispiele, die einander entsprechen, werden mit denselben Bezugszeichen gekennzeichnet.

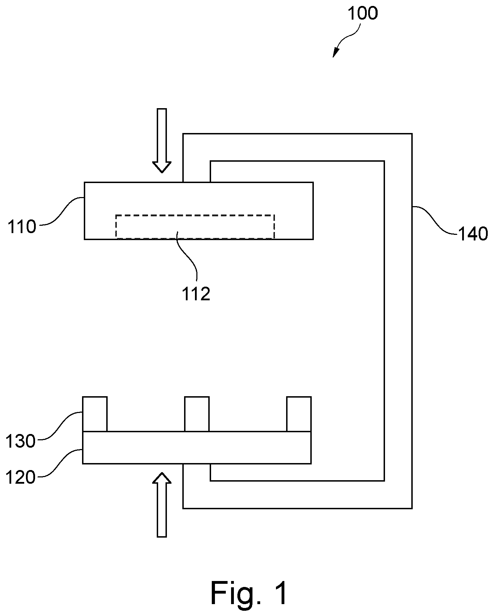

Figur 1 zeigt eine schematische Ansicht einer exemplarischen Einklebehilfsvorrichtung 100. Die Einklebehilfsvorrichtung 100 umfasst beispielsweise zumindest drei Komponenten 110, 120, 140. Eine erste der Komponenten 110, eine Okklusionsvorrichtung, umfasst ein oder mehrere Abdrücke 112 von Zähnen. Eine zweite der Komponenten 120, eine Stützvorrichtung, umfasst ein oder mehrere Stützelemente 130. Eine dritte Komponente 140, eine Klemmelement, ist dazu konfiguriert Druck auf die erste und die zweite Komponente 110, 120 aufzubringen. Beispielsweise sind die drei Komponenten 110, 120, 140 so angeordnet, dass der von dem Klemmelement 140 auf die Stützvorrichtung 120 aufgebrachte Druck, dessen Richtung in Figur 1 durch den unteren Pfeil angezeigt wird, in Richtung auf die Zahnabdrücke 112 der Okklusionsvorrichtung 110 gerichtet ist. Der von dem Klemmelement 140 auf die Okklusionsvorrichtung 110 aufgebrachte Druck, dessen Richtung in Figur 1 durch den oberen Pfeil angezeigt wird, ist beispielsweise in Richtung auf die Stützelemente 130 der Stützvorrichtung 120 gerichtet ist. Beispielsweise sind die Stützvorrichtung 120 und die Okklusionsvorrichtung 110 so angeordnet, dass die Zahnabdrücke 112 der Okklusionsvorrichtung 140 während des Aufbringens des Drucks den Stützelemente 130 der Stützvorrichtung 120 zugewandt sind. Das Klemmelement 140 ist beispielsweise dazu konfiguriert mit der Okklusionsvorrichtung 110 und der Stützvorrichtung 130 zum Aufbringen des Drucks in Kontakt zu treten, entweder direkt oder indirekt über Zwischenkomponenten. Beispielsweise ist das Klemmelement 140 zerstörungsfrei lösbar oder nicht zerstörungsfrei lösbar mit der Okklusionsvorrichtung 110 und/der Stützvorrichtung 120 verbunden. Beispielsweise ist das Klemmelement 140 einstückig mit der Okklusionsvorrichtung 110 und/der Stützvorrichtung 120 ausgestaltet.

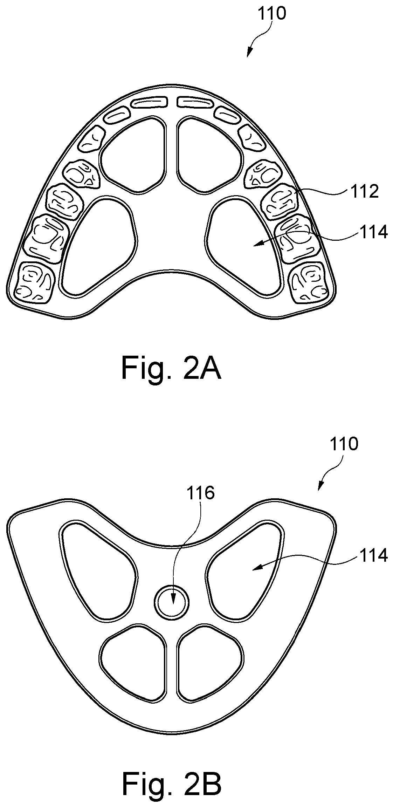

Figuren 2A und 2B zeigen eine exemplarische Okklusionsvorrichtung 110. Die Okklusionsvorrichtung 110 umfasst eine Mehrzahl von Abdrücken 112 von Zahnkronenoberseiten von Zähnen, welche zu einer präzisen Anordnung und Ausrichtung in den Abdrücken 112 positionierbar sind. Ferner können die Abdrücken 112 dazu konfiguriert sein, den Zahnkronen der Zähne, wenn diese in die Abdrücken 112 eingebracht sind, Halt zu bieten. Ferner umfasst die Okklusionsvorrichtung 110 eine Mehrzahl von Durchgangsöffnungen 114, welche einen Zugang zu den in den Abdrücken 112 angeordneten Zähnen bereitstellen können. Über die Durchgangsöffnungen 114 kann der Sitz der Zähne in den Abdrücken 112 und/oder in einer Gingiva geprüft werden, in welcher die Zähne einzukleben sind. Ferner kann eine Verteilung des eines Klebemittels zwischen den Zähnen und der Gingiva geprüft und überzähliges Klebemittel vor einem Aushärten entfernt werden. Beispielsweise kann fehlendes Klebemittel nachgetragen werden.

Figur 2A zeigt eine perspektivische Ansicht einer ersten Seite der Okklusionsvorrichtung 110, welche die Abrücke 112 umfasst. Figur 2B zeigt eine perspektivische Ansicht einer zweiten, der ersten Seite abgewandten Seite der Okklusionsvorrichtung 110. Diese zweite Seite tritt beispielsweise mit einem Klemmelement zum Aufbringen von Druck auf die Okklusionsvorrichtung 110 in Kontakt. Hierfür weist die zweite Seite der Okklusionsvorrichtung 110 beispielsweise eine halbkugelförmige Vertiefung 116 zur Aufnahme eines kugelförmigen Kontaktelements des Klemmelements auf. Ebenso sind beispielsweise auch andere Formen einer zerstörungsfreien Verbindung möglich. Falls die Okklusionsvorrichtung 110 zum Anordnung und Ausrichtung von Zähnen zweier Zahnprothesen konfiguriert ist, kann die zweite, der ersten Seite abgewandte Seite der Okklusionsvorrichtung 110 beispielsweise ebenfalls wie in Figur 2A gezeigt ausgestaltet sein mit einer Mehrzahl von zweiten Abdrücken von Zahnkronenoberseiten der Zähne der zweiten Zahnprothese, analog zu den Abdrücke 112, welche zu einer präzisen Anordnung und Ausrichtung in den zweiten Abdrücken positionierbar sind.

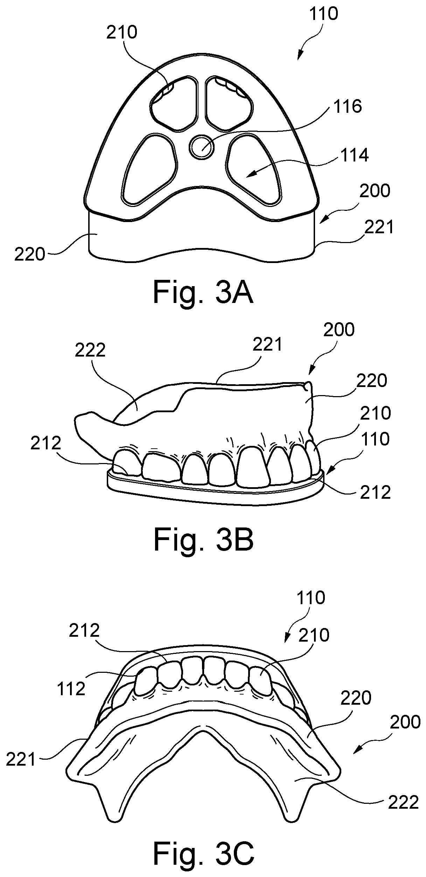

Figuren 3A bis 3C zeigen die exemplarische Okklusionsvorrichtung aus den Figuren 2A und 2B in Verbindung mit einer exemplarischen Zahnprothese 200, welche Zähne 210 und einen Prothesenkörper 221 mit einer künstlichen Gingiva 220 umfasst. Die Zahnkronen 212 der Zähne 210 sind beispielsweise in den Abdrücken 112 positioniert. Die so positionierten Zähne 210 sind in die Gingiva 220 des Prothesenkörpers 221 zum Einkleben eingebracht.

Figur 3A zeigt eine perspektivische Ansicht der zweiten Seite der Okklusionsvorrichtung 110 mit der darunter angeordneten Zahnprothese 200, Figur 3B eine seitliche Ansicht der Okklusionsvorrichtung 110 mit der Zahnprothese 200 und Figur 3C eine perspektivische Ansicht der Kombination von Okklusionsvorrichtung 110 und Zahnprothese 200 von der Seite der Zahnprothese 200 aus.

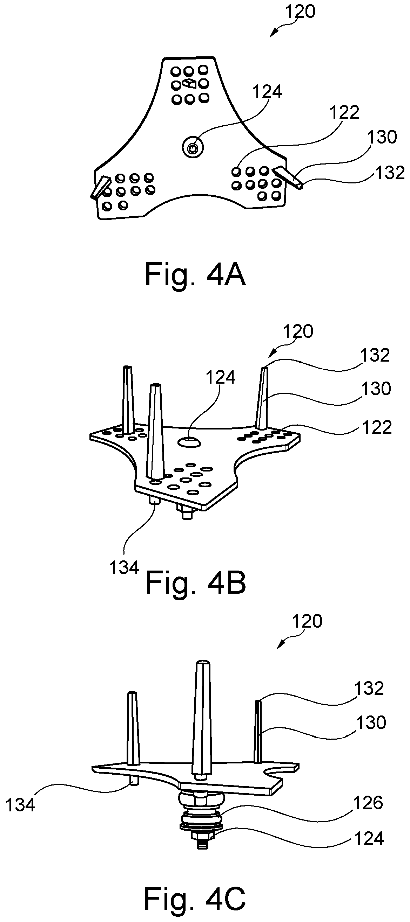

Figuren 4A bis 4C zeigen eine exemplarische Stützvorrichtung 120 mit Stützelementen 130 zum Stützen eines Prothesenkörpers einer Zahnprothese, welcher eine Gingiva umfasst. Die stiftförmigen Stützelemente 130 verjüngen sich beispielsweise ausgehend von der Stützvorrichtung 120 zu einer beispielsweise abgeflachten Spitze 132 hin. Beispielsweise sind die sich verjüngenden Stützelemente jeweils gummiert oder rutschfest ausgestaltet, etwa beschichtet, und/oder werden in unterschiedlichen Längen vorrätig gehalten. Die Spitzen 132 sind konfiguriert für eine Punktabstützung an einer der Gingiva gegenüberliegenden Unterseite des Prothesenkörpers. In dem vorliegenden Beispiel werden exemplarisch drei Stützelemente 130 gezeigt, welche eine Dreipunktabstützung des Prothesenkörpers mit der Gingiva ermöglichen. Beispielsweise sind zwei der Stützelemente 130 zum Stützen des Prothesenkörpers im molaren Bereich und ein Stützelement 130 zum Stützen des Prothesenkörpers im labialen Bereich vorgesehen. Die Stützvorrichtung 120 umfasst ferner beispielsweise eine Mehrzahl von Positionsbohrungen 122, in welche die Stützelemente 130 mit einem Schraubgewinde 134 eingeschraubt werden können. Die Stützelemente 130 könnten beispielsweise auch in eine Passstiftaufnahmen mit Klemmwirkung gesteckt und von dieser gehalten werden. Die Stützelemente 130 sind also zerstörungsfrei lösbar mit der Stützvorrichtung 120 verbunden. Ein Wechsel der Positionsbohrungen 122, in welche die Stützelemente 130 eingeschraubt oder gesteckt sind, ermöglicht ein individuelles Anpassen der Positionen der Stützelement 130 an die Unterseitengeometrie des zu stützenden Prothesenkörpers mit der Gingiva. Ferner kann eine zusätzliche Anpassung an die Unterseitengeometrie des zu stützenden Prothesenkörpers durch eine Wahl von Stützelementen 130 passender Länge erfolgen. Eine Feinjustierung der Längen der Stützelemente 130 kann beispielsweise mittels des Schraubgewindes 134 erfolgen und/oder durch Auswahl der Stützelementen 130 mit unterschiedlichen Längen.

Die Stützvorrichtung 120 umfasst ferner eine beispielsweise zentrale Bohrung zur Aufnahme eines Halteelements 124, beispielsweise in Form einer Schraube. Bei dem Halteelemente 124 könnte es sich beispielsweise auch um ein Element einer anderen bekannten, vorzugsweise zerstörungsfrei lösbaren Verbindungform, wie etwa einer Steckverbindung, Klemmverbindung, Rastverbindung, oder eines Bajonettverschlusses etc. handeln. Das Halteelement 124 ist konfiguriert für eine zerstörungsfrei lösbare Befestigung eines Klemmelements an der Stützvorrichtung 120. Das Halteelement 124 ist beispielsweise elastisch gelagert unter Verwendung eines elastischen Elements 126, wie etwa eines Gummipuffers oder Federelements. Das elastische Element 126 ermöglicht beispielsweise eine Rotation der Stützvorrichtung 120 um eine Längsachse des Halteelements 124 als Rotationachse. Eine solche Rotation kann beispielsweise einen Zugang zu einem von der Stützvorrichtung 120 abgestützten Zahnprothese aus unterschiedlichen Richtungen erleichtern. Ferner kann das elastische Element 126 eine laterale Verschiebung der Stützvorrichtung 120 entlang der Längsachse des Halteelements 124 ermöglichen. Eine solche laterale Verschiebung kann beispielsweise unterschiedliche Abmessungen der abgestützten Zahnprothesen kompensieren. Figur 4A zeigt eine Draufsicht auf eine erste Seite der Stützvorrichtung 120, an welcher die Stützelemente 130 zum Abstützen der Gingiva angeordnet sind, Figur 4B eine perspektivische Ansicht der ersten Seite der Stützvorrichtung 120 und Figur 4C eine seitliche Ansicht der Stützvorrichtung 120.

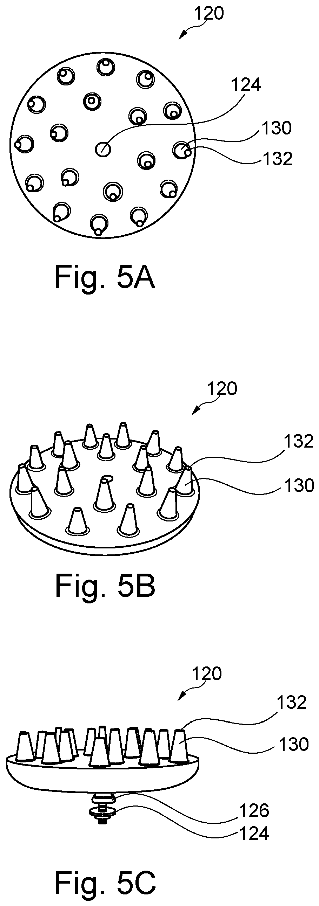

Figuren 5A bis 5C zeigen eine weitere exemplarische Stützvorrichtung 120 mit Stützelementen 130 zum Stützen eines Prothesenkörpers einer Zahnprothese, welcher eine Gingiva umfasst. Die konischen Stützelemente 130 verjüngen sich ausgehend von der Stützvorrichtung 120 zu einer beispielsweise abgeflachten Spitze 132 hin. Die Stützelemente 130 bestehen beispielsweise aus einem elastischen Material, etwa Silikon, und passen sich beispielsweise der Unterseitengeometrie des abzustützenden Prothesenkörpers an. Mithin ist beispielsweise keine Längenanpassung der Stützelemente 130 an die zu stützende Zahnprothese notwendig, da sich die Stützelemente 130 von selbst elastisch anpassen. Die Stützelemente 130 sind beispielsweise nicht zerstörungsfrei lösbar von der Stützvorrichtung 120, d.h. die Positionen der Stützelemente 130 können nicht individuell an die zu stützende Zahnprothese angepasst werden. Dafür kann die Stützvorrichtung 120 beispielsweise eine Mehrzahl von Stützelementen 130 umfassen, welche größer ist als die Anzahl der für eine stabile Abstützung einer Zahnprothese notwendigen Stützelemente 130. Diese Stützelemente 130 sind über die Seitenfläche der Stützvorrichtung 120 verteilt, beispielsweise gleichmäßig oder ungleichmäßig, sodass sichergestellt werden kann, dass stets eine ausreichende Anzahl an Stützelementen 130 zum Stützen eines Prothesenkörpers mit zur Verfügung stehen. Beim Stützen treten somit beispielsweise nicht zwingend alle, sondern jeweils lediglich ein paar der bereitgestellten Stützelemente 130 mit der abzustützenden Unterseite des Prothesenkörpers in Kontakt. Ferner umfasst die Stützvorrichtung 120 in den Figuren 5, wie bereits die Stützvorrichtung 120 in den Figuren 4, ein Halteelement 124, beispielsweise in Form einer Schraube, mit einem elastischen Element wie etwa einem Gummipuffer oder einem Federelement, zum Befestigen der Stützvorrichtung 120 an einem Klemmelement. Bei dem Halteelemente 124 könnte es sich beispielsweise auch um ein Element einer anderen bekannten, vorzugsweise zerstörungsfrei lösbaren Verbindungform, wie etwa einer Steckverbindung, Klemmverbindung, Rastverbindung, oder eines Bajonettverschlusses etc. handeln. Figur 5A zeigt eine Draufsicht auf eine erste Seite der Stützvorrichtung 120, an welcher die Stützelemente 130 zum Abstützen der Gingiva angeordnet sind, Figur 5B eine perspektivische Ansicht der ersten Seite der Stützvorrichtung 120 und Figur 5C eine seitliche Ansicht der Stützvorrichtung 120.

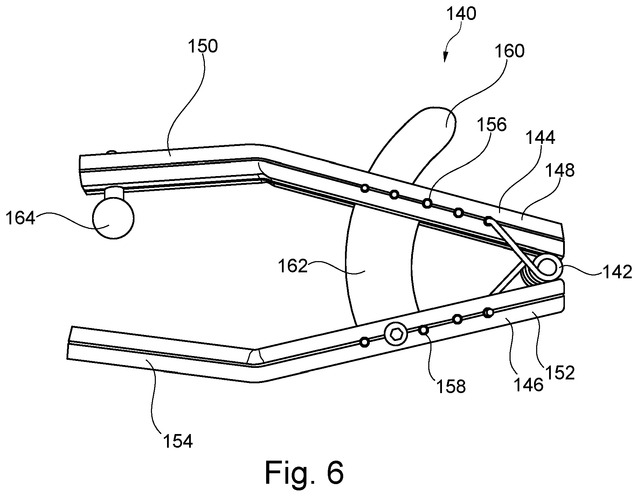

Figur 6 zeigt ein exemplarisches Klemmelement 140. Das Klemmelement 140 umfasst beispielsweise zwei Schenkel 144, 146, welche unter Verwendung einer Feder 142 miteinander verbunden sind. Bei der Feder 142 handelt es sich beispielsweise um eine Schenkelfeder, welche als Gelenk zwischen den beiden Schenkeln 144, 146 konfiguriert ist, sodass die beiden Schenkel 144, 146 relativ zueinander um die Feder 142 als Schwenkachse verschwenkbar sind. Die beiden Schenkel 144, 146 umfassen beispielsweise jeweils zwei Abschnitte 148, 150 und 152, 154. Die Abschnitte 148, 150 und 152, 154 sind beispielsweise jeweils gerade Abschnitte, könnten aber auch gekrümmt sein. Die beiden ersten Abschnitte 148, 152 der beiden Schenkel 144, 146 erstrecken sich in einer Ausgangsposition des Klemmelements beispielsweise parallel zueinander und sind dazu vorgesehen einen durch die Federkraft der Feder 142 erzeugten Druck auf eine Zahnprothese aufzubringen, beispielsweise über eine Okklusionsvorrichtung und/oder eine Stützvorrichtung. Die ersten Abschnitte 148, 152 der beiden Schenkel 144, 146 schließen beispielsweise jeweils einen flachen Winkel mit einem zweiten Abschnitt 154, 156 ein. Die zweiten Abschnitte 154, 156 sind beispielsweise aufeinander zugeneigt angeordnet und werden durch die Feder 142 miteinander verbunden. Ferner umfasst das Klemmelement 140 ein kreisbogenförmiges Führungselement 160, welches an einem ersten der Schenkel 146 befestigt ist und sich durch eine Durchgangsöffnung des zweiten Schenkels 144 hindurch erstreckt, sodass der zweite Schenkel 144 bei einem Verschwenken um die Feder 142 als Schwenkachse relativ zu dem ersten Schenkel 146 geführt und stabilisiert wird.

Ferner umfasst das Führungselement 160 eine als Begrenzungselement 162 fungierenden Abschnitt, welche sich in der Ruheposition zwischen den beiden Schenkeln 144, 146 erstreckt und einen Durchmesser aufweist, welcher größer als ein Durchmesser der Durchgangsbohrung des zweiten Schenkels 144 ist und mithin eine weitere Annährung des ersten Abschnitts 150 des zweiten Schenkels 144 an den ersten Abschnitt 154 des ersten Schenkels 146 begrenzt. Schließlich umfasst der erste Abschnitt 150 des zweiten Schenkels 144 an einem von der Feder 142 aus gesehen distalen Ende ein kugelförmiges Kontaktelement 164, welches dazu konfiguriert ist, mit einer halbkugelförmigen Vertiefung, etwa in einer Okklusionsvorrichtung, in Kontakt zu treten. Der erste Abschnitt 154 des ersten Schenkels 146 umfasst an einem von der Feder 142 aus gesehen distalen Ende beispielsweise eine Aufnahme, etwa in Form einer Bohrung, Steckverbindung, Klemmaufnahme, Bajonettverschluss, Rastverbindung usw., zur Aufnahme eines Halteelements, beispielsweise zum Befestigen einer Stützvorrichtung. Die zweiten Abschnitte 148 und 152 der beiden Schenkel 144, 146 umfassen ferner eine Mehrzahl von Positionsbohrungen 156, 158 zum Positionieren der Feder 152. Durch einen Wechsel der verwendeten Positionsbohrungen 156, 158 kann eine Position der Feder 142 geändert und damit die von der Feder 142 erzeugte Federkraft durch Anpassung der Auslenkung angepasst werden. Ferner kann die Federkraft beispielsweise durch einen Wechsel der Feder 142 gegen eine andere Feder mit einer kleineren oder größeren Federkonstante angepasst werden. Beispielsweise kann auch eine individuelle Einstellvorrichtung vorgesehen sein, mit welcher der Druck angepasst werden kann. Beispielsweise könnte anstelle der Feder 142 ein Drehgelenk und anstelle des Führungselements 160 eine Einstellvorrichtung vorgesehen sein, mit welcher der Abstand zwischen den beiden Abschnitten 150, 154 individuell einstellbar ist, beispielsweise unter Verwendung einer Gewindespindel. Ferner könnte anstelle der Feder 142 eine Einstellvorrichtung vorgesehen sein, beispielsweise mit einem stufenweise einstellbaren Drehgewinde, mit welchem der Abstand zwischen den beiden Abschnitten 150, 154 individuell einstellbar ist.

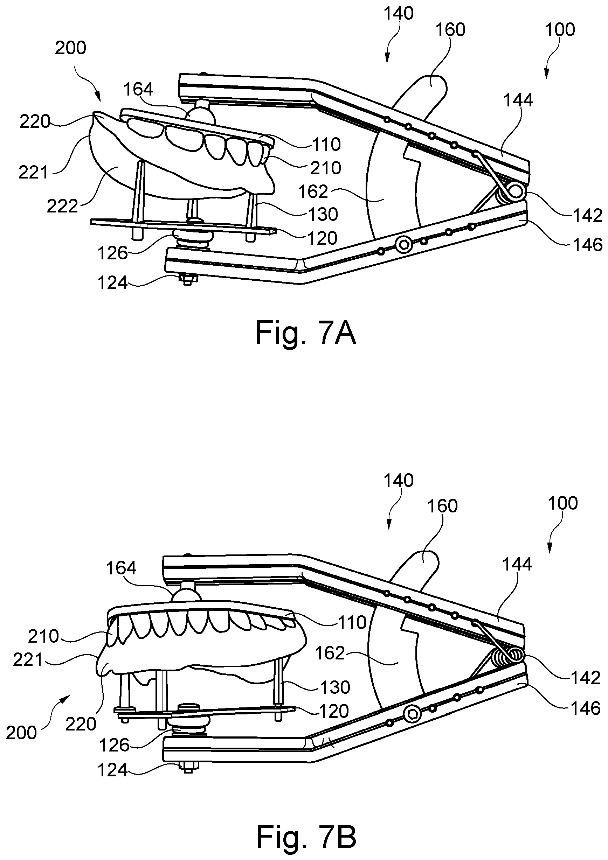

Die Figuren 7A und 7B zeigen eine exemplarische Einklebehilfsvorrichtung 100 in Verbindung mit einer exemplarischen Zahnprothese 200. Die Einklebehilfsvorrichtung 100 umfasst die in den Figuren 2 und 3 gezeigte Okklusionsvorrichtung 110, die in den Figuren 4 gezeigte Stützvorrichtung 120 und das in der Figur 6 gezeigte Klemmelement 140. Das Klemmelement 140 steht in Kontakt mit der Okklusionsvorrichtung 110 über das kugelförmige Kontaktelement 164 und mit der Stützvorrichtung 120 durch das Halteelement 124. Dabei sind die Okklusionsvorrichtung 110 und die Stützvorrichtung 120 mit der dazwischen angeordneten Zahnprothese 200 relativ zu dem Klemmelement 140 drehbar gelagert. Die Figuren 7A und 7B zeigen Ansichten der Okklusionsvorrichtung 110, Stützvorrichtung 120 und Zahnprothese 200 von unterschiedlichen Seiten.

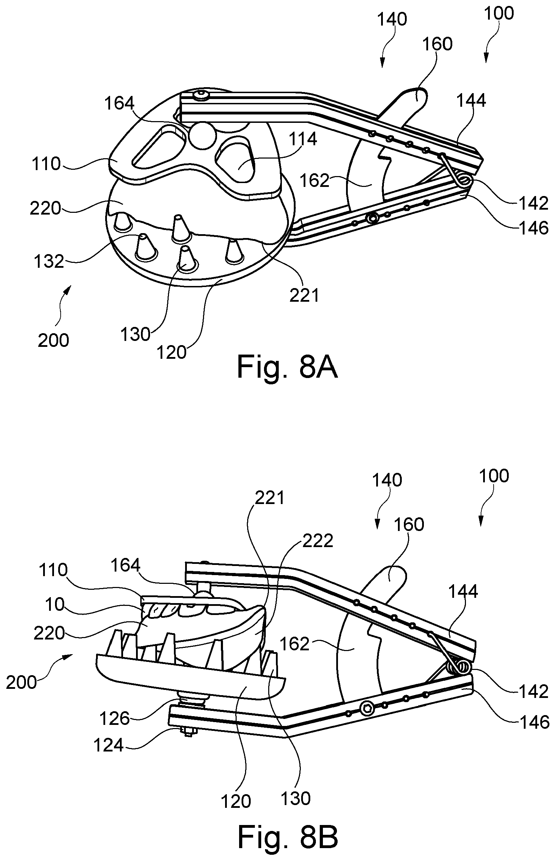

Die Figuren 8A und 8B zeigen eine exemplarische Einklebehilfsvorrichtung 100 in Verbindung mit einer exemplarischen Zahnprothese 200. Die Einklebehilfsvorrichtung 100 umfasst die in den Figuren 2 und 3 gezeigte Okklusionsvorrichtung 110, die in den Figuren 5 gezeigte Stützvorrichtung 120 und das in der Figur 6 gezeigte Klemmelement 140. Das Klemmelement 140 steht in Kontakt mit der Okklusionsvorrichtung 110 über das kugelförmige Kontaktelement 164 und mit der Stützvorrichtung 120 durch das Halteelement 124. Dabei sind die Okklusionsvorrichtung 110 und die Stützvorrichtung 120 mit der dazwischen angeordneten Zahnprothese 200 relativ zu dem Klemmelement 140 drehbar gelagert. Die Figuren 8A und 8B zeigen Ansichten der Okklusionsvorrichtung 110, Stützvorrichtung 120 und Zahnprothese 200 von unterschiedlichen Seiten.

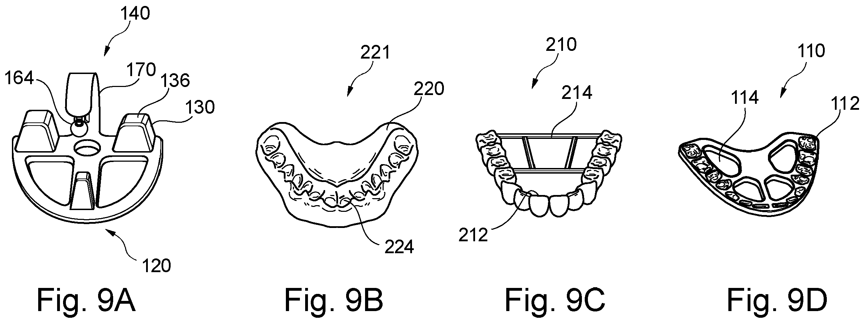

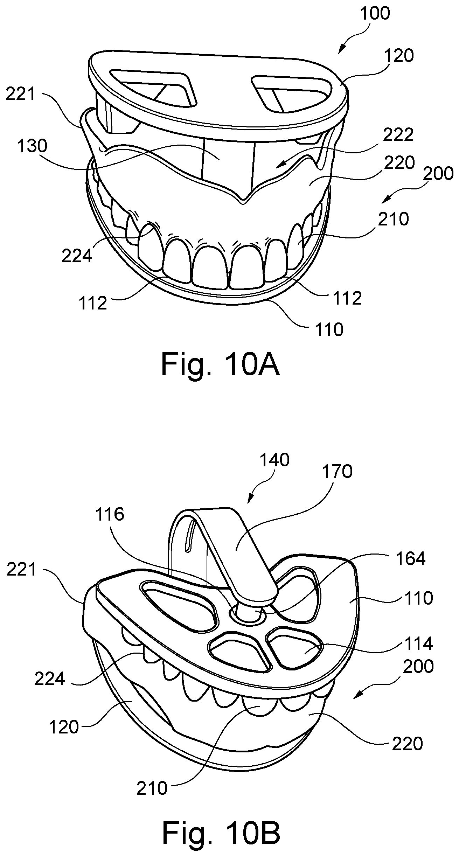

Figuren 9A bis 9D zeigen exemplarische Elemente einer Einklebehilfsvorrichtung und einer exemplarischen Zahnprothese. Die gezeigten Elemente wurden beispielsweise in einem 3D-Drucker gedruckt. Figur 9A zeigt eine Stützvorrichtung 120 mit drei Stützelementen 130, welche jeweils an einem von der Stützvorrichtung 120 aus gesehenen distalen Ende eine Stützfläche 136 aufweisen, bei welcher es sich beispielsweise um einen Abdruck einer der Gingiva 220 gegenüberliegenden Unterseite des Prothesenkörpers 221 handelt und welche beispielsweise identisch ist mit der Form einer natürlichen Gingiva des Patienten. Die Stützvorrichtung 120 ist einstückig ausgestaltet mit den Stützelementen 130 und einem Klemmelement 140 in Form eines elastischen Bogens 170. An einem von der Stützvorrichtung 120 aus gesehenen distalen Ende weist der Bogen 170 ein kugelförmiges Kontaktelement 164 auf, welches dazu konfiguriert ist, mit einer halbkugelförmigen Vertiefung 116 (vgl. Fig.10B) in der Okklusionsvorrichtung 110 in Kontakt zu treten. Beispielsweise könnte auch mehrere jeweils als elastischer Bogen ausgestaltete Klemmelemente 140 vorgesehen sein oder das Klemmelement 140 könnte eine Mehrzahl von elastischen Bögen umfassen.

Figur 9B zeigt einen Prothesenkörper 221 der Zahnprothese mit einer künstliche Gingiva 220 mit Aufnahmen 224 für die Zähne 210. Figur 9C zeigt künstliche Zähne 210 mit Zahnkronen 212 zum Einkleben in die Aufnahmen der Gingiva 220. Die künstlichen Zähne 210 sind noch mit Verstrebungen 214 verbunden, welche aus dem Druckvorgang resultieren und vor einem Einbringen der Zähne 210 in die Gingiva 220 entfernt werden. Beispielsweise werden die Zähne 210 als ein vollständiger Zahnkranz bereitgestellt. Ebenso könnten auch Einzelzähne oder Zahnbrücken mit weniger Zähnen bereitgestellt werden. Figur 9C zeigt schließlich eine Okklusionsvorrichtung 110, welche identisch zu der in den Figuren 2 gezeigten Okklusionsvorrichtung 110 ist. Die Zahnabdrücke 112 der Okklusionsvorrichtung 110 sind zur Aufnahme der Zahnkronen 212 der Zähne 210 konfiguriert.

Figuren 10A und 10B zeigen eine exemplarische Einklebehilfsvorrichtung 100 in Verbindung mit einer exemplarischen Zahnprothese 200. Die Einklebehilfsvorrichtung 100 umfasst die Stützvorrichtung 120 mit der Klemmelement 140 aus Figur 9A und die Okklusionsvorrichtung 110 aus Figur 9D. Die Zahnprothese 200 umfasst den Prothesenkörper 221 mit der Gingiva 220 aus Figur 9B und den Zähnen 210 aus Figur 9C. Die Zahnprothese 200 ist ferner beispielsweise zwischen der Okklusionsvorrichtung 110, in deren Zahnabdrücken 112 die Zähne 210 positioniert sind, und der Stützvorrichtung 120 angeordnet, welche mit den Stützelementen 130 den Prothesenkörper der Zahnprothese 200 an einer der Gingiva 220 abgewandten Unterseite 222 abstützt. Dabei bringt das Klemmelement 140 mit dem Bogen 170 Druck sowohl auf die Stützvorrichtung 120 als auch auf die Okklusionsvorrichtung 110 auf, welchen diese auf die Zahnprothese 200 zum Fixieren der Zähne 210 in den Aufnahmen 224 der Gingiva 220 übertragen. Figur 10A zeigt eine perspektivische Ansicht der Einklebehilfsvorrichtung 100 von der unterhalb der Zahnprothese 200 angeordneten Stützvorrichtung 120 aus gesehen. Figur 10B zeigt eine perspektivische Ansicht der Einklebehilfsvorrichtung 100 von der oberhalb der Zahnprothese 200 angeordneten Okklusionsvorrichtung 110 aus gesehen.

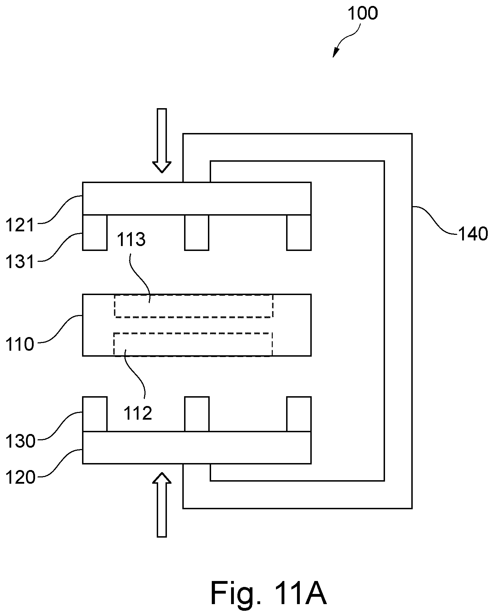

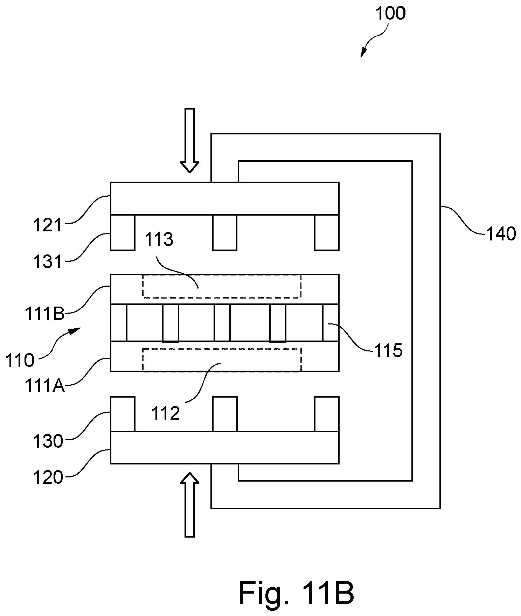

Figur 11A zeigt eine schematische Ansicht einer exemplarischen Einklebehilfsvorrichtung 100. Die Einklebehilfsvorrichtung 100 umfasst eine Okklusionsvorrichtung 110, welche auf zwei einander gegenüberliegenden Seiten jeweils ein oder mehrere Abdrücke 112, 113 von Zähnen aufweist. Ferner umfasst die Einklebehilfsvorrichtung 100 zwei Stützvorrichtungen 120, 121, welche jeweils ein oder mehrere Stützelemente 130, 131 umfassen. Ein Klemmelement 140 der Einklebehilfsvorrichtung 100, ist dazu konfiguriert Druck auf die beiden Stützvorrichtungen 120, 121 aufzubringen. Beispielsweise sind die Komponenten 110, 120, 121, 140 der Einklebehilfsvorrichtung 100 so angeordnet, dass der von dem Klemmelement 140 auf die Stützvorrichtungen 120, 121 aufgebrachte Druck, dessen Richtungen in Figur 11 durch die beiden aufeinander zu gerichteten Pfeilen angezeigt wird, jeweils in Richtung auf die Zahnabdrücke 112, 113 der Okklusionsvorrichtung 110 zu gerichtet ist. Beispielsweise ist die Okklusionsvorrichtung 110 zwischen den beiden Stützvorrichtungen 120, 121 angeordnet. Beispielsweise sind die Stützvorrichtungen 120, 121 und die Okklusionsvorrichtung 110 so angeordnet, dass die Zahnabdrücke 112, 113 der Okklusionsvorrichtung 140 während des Aufbringens des Drucks jeweils den Stützelemente 130, 131 einer der Stützvorrichtungen 120, 121 zugewandt sind. Das Klemmelement 140 ist dazu konfiguriert mit den Stützvorrichtungen 120, 121 zum Aufbringen des Drucks in Kontakt zu treten, entweder direkt oder indirekt über Zwischenkomponenten. Beispielsweise ist das Klemmelement 140 zerstörungsfrei lösbar oder nicht zerstörungsfrei lösbar mit den Stützvorrichtungen 120, 121 verbunden. Beispielsweise ist das Klemmelement 140 einstückig mit einer oder beiden Stützvorrichtungen 120, 121 ausgestaltet.

Figur 11B zeigt eine schematische Ansicht einer exemplarischen Einklebehilfsvorrichtung 100, welche bis auf die Ausgestaltung der Okklusionsvorrichtung 110 der Einklebehilfsvorrichtung 100 in Figur 11A entspricht. Die Okklusionsvorrichtung 110 in Figur 11B ist beispielsweise als Doppelelement, z.B. als Doppelplatte, mit zwei parallel zueinander angeordneten Okklusionselementen 111A, 111B, z.B. Plattenelementen, konfiguriert. Die beiden Okklusionselemente 111A, 111B weisen auf einander abgewandten Seiten jeweils ein oder mehrere Abdrücke 112, 113 von Zähnen auf. Ferner sind beiden Okklusionselemente 111A, 111B durch Abstandselemente 115 voneinander beabstandet. Die Abstandselemente 115 erstrecken sich beispielsweise senkrecht zwischen den Okklusionselementen 111A, 111B. Beispielsweise weisen die Okklusionselemente 111A, 111B zudem jeweils ein oder mehrere Durchgangsöffnungen auf. Die Durchgangsöffnung ermöglichen einen Zugang zu ein oder mehreren Aufnahmen einer ersten Gingiva einer zwischen Okklusionsvorrichtung 110 und Stützvorrichtung 120 anordbaren ersten Zahnprothese und zu ein oder mehreren Aufnahmen einer zweiten Gingiva einer zwischen Okklusionsvorrichtung 110 und Stützvorrichtung 120 anordbaren ersten Zahnprothese. Die Okklusionselemente 111A, 111B können beispielsweise jeweils analog zu der in den Figuren 2 gezeigten Okklusionsvorrichtung 110 ohne Vertiefung 116 ausgestaltet sein.

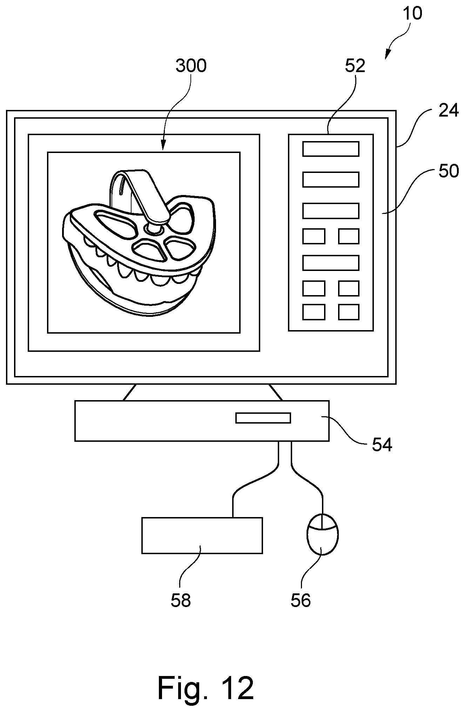

Figur 12 zeigt ein exemplarisches Computersystem 10 zum Erstellen eines Computermodells 300 einer Einklebehilfsvorrichtung unter Verwendung eines Computermodells einer zu erstellenden und zusammenzuklebenden Zahnprothese. Das Computersystem 10 kann beispielsweise eine Hardware-Komponente 54 mit einem oder mehreren Prozessoren sowie einem Speicher zur Speicherung von maschinenausführbaren Programmbefehlen enthalten. Ein Ausführen der Programmbefehle durch die Prozessoren kann den einen oder die mehreren Prozessoren veranlassen, das Computersystem 10 zu steuern, um das digitale Modell 300 der Einklebehilfsvorrichtung zu konstruieren. Das Computersystem 10 kann ferner externe Eingabegeräte, wie etwa eine Tastatur 54 und eine Maus 56, umfassen, die es dem Benutzer ermöglichen, mit dem Computersystem 10 zu interagieren. Darüber hinaus kann das Computersystem 10 Ausgabegeräte, wie etwa einen Bildschirm 24 mit einer Nutzerschnittstelle 50 mit Steuerelementen 52 umfassen, die es dem Benutzer ermöglichen, die Konstruktion des digitalen Modells 300 der Einklebehilfsvorrichtung mit Hilfe des Computersystems 10 zu steuern. Das erzeugte digitalen Modells 300 kann beispielsweise auf der Nutzerschnittstelle 50 dargestellt werden.

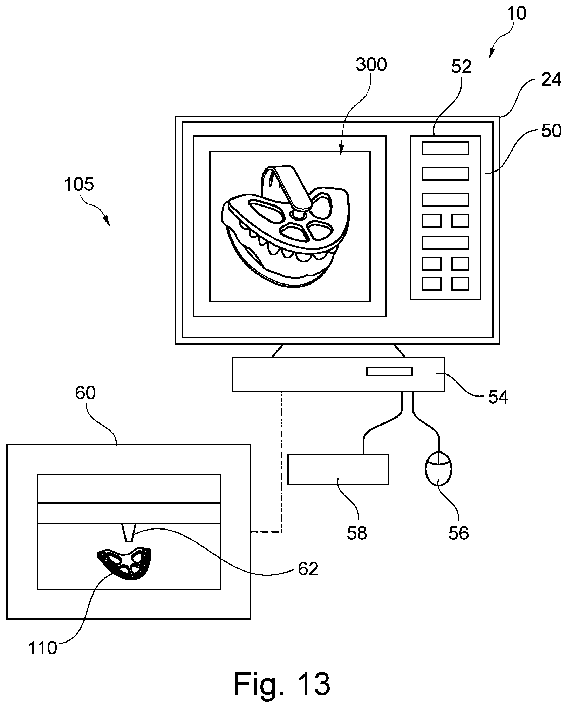

Figur 13 zeigt ein exemplarisches Herstellungssystem 105 zum Herstellen einer Einklebehilfsvorrichtung 100 und/oder von deren Elementen. Das Herstellungssystem 105 kann das Computersystem 10 aus Figur 12 umfassen. Das Computersystem 10 kann ferner so konfiguriert sein, dass es einen 3D-Drucker 60 zur Herstellung einer oder mehrerer Elemente der Einklebehilfsvorrichtung 100 gemäß dem auf dem Computersystem 10 konstruierten digitalen Modell 300 steuert. Beispielsweise kann eine Okklusionsvorrichtung 110 gedruckt werden. Der 3D-Drucker 60 kann ein Druckelement 62 umfassen, das so konfiguriert ist, dass es die Elemente der Einklebehilfsvorrichtung 100, wie etwa die Okklusionsvorrichtung 100, Schicht für Schicht druckt. Falls der 3D-Drucker 60 beispielsweise in der Lage ist, verschiedene Materialien zu drucken, kann er zum Drucken mehrerer Elemente der Einklebehilfsvorrichtung 100 sowie gegebenenfalls einer Zahnprothese 200 verwendet werden. Falls der 3D-Drucker 60 zum Beispiel nur ein einziges Material drucken kann, können mehrere 3D-Drucker 60 verwendet werden, um die verschiedenen Elemente der Einklebehilfsvorrichtung 100 und/oder der Zahnprothese 200 zu drucken.

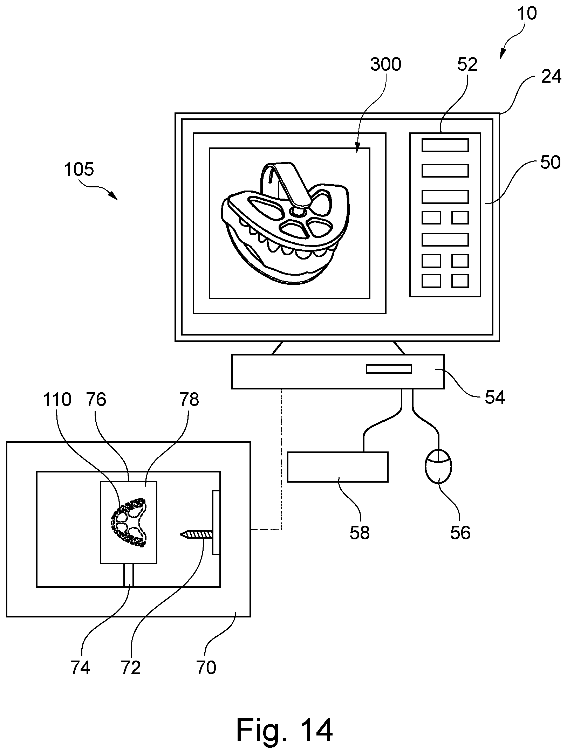

Figur 14 zeigt ein weiteres exemplarisches Herstellungssystem 105 zum Herstellen einer Einklebehilfsvorrichtung 100 und/oder von deren Elementen. Das Herstellungssystem 105 kann das Computersystem 10 aus Figur 12 umfassen. Das Computersystem 10 kann ferner so konfiguriert sein, dass es ein Bearbeitungsgerät 70 steuert, das für die Bearbeitung eines Rohlings 76 unter Verwendung eines oder mehrerer Bearbeitungswerkzeuge 72 konfiguriert ist. Der Rohling 76 aus Material 78 kann unter Verwendung einer Haltevorrichtung 74 bereitgestellt und in eine gewünschte Endform und -größe des herzustellenden Elements geschnitten oder gefräst werden. Dabei werden beispielsweise das eine oder die mehreren Bearbeitungswerkzeuge 72 zum Ausführen eines von dem Computersystem 10 gesteuerten Materialabtragungsprozesses verwendet. Beispielsweise kann eine Okklusionsvorrichtung 110 aus dem Rohling 76 hergestellt werden. Das Bearbeitungswerkzeug 72 kann zum Beispiel ein Fräswerkzeug sein. Das Bearbeitungsgerät 70 kann auch verwendet werden, um andere Elemente der Einklebehilfsvorrichtung 100 sowie gegebenenfalls der Zahnprothese 200 herzustellen. Je nach Ausführung kann das Computersystem 10 dazu konfiguriert sein, zusätzlich ein oder mehrere weiter Bearbeitungsgeräten 70 und/oder einen oder mehrere 3D-Drucker 60 zu verwenden.

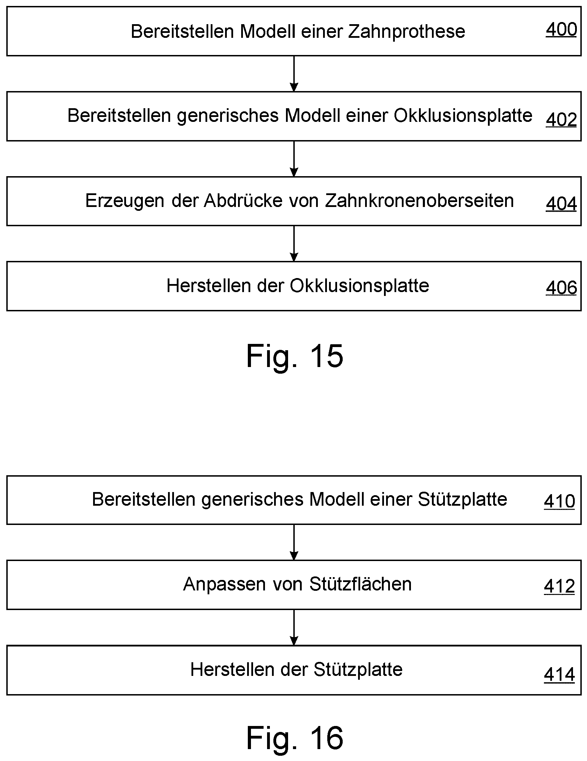

Figur 15 zeigt ein schematisches Flussdiagramm eines exemplarischen Verfahrens zum Herstellen einer Okklusionsvorrichtung für eine Einklebehilfsvorrichtung. In Block 400 wird ein dreidimensionalen Computermodells einer herzustellenden Zahnprothese bereitgestellt. Die Zahnprothese umfasst beispielsweise eine Mehrzahl von künstlichen Zähnen mit einer vordefinierten Okklusion, welche in einer künstlichen Gingiva eines Prothesenkörpers angeordnet sind. In Block 402 wird ein generisches dreidimensionales Computermodell einer Okklusionsvorrichtung bereitgestellt und in Block 404 werden Abdrücke von Zahnkronenoberseiten der Zähne in dem dreidimensionalen Computermodells der Okklusionsvorrichtung erzeugt, in welchen die Zahnkronen der Zähne zum Anordnen und Ausrichten positionierbar sind. In Block 406 wird die Okklusionsvorrichtung unter Verwendung des dreidimensionalen Computermodells der Okklusionsvorrichtung mit den Abdrücken der Zahnkronenoberseiten hergestellt. Beispielsweise wird die Okklusionsvorrichtung mit einem 3D-Drucker gedruckt oder unter Verwendung eines spanabhebenden Verfahrens hergestellt.

Figur 16 zeigt ein schematisches Flussdiagramm eines exemplarischen Verfahrens zum Herstellen einer Stützvorrichtung für eine Einklebehilfsvorrichtung. In Block 410 wird ein generisches dreidimensionales Computermodell einer ersten Stützvorrichtung zum Stützen eines Prothesenkörpers einer Zahnprothese mit ein oder mehreren Stützelementen bereitgestellt, welche an der Stützvorrichtung angeordnet sind. Die Stützelemente weisen jeweils eine Stützfläche auf, welche dazu vorgesehen ist jeweils mit einer Kontaktfläche einer der Gingiva abgewandten Unterseite des Prothesenkörpers in Kontakt zu treten. In Block 412 werden die Formen der Stützflächen so angepasst, dass die Formen jeweils ein Negativ der Form der jeweiligen Kontaktfläche darstellen. Beispielsweise werden für die Anpassung Scan-Daten eines Oberflächenscans der natürlichen Gingiva des Patienten verwendet. In Block 414 wird die Stützvorrichtung unter Verwendung des dreidimensionalen Computermodells der Stützvorrichtung mit angepassten Stützflächen herstellt. Beispielsweise wird die Stützvorrichtung mit einem 3D-Drucker gedruckt oder unter Verwendung eines spanabhebenden Verfahrens hergestellt.

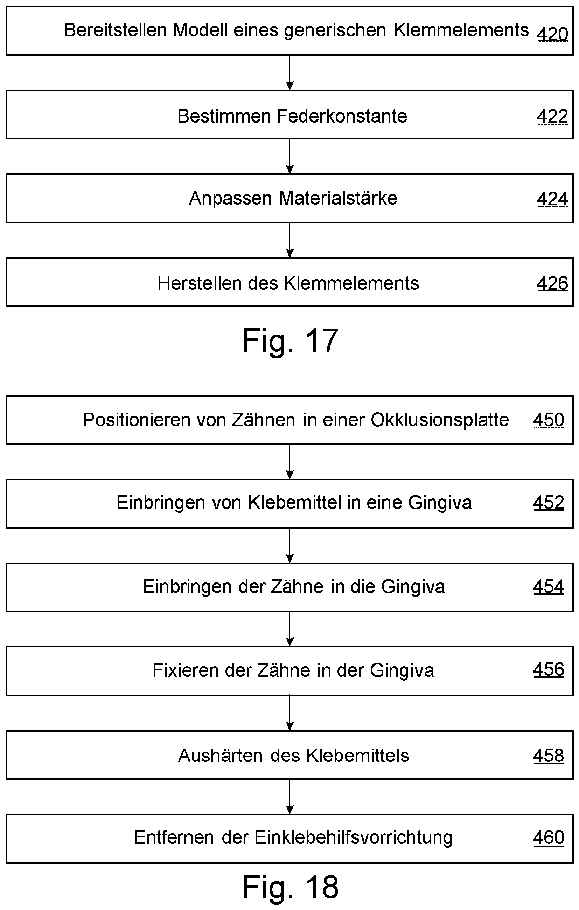

Figur 17 zeigt ein schematisches Flussdiagramm eines exemplarischen Verfahrens zum Herstellen eines Klemmelements für eine Einklebehilfsvorrichtung. In Block 420 wird ein dreidimensionales Computermodells eines generischen Klemmelements bereitgestellt. Das Klemmelement ist dazu konfiguriert, Druck beispielsweise auf eine Okklusionsvorrichtung und auf eine Stützvorrichtung aufzubringen zum Fixieren mittels der Okklusionsvorrichtung angeordneter und ausgerichteter Zähne in einer künstlichen Gingiva eines mittels der Stützvorrichtung gestützten Prothesenkörpers. Das Klemmelement umfasst ein oder mehrere elastische Bögen, welche sich beispielsweise von der Stützvorrichtung zu der Okklusionsvorrichtung erstrecken. In Block 422 wird eine Federkonstante der ein oder mehreren Bögen bestimmt, welcher mittels Federkraft einen vordefinierten Druck auf die Okklusionsvorrichtung und die Stützvorrichtung aufbringt, wenn eine Zahnprothese zwischen der Okklusionsvorrichtung und der Stützvorrichtung angeordnet ist. Bei der Federkonstante handelt es sich im Falle mehrerer Bögen beispielsweise um die Kombination, etwa eine Summe, der Federkonstanten der einzelnen Bögen. In Block 424 wir die Materialstärke der ein oder mehreren Bögen des dreidimensionalen Computermodells jeweils angepasst, sodass die ein oder mehrere Bögen die bestimmte Federkonstante aufweisen. In Block 426 wird das Klemmelement unter Verwendung des dreidimensionalen Computermodells mit den ein oder mehreren Bögen mit der angepassten Materialstärke herstellt. Beispielsweise wird das Klemmelement zusätzlich zu der Stützvorrichtung oder einstückig mit dieser hergestellt. Beispielsweise wird das Klemmelement mit einem 3D-Drucker gedruckt oder unter Verwendung eines spanabhebenden Verfahrens hergestellt.

Figur 18 zeigt ein schematisches Flussdiagramm eines exemplarischen Verfahrens zum Verwenden einer Einklebehilfsvorrichtung zum Einkleben einer Mehrzahl von Zähnen in eine künstliche Gingiva. In Block 450 werden die Zähne in einer Okklusionsvorrichtung der Einklebehilfsvorrichtung mit Abdrücken von Zahnkronenoberseiten der Zähne in den entsprechenden Abdrücken angeordnet und ausgerichtet. Dabei werden die Zahnkronen der Zähne in den Abdrücken der Okklusionsvorrichtung positioniert und von diesen in der entsprechenden Position gehalten. In Block 452 wird ein Klebemittel in ein oder mehrere Aufnahmen der Gingiva für die Zähne eingebracht. In Block 454 werden die Zähne in die entsprechend präparierten Aufnahmen der Gingiva eingebracht. In Block 456 werden die Zähne in der ersten Gingiva unter Verwendung eines Klemmelements der Einklebehilfsvorrichtung fixiert. Die Unterseite eines Prothesenkörpers der Zahnprothese wird von einer Stützvorrichtung der Einklebehilfsvorrichtung gestützt und unter Verwendung des Klemmelements wird Druck auf die Okklusionsvorrichtung und auf die Stützvorrichtung aufgebracht. In Block 458 wird das Klebemittel, beispielsweise unter Verwendung eines Lichthärtegeräts, ausgehärtet. In Block 460 wird die Einklebehilfsvorrichtung schließlich wieder entfernt, d.h. das Klemmelement, die Okklusionsvorrichtung und die Stützvorrichtung.

### Bezugszeichenliste

- 10: Computersystem
- 24: Bildschirm
- 50: Nutzerschnittstelle
- 52: Steuerelemente
- 54: Hardwarekomponente
- 56: externes Gerät
- 58: externes Gerät
- 60: 3D-Drucker
- 62: Druckelement
- 70: Bearbeitungsgerät
- 72: Bearbeitungswerkzeug
- 74: Haltevorrichtung
- 76: Rohling
- 78: Material
- 100: Einklebehilfsvorrichtung
- 110: Okklusionsvorrichtung
- 111A: Okklusionselement
- 111B: Okklusionselement
- 112: Abdrücke
- 113: Abdrücke
- 114: Durchgangsöffnungen
- 115: Abstandselement
- 116: kugelförmige Vertiefung
- 120: Stützvorrichtung
- 121: Stützvorrichtung
- 122: Positionsbohrungen
- 124: Halteelement
- 126: elastisches Element
- 130: Stützelement
- 131: Stützelement
- 132: Spitze
- 134: Gewinde
- 136: Stützfläche
- 140: Klemmelement
- 142: Feder
- 144: Schenkel
- 146: Schenkel
- 148: Abschnitt
- 150: Abschnitt
- 152: Abschnitt
- 154: Abschnitt
- 156: Positionsbohrung
- 158: Positionsbohrung
- 160: Führungselement
- 162: Begrenzungselement
- 164: kugelförmiges Kontaktelement
- 170: Bogen
- 200: Zahnprothese
- 210: Zähne
- 212: Zahnkrone
- 214: Verstrebung
- 220: Gingiva
- 221: Prothesenkörper
- 222: Unterseite
- 224: Aufnahme
- 300: Computermodell

## Patentansprüche

1. Einklebehilfsvorrichtung (100) für ein Anordnen, Ausrichten und Fixieren einer Mehrzahl erster künstlicher Zähne (210) zum Einkleben in einer ersten künstlichen Gingiva (220) einer ersten Zahnprothese (200),
wobei die Einklebehilfsvorrichtung (100) umfasst:
eine Okklusionsvorrichtung (110) zum Anordnen und Ausrichten der ersten Zähne (210) relativ zueinander gemäß einer vordefinierten Okklusion,
eine erste Stützvorrichtung (120) zum Stützen eines die erste Gingiva (220) umfassenden ersten Prothesenkörpers (221) der ersten Zahnprothese (200) mit ein oder mehreren ersten Stützelementen (130), welche an einer ersten Seite der ersten Stützvorrichtung (120) angeordnet sind, und
ein Klemmelement (140) zum Fixieren der mittels der Okklusionsvorrichtung (110) angeordneten und ausgerichteten ersten Zähne (210) in der ersten Gingiva (220),
wobei die Okklusionsvorrichtung (110) auf einer ersten Seite erste Abdrücke (112) von Zahnkronenoberseiten der ersten Zähne (210) gemäß der vordefinierten Okklusion umfasst, in welchen die Zahnkronen (212) der ersten Zähne (210) zum Anordnen und Ausrichten positionierbar sind,
wobei das Klemmelement (140) dazu konfiguriert ist, Druck auf eine der ersten Seite abgewandte zweite Seite der Okklusionsvorrichtung (110) und auf eine der ersten Seite abgewandte zweite Seite der ersten Stützvorrichtung (120) aufzubringen zum Fixieren der mittels der Okklusionsvorrichtung (110) angeordneten und ausgerichteten ersten Zähne (210) in der ersten Gingiva (220) des mittels der ersten Stützvorrichtung (120) gestützten ersten Prothesenkörpers (221),
wobei das Klemmelement (140) dazu konfiguriert ist, einen vordefinierten Druck auf die Okklusionsvorrichtung (110) und die erste Stützvorrichtung (120) aufzubringen.

2. Einklebehilfsvorrichtung (100) nach Anspruch 1, wobei es sich bei dem Klemmelement (140) um ein prothesenindividuelles Klemmelement (140) handelt, welches dazu konfiguriert ist, einen prothesenindividuellen vordefinierten Druck auf die Okklusionsvorrichtung (110) und die erste Stützvorrichtung (120) aufzubringen, wenn die erste Zahnprothese (200) mit den ersten Zähnen (210) und der ersten Gingiva (220) zwischen der Okklusionsvorrichtung (110) und der Stützvorrichtung (120) angeordnet ist.

3. Einklebehilfsvorrichtung (100) nach Anspruch 1, wobei das Klemmelement (140) eine Einstellvorrichtung zum Einstellen eines auf die Okklusionsvorrichtung (110) und die erste Stützvorrichtung (120) aufgebrachten Drucks umfasst.

4. Einklebehilfsvorrichtung (100) nach einem der vorangehenden Ansprüche, wobei das Klemmelement (140) eine Feder (142) umfasst, wobei die Feder (142) dazu konfiguriert ist, in Abhängigkeit einer Position (156, 158) und/oder Federkonstante der Feder (142) eine Federkraft zu erzeugen, welche den vordefinierten Druck auf die Okklusionsvorrichtung (110) und die erste Stützvorrichtung (120) aufbringt,
wobei das Klemmelement (140) beispielsweise einen ersten und einen zweiten Schenkel (144, 146) aufweist, welche relativ zueinander um eine gemeinsame Schwenkachse verschwenkbar miteinander verbunden sind, wobei die beiden Schenkel (144, 146) über die zwischen den beiden Schenkeln (144, 146) angeordnete Feder (142) miteinander verbunden sind.

5. Einklebehilfsvorrichtung (100) nach einem der Ansprüche 1 bis 2, wobei das Klemmelement (140) ein oder mehrere elastische Bögen (170) umfasst, welche sich von der ersten Stützvorrichtung (120) zu der Okklusionsvorrichtung (110) erstrecken und eine Federkonstante aufweisen, welche dazu konfiguriert ist, mittels Federkraft den vordefinierten Druck auf die Okklusionsvorrichtung (110) und die erste Stützvorrichtung (120) aufzubringen,
wobei das Klemmelement (140) beispielsweise einstückig ausgestaltet ist.

6. Einklebehilfsvorrichtung (100) nach einem der vorangehenden Ansprüche, wobei das Klemmelement (140) an der zweiten Seite der ersten Stützvorrichtung (120) und/oder an der zweiten Seite der Okklusionsvorrichtung (110) unter Verwendung eines Halteelements (124) zerstörungsfrei lösbar befestigt ist,
wobei das Halteelement (124) beispielsweise dazu konfiguriert ist, eine Rotation der von dem Halteelement (124) gehaltenen ersten Stützvorrichtung (120) und/oder der Okklusionsvorrichtung (110) um eine Rotationsachse zu ermöglichen, welche senkrecht auf einer Erstreckungsebene der ersten Stützvorrichtung (120) und/oder der Okklusionsvorrichtung (110) steht, und/oder
wobei das Klemmelement (140) ein erstes Kontaktelement umfasst, welches dazu konfiguriert ist, in eine erste Vertiefung in der zweiten Seite der ersten Stützvorrichtung (120) eingebracht zu werden, und/oder ein zweites Kontaktelement (164) umfasst, welches dazu konfiguriert ist, in eine zweite Vertiefung (116) in der zweiten Seite der Okklusionsvorrichtung (110) eingebracht zu werden, und/oder
wobei die Okklusionsvorrichtung (110) eine Mehrzahl von Durchgangsöffnung (114) aufweist, welche einen Zugang zu ein oder mehreren Aufnahmen in der ersten Gingiva (220) zur Aufnahme der ersten Zähne (210) ermöglicht.

7. Einklebehilfsvorrichtung (100) nach einem der vorangehenden Ansprüche, wobei die ein oder mehreren an der ersten Stützvorrichtung (120) angeordneten ersten Stützelemente (130) jeweils eine Stützfläche (136) aufweisen, welche dazu konfiguriert ist, jeweils mit einer Kontaktfläche einer der ersten Gingiva (220) gegenüberliegenden Unterseite (222) des ersten Prothesenkörpers (221) in Kontakt zu treten und deren Form ein Negativ der Form der jeweiligen Kontaktfläche darstellt, oder
wobei an der ersten Stützvorrichtung (120) drei oder mehr der ersten Stützelemente (130) in Form länglich gestreckte Stützelemente angeordnet und für eine Drei- oder Mehrpunktabstützung der ersten Gingiva (220) konfiguriert sind,
wobei die ersten Stützelemente (130) beispielsweise aus einem elastisch verformbaren Material bestehen.

8. Einklebehilfsvorrichtung (100) nach einem der vorangehenden Ansprüche, wobei die Einklebehilfsvorrichtung (100) ferner für ein Anordnen, Ausrichten und Fixieren einer Mehrzahl zweiter künstlicher Zähne zum Einkleben in einer zweiten künstlichen Gingiva einer zweiten Zahnprothese konfiguriert ist, wobei die erste Zahnprothese (200) für einen ersten Kiefer und die zweite Zahnprothese für einen zweiten Kiefer vorgesehen ist, wobei es sich bei dem zweiten Kiefer um einen Gegenkiefer zu dem ersten Kiefer handelt,
wobei die Einklebehilfsvorrichtung (100) eine zweite Stützvorrichtung zum Stützen eines die zweite Gingiva umfassenden zweiten Prothesenkörpers der zweiten Zahnprothese mit ein oder mehreren zweiten Stützelementen umfasst, welche an einer ersten Seite der zweiten Stützvorrichtung angeordnet sind,
wobei die Okklusionsvorrichtung (110) auf einer der ersten Seite abgewandten zweiten Seite zweite Abdrücke von Zahnkronenoberseiten der zweiten Zähne gemäß der vordefinierten Okklusion umfasst, in welchen die Zahnkronen der zweiten Zähne zum Anordnen und Ausrichten positionierbar sind,
wobei das Klemmelement (140) dazu konfiguriert ist, Druck auf die zweite Seite der Okklusionsvorrichtung (110) über eine der ersten Seite abgewandte zweite Seite der zweiten Stützvorrichtung aufzubringen, wobei der aufgebrachte Druck ferner zum Fixieren der mittels der Okklusionsvorrichtung (110) angeordneten und ausgerichteten zweiten Zähne in der zweiten Gingiva des mittels der zweiten Stützvorrichtung gestützten zweiten Prothesenkörpers konfiguriert ist.

9. System umfassend eine Einklebehilfsvorrichtung (100) nach einem der vorangehenden Ansprüche und eine erste Zahnprothese (200) mit einer Mehrzahl erster künstlicher Zähne (210) zum Einkleben in eine erste künstliche Gingiva (220) eines ersten Prothesenkörpers (221) der ersten Zahnprothese (200).

10. System nach Anspruch 9, ferner umfassend eine zweite Zahnprothese mit einer Mehrzahl zweiter künstlicher Zähne zum Einkleben in eine zweite künstliche Gingiva eines zweiten Prothesenkörpers der zweiten Zahnprothese.

11. Verfahren zum Herstellen einer Okklusionsvorrichtung (110) für eine Einklebehilfsvorrichtung (100) unter Verwendung eines Computersystems (10), wobei das Verfahren umfasst:
• Bereitstellen eines dreidimensionalen Computermodells einer ersten herzustellenden Zahnprothese (200), wobei die erste Zahnprothese (200) eine Mehrzahl von ersten künstlichen Zähnen (210) mit einer vordefinierten Okklusion umfasst, welche in einer ersten künstlichen Gingiva (220) eines ersten Prothesenkörpers (221) angeordnet sind,
• Bereitstellen eines generischen dreidimensionalen Computermodells einer Okklusionsvorrichtung (110),
• Erzeugen erster Abdrücke (112) von Zahnkronenoberseiten der ersten Zähne (210) in einer ersten Seite des dreidimensionalen Computermodells der Okklusionsvorrichtung (110), in welchen die Zahnkronen (212) der ersten Zähne (210) zum Anordnen und Ausrichten positionierbar sind,
• Herstellen der Okklusionsvorrichtung (110) unter Verwendung des dreidimensionalen Computermodells der Okklusionsvorrichtung (110) mit den ersten Abdrücken (112) der Zahnkronenoberseiten der ersten Zähne (210),
wobei das Verfahren ferner umfasst:
• Bereitstellen eines generischen dreidimensionalen Computermodells einer ersten Stützvorrichtung (120) zum Stützen eines die erste Gingiva (220) umfassenden ersten Prothesenkörpers (221) der ersten Zahnprothese (200) mit ein oder mehreren ersten Stützelementen (130), welche an einer ersten Seite der ersten Stützvorrichtung (120) angeordnet sind, wobei die ein oder mehreren an der ersten Stützvorrichtung (120) angeordneten ersten Stützelemente (130) jeweils eine Stützfläche (136) aufweisen, welche dazu vorgesehen ist jeweils mit einer Kontaktfläche einer der ersten Gingiva (220) gegenüberliegenden Unterseite (222) des ersten Prothesenkörpers (221) in Kontakt zu treten,
• Anpassen von Formen der Stützflächen (136), sodass die Formen jeweils ein Negativ der Form der jeweiligen Kontaktfläche darstellen,
• Herstellen der ersten Stützvorrichtung (120) unter Verwendung des dreidimensionalen Computermodells der ersten Stützvorrichtung (120) mit angepassten Stützflächen (136),
wobei das Verfahren ferner umfasst:
• Bereitstellen eines dreidimensionalen Computermodells eines generischen Klemmelements (140), welches dazu konfiguriert ist, Druck auf eine der ersten Seite abgewandte zweite Seite der Okklusionsvorrichtung (110) und auf eine der ersten Seite abgewandte zweite Seite der ersten Stützvorrichtung (120) aufzubringen zum Fixieren der mittels der Okklusionsvorrichtung (110) angeordneten und ausgerichteten ersten Zähne (210) in der ersten Gingiva (220) des mittels der ersten Stützvorrichtung (120) gestützten ersten Prothesenkörpers (221) , wobei das Klemmelement (140) ein oder mehrere elastische Bögen (170) umfasst,
• Bestimmen einer Federkonstante für die ein oder mehreren Bögen (170), mit welcher der vordefinierte Druck auf die Okklusionsvorrichtung (110) und die erste Stützvorrichtung (120) aufgebracht wird, wenn die erste Zahnprothese (200) zwischen der Okklusionsvorrichtung (110) und der ersten Stützvorrichtung (120) angeordnet ist,
• Anpassen der Materialstärke der ein oder mehreren Bögen (170) des dreidimensionalen Computermodells, sodass die ein oder mehreren Bögen (170) die bestimmte Federkonstante aufweisen,
• Herstellen des Klemmelements (140), welches dazu konfiguriert ist, den vordefinierten Druck auf die Okklusionsvorrichtung (110) und die erste Stützvorrichtung (120) aufzubringen, unter Verwendung des dreidimensionalen Computermodells der ein oder mehreren Bögen (170) mit der angepassten Materialstärke.

12. Verfahren nach Anspruch 11, wobei das Verfahren ferner umfasst:
• Bereitstellen eines dreidimensionalen Computermodells einer zweiten herzustellenden Zahnprothese, wobei die zweite Zahnprothese eine Mehrzahl von zweiten künstlichen Zähnen mit einer vordefinierten Okklusion umfasst, welche in einer zweiten künstlichen Gingiva eines zweiten Prothesenkörpers angeordnet sind,
• Erzeugen zweiter Abdrücke von Zahnkronenoberseiten der zweiten Zähne in einer der ersten Seite abgewandten zweiten Seite des dreidimensionalen Computermodells der Okklusionsvorrichtung (110), in welchen die Zahnkronen der zweiten Zähne zum Anordnen und Ausrichten positionierbar sind,
wobei zum Herstellen der Okklusionsvorrichtung (110) das dreidimensionalen Computermodells der Okklusionsvorrichtung (110) mit den ersten und zweiten Abdrücken der Zahnkronenoberseiten der ersten und zweiten Zähne verwendet wird.

13. Verfahren nach Anspruch 12, wobei das Verfahren ferner umfasst:
• Bereitstellen eines generischen dreidimensionalen Computermodells einer zweiten Stützvorrichtung zum Stützen eines die zweite Gingiva umfassenden zweiten Prothesenkörpers der zweiten Zahnprothese mit ein oder mehreren zweiten Stützelementen, welche an einer ersten Seite der zweiten Stützvorrichtung angeordnet sind, wobei die ein oder mehreren an der zweiten Stützvorrichtung angeordneten zweiten Stützelemente jeweils eine Stützfläche aufweisen, welche dazu vorgesehen ist jeweils mit einer Kontaktfläche einer der zweiten Gingiva (220) gegenüberliegenden Unterseite des zweiten Prothesenkörpers in Kontakt zu treten,
• Anpassen von Formen der Stützflächen, sodass die Formen jeweils ein Negativ der Form der jeweiligen Kontaktfläche darstellen,
• Herstellen der zweiten Stützvorrichtung unter Verwendung des dreidimensionalen Computermodells der zweiten Stützvorrichtung mit angepassten Stützflächen, und/oder
wobei das Klemmelement (140) gemäß dem dreidimensionale Computermodell des generischen Klemmelements (140) dazu konfiguriert ist, Druck auf eine der ersten Seite abgewandte zweite Seite der ersten Stützvorrichtung (120) und auf eine der ersten Seite abgewandte zweite Seite der zweiten Stützvorrichtung aufzubringen zum Fixieren der mittels der Okklusionsvorrichtung (110) angeordneten und ausgerichteten zweiten Zähne in der zweiten Gingiva des mittels der zweiten Stützvorrichtung gestützten zweiten Prothesenkörpers, wobei sich die ein oder mehreren elastischen Bögen von der ersten Stützvorrichtung (120) zu der zweiten Stützvorrichtung erstrecken, wobei diejenige Federkonstante der ein oder mehreren Bögen (170) bestimmt wird, mit welcher der vordefinierte Druck auf die erste und zweite Stützvorrichtung aufgebracht wird, wenn die erste und zweite Zahnprothese zwischen der ersten und zweiten Stützvorrichtung angeordnet sind, wobei die Materialstärke der ein oder mehreren Bögen des dreidimensionalen Computermodells angepasst wird, sodass die ein oder mehreren Bögen die bestimmte Federkonstante aufweisen, wobei das Klemmelement (140) unter Verwendung des dreidimensionalen Computermodells der ein oder mehreren Bögen mit der angepassten Materialstärke hergestellt wird.

14. Verfahren zum Verwenden einer Einklebehilfsvorrichtung (100) zum Einkleben einer Mehrzahl erster Zähne (210) in eine erste künstliche Gingiva (220), wobei die Einklebehilfsvorrichtung (100) umfasst:
eine Okklusionsvorrichtung (110) zum Anordnen und Ausrichten der ersten Zähne (210) relativ zueinander gemäß einer vordefinierten Okklusion,
eine erste Stützvorrichtung (120) zum Stützen eines die erste Gingiva (220) umfassenden ersten Prothesenkörpers (221) der ersten Zahnprothese mit ein oder mehreren ersten Stützelementen (130), welche an einer ersten Seite der ersten Stützvorrichtung (120) angeordnet sind, und
ein Klemmelement (140) zum Fixieren der mittels der Okklusionsvorrichtung (110) angeordneten und ausgerichteten ersten Zähne (210) in der ersten Gingiva (220),
wobei die Okklusionsvorrichtung (110) auf einer ersten Seite erste Abdrücke (112) von Zahnkronenoberseiten der ersten Zähne (210) gemäß der vordefinierten Okklusion umfasst, in welchen die Zahnkronen (212) der ersten Zähne (210) zum Anordnen und Ausrichten positionierbar sind,
wobei das Klemmelement (140) dazu konfiguriert ist, Druck auf eine der ersten Seite abgewandte zweite Seite der Okklusionsvorrichtung (110) und auf eine der ersten Seite abgewandte zweite Seite der ersten Stützvorrichtung (120) aufzubringen zum Fixieren der mittels der Okklusionsvorrichtung (110) angeordneten und ausgerichteten ersten Zähne in der ersten Gingiva (220) des mittels der ersten Stützvorrichtung (120) gestützten ersten Prothesenkörpers (221),
wobei das Klemmelement (140) dazu konfiguriert ist, einen vordefinierten Druck auf die Okklusionsvorrichtung (110) und die erste Stützvorrichtung (120) aufzubringen,
wobei das Verfahren umfasst:
• Anordnen und Ausrichten der ersten Zähne (210) in der Okklusionsvorrichtung (110), wobei die Zahnkronen (212) der ersten Zähne (210) in den ersten Abdrücken (112) der Okklusionsvorrichtung (110) positioniert werden,
• Einbringen eines Klebemittels in die erste Gingiva (220),
• Einbringen der ersten Zähne (210) in die erste Gingiva (220),
• Fixieren der ersten Zähne (210) in der ersten Gingiva (220), wobei die Unterseite (222) des ersten Prothesenkörpers (221) von dem ersten Stützvorrichtung (120) gestützt und unter Verwendung des Klemmelements (140) Druck auf die zweite Seite der Okklusionsvorrichtung (110) und auf die zweite Seite der ersten Stützvorrichtung (120) aufgebracht wird,
• Aushärten des Klebemittels,
• Entfernen der Einklebehilfsvorrichtung (100).

15. Verfahren nach Anspruch 14, wobei die Einklebehilfsvorrichtung (100) ferner für ein Anordnen, Ausrichten und Fixieren einer Mehrzahl zweiter künstlicher Zähne zum Einkleben in einer zweiten künstlichen Gingiva einer zweiten Zahnprothese konfiguriert ist, wobei die erste Zahnprothese (200) für einen ersten Kiefer und die zweite Zahnprothese für einen zweiten Kiefer vorgesehen ist, wobei es sich bei dem zweiten Kiefer um einen Gegenkiefer zu dem ersten Kiefer handelt,
wobei die Einklebehilfsvorrichtung (100) eine zweite Stützvorrichtung zum Stützen eines die zweite Gingiva umfassenden zweiten Prothesenkörpers der zweiten Zahnprothese mit ein oder mehreren zweiten Stützelementen umfasst, welche an einer ersten Seite der zweiten Stützvorrichtung angeordnet sind,
wobei die Okklusionsvorrichtung (110) auf einer der ersten Seite abgewandten zweiten Seite zweite Abdrücke von Zahnkronenoberseiten der zweiten Zähne gemäß der vordefinierten Okklusion umfasst, in welchen die Zahnkronen der zweiten Zähne zum Anordnen und Ausrichten positionierbar sind,
wobei das Klemmelement (140) dazu konfiguriert ist, Druck auf die zweite Seite der Okklusionsvorrichtung (110) über eine der ersten Seite abgewandte zweite Seite der zweiten Stützvorrichtung aufzubringen, wobei der aufgebrachte Druck ferner zum Fixieren der mittels der Okklusionsvorrichtung (110) angeordneten und ausgerichteten zweiten Zähne in der zweiten Gingiva des mittels der zweiten Stützvorrichtung gestützten zweiten Prothesenkörpers konfiguriert ist,
wobei das Verfahren ferner umfasst:
• Anordnen und Ausrichten der zweiten Zähne in der Okklusionsvorrichtung (110), wobei die Zahnkronen der zweiten Zähne in den zweiten Abdrücken der Okklusionsvorrichtung (110) positioniert werden,
• Einbringen eines Klebemittels in die zweite Gingiva,
• Einbringen der zweiten Zähne in die zweite Gingiva,
• Fixieren der zweiten Zähne in der zweiten Gingiva, wobei eine Unterseite eines zweiten Prothesenkörpers von dem zweiten Stützvorrichtung gestützt und unter Verwendung des Klemmelements (140) Druck auf die zweite Seite der zweiten Stützvorrichtung aufgebracht wird, sodass der Druck auf die zweite Seite der Okklusionsvorrichtung (110) über die zweite Stützvorrichtung und die zweite Zahnprothese aufgebracht wird.

## Claims

1. A bonding auxiliary device (100) for arranging, aligning and fixing a plurality of first artificial teeth (210) to be bonded into a first artificial gingiva (220) of a first dental prosthesis (200),
the bonding auxiliary device (100) comprising:
an occlusion device (110) for arranging and aligning the first teeth (210) relative to one another according to a predefined occlusion;
a first support device (120) for supporting a first prosthetic body (221) of the first dental prosthesis (200) comprising the first gingiva (220), comprising one or more first support elements (130), which are arranged on a first side of the first support device (120); and
a clamping element (140) for fixing the first teeth (210), which are arranged and aligned by means of the occlusion device (110), in the first gingiva (220),
on a first side, the occlusion device (110) comprising first impressions (112) of dental crown upper sides of the first teeth (210) according to the predefined occlusion, in which the dental crowns (212) of the first teeth (210) can be positioned for arrangement and alignment,
the clamping element (140) being configured to apply pressure onto a second side of the occlusion device (110) facing away from the first side, and onto a second side of the first support device (120) facing away from the first side, for fixing the first teeth (210), which are arranged and aligned by means of the occlusion device (110), in the first gingiva (220) of the first prosthetic body (221) that is supported by means of the first support device (120), and
the clamping element (140) being configured to apply a predefined pressure onto the occlusion device (110) and the first support device (120).

2. The bonding auxiliary device (100) according to claim 1, wherein the clamping element (140) is a prosthesis-specific clamping element (140), which is configured to apply a prosthesis-specific predefined pressure onto the occlusion device (110) and the first support device (120) when the first dental prosthesis (200), including the first teeth (210) and the first gingiva (220), is arranged between the occlusion device (110) and the support device (120).

3. The bonding auxiliary device (100) according to claim 1, wherein the clamping element (140) comprises a setting device for setting a pressure that is applied onto the occlusion device (110) and the first support device (120).

4. The bonding auxiliary device (100) according to any one of the preceding claims, wherein the clamping element (140) comprises a spring (142), the spring (142) being configured to generate a spring force, as a function of a position (156, 158) and/or spring constant of the spring (142), which applies the predefined pressure onto the occlusion device (110) and the first support device (120),
the clamping element (140) comprising, for example, a first and a second leg (144, 146), which are connected to one another so as to be pivotable relative to one another about a shared pivot axis, the two legs (144, 146) being connected to one another via the spring (142) arranged between the two legs (144, 146).

5. The bonding auxiliary device (100) according to any one of claims 1 to 2, wherein the clamping element (140) comprises one or more elastic arcs (170), which extend from the first support device (120) to the occlusion device (110) and have a spring constant that is configured to apply, by means of spring force, the predefined pressure onto the occlusion device (110) and the first support device (120),
the clamping element (140) having, for example, a one-piece design.

6. The bonding auxiliary device (100) according to any one of the preceding claims, wherein the clamping element (140) is attached in a non-destructively detachable manner to the second side of the first support device (120) and/or to the second side of the occlusion device (110), using a retaining element (124),
the retaining element (124) being configured, for example, to enable a rotation of the first support device (120) retained by the retaining element (124) and/or of the occlusion device (110) about an axis of rotation, which is situated perpendicularly to an extension plane of the first support device (120) and/or the occlusion device (110), and/or
the clamping element (140) comprising a first contact element, which is configured to be introduced into a first recess in the second side of the first support device (120), and/or comprising a second contact element (164), which is configured to be introduced into a second recess (116) in the second side of the occlusion device (110), and/or
the occlusion device (110) having a plurality of through-openings (114) enabling access to one or more receptacles in the first gingiva (220) for receiving the first teeth (210).

7. The bonding auxiliary device (100) according to any one of the preceding claims, wherein the one or more first support elements (130) arranged at the first support device (120) each comprise a support surface (136), which is configured to make contact in each case with a contact surface of an underside (222) of the first prosthetic body (221) located opposite the first gingiva (220), and the shape of which represents a negative imprint of the shape of the particular contact surface, or
wherein three or more of the first support elements (130), in the form of longitudinally extended support elements, are arranged at the first support device (120) and configured for three-point or multi-point support of the first gingiva (220),
the first support elements (130) being made, for example, of an elastically deformable material.

8. The bonding auxiliary device (100) according to any one of the preceding claims, wherein the bonding auxiliary device (100) is furthermore configured for arranging, aligning and fixing a plurality of second artificial teeth to be bonded into a second artificial gingiva of a second dental prosthesis, the first dental prosthesis (200) being intended for a first jaw, and the second dental prosthesis being intended for a second jaw, the second jaw being an opposing jaw relative to the first jaw,
the bonding auxiliary device (100) comprising a second support device for supporting a second prosthetic body of the second dental prosthesis comprising the second gingiva, comprising one or more second support elements, which are arranged on a first side of the second support device,
on a second side facing away from the first side, the occlusion device (110) comprising second impressions of dental crown upper sides of the second teeth according to the predefined occlusion, in which the dental crowns of the second teeth can be positioned for arrangement and alignment, and
the clamping element (140) being configured to apply pressure onto the second side of the occlusion device (110) via a second side of the second support device facing away from the first side, the applied pressure furthermore being configured for fixing the second teeth, which are arranged and aligned by means of the occlusion device (110), in the second gingiva of the second prosthetic body that is supported by means of the second support device.

9. A system comprising a bonding auxiliary device (100) according to any one of the preceding claims and a first dental prosthesis (200) comprising a plurality of first artificial teeth (210) to be bonded into a first artificial gingiva (220) of a first prosthetic body (221) of the first dental prosthesis (200).

10. The system according to claim 9, furthermore comprising a second dental prosthesis comprising a plurality of second artificial teeth to be bonded into a second artificial gingiva of a second prosthetic body of the second dental prosthesis.

11. A method for producing an occlusion device (110) for a bonding auxiliary device (100), using a computer system (10), the method comprising:
• providing a three-dimensional computer model of a first dental prosthesis (200) to be produced, wherein the first dental prosthesis (200) comprises a plurality of first artificial teeth (210) having a predefined occlusion, which are arranged in a first artificial gingiva (220) of a first prosthetic body (221);
• providing a generic three-dimensional computer model of an occlusion device (110);
• generating first impressions (112) of dental crown upper sides of the first teeth (210) in a first side of the three-dimensional computer model of the occlusion device (110) in which the dental crowns (212) of the first teeth (210) can be positioned for arrangement and alignment; and
• producing the occlusion device (110), using the three-dimensional computer model of the occlusion device (110) including the first impressions (112) of the dental crown upper sides of the first teeth (210),
the method furthermore comprising:
• providing a generic three-dimensional computer model of a first support device (120) for supporting a first prosthetic body (221) of the first dental prosthesis (200) comprising the first gingiva (220), comprising one or more first support elements (130), which are arranged on a first side of the first support device (120), wherein the one or more first support elements (130) arranged at the first support device (120) in each case comprise a support surface (136), which is intended to make contact in each case with a contact surface of an underside (222) of the first prosthetic body (221) located opposite the first gingiva (220);
• adapting shapes of support surfaces (136) so that the shapes in each case represent a negative imprint of the shape of the particular contact surface; and
• producing the first support device (120), using the three-dimensional computer model of the first support device (120) including adapted support surfaces (136),
the method furthermore comprising:
• providing a three-dimensional computer model of a generic clamping element (140), which is configured to apply pressure onto a second side of the occlusion device (110) facing away from the first side, and onto a second side of the first support device (120) facing away from the first side, for fixing the first teeth (210), which are arranged and aligned by means of the occlusion device (110), in the first gingiva (220) of the first prosthetic body (221) that is supported by means of the first support device (120), the clamping element (140) comprising one or more elastic arcs (170);
• determining a spring constant for the one or more arcs (170) with which the predefined pressure is applied onto the occlusion device (110) and the first support device (120) when the first dental prosthesis (200) is arranged between the occlusion device (110) and the first support device (120);
• adapting the material thickness of the one or more arcs (170) of the three-dimensional computer model so that one or more arcs (170) have the determined spring constant; and
• producing the clamping element (140), which is configured to apply the predefined pressure onto the occlusion device (110) and the first support device (120), using the three-dimensional computer model of the one or more arcs (170) having the adapted material thickness.

12. The method according to claim 11, wherein the method furthermore comprises:
• providing a three-dimensional computer model of a second dental prosthesis to be produced, wherein the second dental prosthesis comprises a plurality of second artificial teeth having a predefined occlusion, which are arranged in a second artificial gingiva of a second prosthetic body; and
• generating second impressions of dental crown upper sides of the second teeth in a second side of the three-dimensional computer model of the occlusion device (110) facing away from the first side, in which the dental crowns of the second teeth can be positioned for arrangement and alignment, for producing the occlusion device (110), the three-dimensional computer model of the occlusion device (110), including the first and second impressions of the dental crown upper side of the first and second teeth, being used.

13. The method according to claim 12, wherein the method furthermore comprises:
• providing a generic three-dimensional computer model of a second support device for supporting a second prosthetic body of the second dental prosthesis comprising the second gingiva, comprising one or more second support elements, which are arranged on a first side of the second support device, wherein the one or more second support elements arranged at the second support device in each case comprise a support surface, which is intended to make contact in each case with a contact surface of an underside of the second prosthetic body located opposite the second gingiva (220);
• adapting shapes of support surfaces so that the shapes in each case represent a negative imprint of the shape of the particular contact surface; and
• producing the second support device, using the three-dimensional computer model of the second support device with adapted support surfaces, and/or
the clamping element (140) according to the three-dimensional computer model of the generic clamping element (140) being configured to apply pressure onto a second side of the first support device (120) facing away from the first side, and onto a second side of the second support device facing away from the first side, for fixing the second teeth, which are arranged and aligned by means of the occlusion device (110), in the second gingiva of the second prosthetic body that is supported by means of the second support device, the one or more elastic arcs extending from the first support device (120) to the second support device, the spring constant of the one or more arcs (170) being determined with which the predefined pressure is applied onto the first and second support devices when the first and second dental prostheses are arranged between the first and second support devices, the material thickness of the one or more arcs of the three-dimensional computer model being adapted so that the one or more arcs have the determined spring constant, and the clamping element (140) being produced using the three-dimensional computer model of the one or more arcs having the adapted material thickness.

14. A method for using a bonding auxiliary device (100) for bonding a plurality of first teeth (210) into a first artificial gingiva (220), the bonding auxiliary device (100) comprising:
an occlusion device (110) for arranging and aligning the first teeth (210) relative to one another according to a predefined occlusion;
a first support device (120) for supporting a first prosthetic body (221) of the first dental prosthesis comprising the first gingiva (220), comprising one or more first support elements (130), which are arranged on a first side of the first support device (120); and
a clamping element (140) for fixing the first teeth (210), which are arranged and aligned by means of the occlusion device (110), in the first gingiva (220),
on a first side, the occlusion device (110) comprising first impressions (112) of dental crown upper sides of the first teeth (210) according to the predefined occlusion, in which the dental crowns (212) of the first teeth (210) can be positioned for arrangement and alignment,
the clamping element (140) being configured to apply pressure onto a second side of the occlusion device (110) facing away from the first side, and onto a second side of the first support device (120) facing away from the first side, for fixing the first teeth, which are arranged and aligned by means of the occlusion device (110), in the first gingiva (220) of the first prosthetic body (221) that is supported by means of the first support device (120),
the clamping element (140) being configured to apply a predefined pressure onto the occlusion device (110) and the first support device (120),
the method comprising:
• arranging and aligning the first teeth (210) in the occlusion device (110), wherein the dental crowns (212) of the first teeth (210) are positioned in the first impressions (112) of the occlusion device (110);
• introducing a bonding agent into the first gingiva (220);
• introducing the first teeth (210) into the first gingiva (220);
• fixing the first teeth (210) in the first gingiva (220), wherein the underside (222) of the first prosthetic body (221) is supported by the first support device (120) and, using the clamping element (140), pressure is applied onto the second side of the occlusion device (110) and onto the second side of the first support device (120);
• curing the bonding agent; and
• removing the bonding auxiliary device (100).

15. The method according to claim 14, wherein the bonding auxiliary device (100) is furthermore configured for arranging, aligning and fixing a plurality of second artificial teeth to be bonded into a second artificial gingiva of a second dental prosthesis, the first dental prosthesis (200) being intended for a first jaw, and the second dental prosthesis being intended for a second jaw, the second jaw being an opposing jaw relative to the first jaw,
the bonding auxiliary device (100) comprising a second support device for supporting a second prosthetic body of the second dental prosthesis comprising the second gingiva, comprising one or more second support elements, which are arranged on a first side of the second support device,
on a second side facing away from the first side, the occlusion device (110) comprising second impressions of dental crown upper sides of the second teeth according to the predefined occlusion, in which the dental crowns of the second teeth can be positioned for arrangement and alignment, and
the clamping element (140) being configured to apply pressure onto the second side of the occlusion device (110) via a second side of the second support device facing away from the first side, the applied pressure furthermore being configured for fixing the second teeth, which are arranged and aligned by means of the occlusion device (110), in the second gingiva of the second prosthetic body that is supported by means of the second support device,
the method furthermore comprising:
• arranging and aligning the second teeth in the occlusion device (110), wherein the dental crowns of the second teeth are positioned in the second impressions of the occlusion device (110);
• introducing a bonding agent into the second gingiva;
• introducing the second teeth into the second gingiva; and
• fixing the second teeth in the second gingiva, wherein an underside of a second prosthetic body is supported by the second support device and, using the clamping element (140), pressure is applied onto the second side of the second support device so that the pressure is applied onto the second side of the occlusion device (110) via the second support device and the second dental prosthesis.

## Revendications

1. Dispositif auxiliaire de liaison (100) destinée à agencer, aligner et fixer une pluralité de premières dents artificielles (210) à lier en une première gencive artificielle (220) d'une première prothèse dentaire (200),
le dispositif auxiliaire de liaison (100) comprenant :
un dispositif d'occlusion (110) pour agencer et aligner les premières dents (210) les unes par rapport aux autres conformément à une occlusion prédéfinie ;
un premier dispositif de soutien (120) destiné à soutenir un premier corps prothétique (221) de la première prothèse dentaire (200) comprenant la première gencive (220), comprenant un ou plusieurs premiers éléments de soutien (130), qui sont agencés sur un premier côté du premier dispositif de soutien(120) ; et
un élément d'attache (140) destiné à fixer les premières dents (210), qui sont agencées et alignées au moyen du dispositif d'occlusion (110), dans la première gencive (220),
sur un premier côté, le dispositif d'occlusion (110) comprenant de premières impressions (112) des côtés supérieurs de couronne dentaire des premières dents (210) conformément à l'occlusion prédéfinie, dans laquelle les couronnes dentaires (212) des premières dents (210) peuvent être positionnées pour agencement et alignement,
l'élément d'attache (140) étant conçu pour appliquer une pression sur un second côté du dispositif d'occlusion (110) faisant face à la direction opposée au premier côté, et sur un second côté du premier dispositif de soutien (120) faisant face à la direction opposée au premier côté, pour fixer les premières dents (210), qui sont agencées et alignées au moyen du dispositif d'occlusion (110), dans la première gencive (220) du premier corps prothétique (221) qui est soutenu au moyen du premier dispositif de soutien (120), et
l'élément d'attache (140) étant conçu pour appliquer une pression prédéfinie sur le dispositif d'occlusion (110) et le premier dispositif de soutien (120).

2. Dispositif auxiliaire de liaison (100) selon la revendication 1, dans lequel l'élément d'attache (140) est un élément d'attache spécifique de la prothèse (140), qui est conçu pour appliquer une pression prédéfinie spécifique de la prothèse sur le dispositif d'occlusion (110) et le premier dispositif de soutien (120) lorsque la première prothèse dentaire (200), incluant les premières dents (210) et la première gencive (220), est agencée entre le dispositif d'occlusion (110) et le dispositif de soutien (120).

3. Dispositif auxiliaire de liaison (100) selon la revendication 1, dans lequel l'élément d'attache (140) comprend un dispositif de définition destiné à définir une pression qui est appliquée sur le dispositif d'occlusion (110) et le premier dispositif de soutien (120).

4. Dispositif auxiliaire de liaison (100) selon l'une quelconque des revendications précédentes, dans lequel l'élément d'attache (140) comprend un ressort (142), le ressort (142) étant conçu pour générer une force de ressort, en tant que fonction d'une position (156, 158) et/ou d'une constante d'élasticité du ressort (142), qui applique la pression prédéfinie sur le dispositif d'occlusion (110) et le premier dispositif de soutien (120),
l'élément d'attache (140) comprenant, par exemple, une première et une seconde patte (144, 146), qui sont accouplées l'une à l'autre de sorte à pouvoir pivoter l'une par rapport à l'autre autour d'un axe de pivot partagé, les deux pattes (144, 146) étant accouplées l'une à l'autre par l'intermédiaire du ressort (142) agencé entre les deux pattes (144, 146).

5. Dispositif auxiliaire de liaison (100) selon l'une quelconque des revendications 1 à 2, dans lequel l'élément d'attache (140) comprend une ou plusieurs arcades élastiques (170), qui s'étendent depuis le premier dispositif de soutien (120) jusqu'au dispositif d'occlusion (110) et ont une constante d'élasticité qui est conçue pour appliquer, au moyen d'une force de ressort, la pression prédéfinie sur le dispositif d'occlusion (110) et le premier dispositif de soutien (120),
l'élément d'attache (140) ayant, par exemple, une conception d'une seule pièce.

6. Dispositif auxiliaire de liaison (100) selon l'une quelconque des revendications précédentes, dans lequel l'élément d'attache (140) est attaché d'une manière détachable non destructive au second côté du premier dispositif de soutien (120) et/ou au second côté du dispositif d'occlusion (110), en utilisant un élément de rétention (124),
l'élément de rétention (124) étant conçu, par exemple, pour permettre une rotation du premier dispositif de soutien (120) retenu par l'élément de rétention (124) et/ou du dispositif d'occlusion (110) autour d'un axe de rotation, qui est situé perpendiculairement à un plan d'extension du premier dispositif de soutien (120) et/ou du dispositif d'occlusion (110), et/ou
l'élément d'attache (140) comprenant un premier élément de contact, qui est conçu pour être introduit dans un premier évidement dans le second côté du premier dispositif de soutien (120), et/ou comprenant un second élément de contact (164), qui est conçu pour être introduit dans un second évidement (116) dans le second côté du dispositif d'occlusion (110), et/ou
le dispositif d'occlusion (110) ayant une pluralité d'orifices traversants (114) permettant l'accès à un ou plusieurs réceptacles dans la première gencive (220) destinés à recevoir les premières dents (210).

7. Dispositif auxiliaire de liaison (100) selon l'une quelconque des revendications précédentes, dans lequel le ou les premiers éléments de soutien (130) agencés au niveau du premier dispositif de soutien (120) comprennent chacun une surface de soutien (136), qui est conçue pour entrer en contact dans chaque cas avec une surface de contact d'un côté inférieur (222) du premier corps prothétique (221) situé à l'opposé de la première gencive (220), et sa forme représentant une empreinte négative de la forme de la surface de contact particulière, ou
dans lequel trois ou plus des premiers éléments de soutien (130), sous la forme d'éléments de soutien étendus dans la direction longitudinale, sont agencés au niveau du premier dispositif de soutien (120) et conçus pour un soutien à trois points ou multipoints de la première gencive (220),
les premiers éléments de soutien (130) étant fabriqués, par exemple, dans un matériau déformable de manière élastique.

8. Dispositif auxiliaire de liaison (100) selon l'une quelconque des revendications précédentes, dans lequel le dispositif auxiliaire de liaison (100) est en outre conçu pour agencer, aligner et fixer une pluralité de secondes dents artificielles à lier en une seconde gencive artificielle d'une seconde prothèse dentaire, la première prothèse dentaire (200) étant prévue pour une première mâchoire, et la seconde prothèse dentaire étant prévue pour une seconde mâchoire, la seconde mâchoire étant une mâchoire opposée à la première mâchoire,
le dispositif auxiliaire de liaison (100) comprenant un second dispositif de soutien destiné à soutenir un second corps prothétique de la seconde prothèse dentaire comprenant la seconde gencive, comprenant un ou plusieurs seconds éléments de soutien, qui sont agencés sur un premier côté du second dispositif de soutien,
sur un second côté faisant face à la direction opposée au premier côté, le dispositif d'occlusion (110) comprenant de secondes impressions de côtés supérieurs de couronne dentaire des secondes dents conformément à l'occlusion prédéfinie, dans laquelle les couronnes dentaires des secondes dents peuvent être positionnées pour agencement et alignement, et
l'élément d'attache (140) étant conçu pour appliquer une pression sur le second côté du dispositif d'occlusion (110) par l'intermédiaire d'un second côté du second dispositif de soutien faisant face à la direction opposée au premier côté, la pression appliquée étant en outre conçue pour fixer les secondes dents, qui sont agencées et alignées au moyen du dispositif d'occlusion (110), dans la seconde gencive du second corps prothétique qui est soutenu au moyen du second dispositif de soutien.

9. Système comprenant un dispositif auxiliaire de liaison (100) selon l'une quelconque des revendications précédentes et une première prothèse dentaire (200) comprenant une pluralité de premières dents artificielles (210) à lier en une première gencive artificielle (220) d'un premier corps prothétique (221) de la première prothèse dentaire (200).

10. Système selon la revendication 9, comprenant en outre une seconde prothèse dentaire comprenant une pluralité de secondes dents artificielles à lier en une seconde gencive artificielle d'un second corps prothétique de la seconde prothèse dentaire.

11. Procédé de production d'un dispositif d'occlusion (110) destiné à un dispositif auxiliaire de liaison (100), en utilisant un système informatique (10), le procédé comprenant les étapes consistant à :
• fournir un modèle informatique tridimensionnel d'une première prothèse dentaire (200) à produire, dans lequel la première prothèse dentaire (200) comprend une pluralité de premières dents artificielles (210) ayant une occlusion prédéfinie, qui sont agencées en une première gencive artificielle (220) d'un premier corps prothétique (221) ;
• fournir un modèle informatique tridimensionnel générique d'un dispositif d'occlusion (110) ;
• générer de premières impressions (112) des côtés supérieurs de couronne dentaire des premières dents (210) dans un premier côté du modèle informatique tridimensionnel du dispositif d'occlusion (110) dans lequel les couronnes dentaires (212) des premières dents (210) peuvent être positionnées pour agencement et alignement ; et
• produire le dispositif d'occlusion (110), en utilisant le modèle informatique tridimensionnel du dispositif d'occlusion (110) incluant les premières impressions (112) des côtés supérieurs de couronne dentaire des premières dents (210),
le procédé comprenant en outre les étapes consistant à :
• fournir un modèle informatique tridimensionnel générique d'un premier dispositif de soutien (120) destiné à soutenir un premier corps prothétique (221) de la première prothèse dentaire (200) comprenant la première gencive (220), comprenant un ou plusieurs premiers éléments de soutien (130), qui sont agencés sur un premier côté du premier dispositif de soutien (120), dans lequel le ou les premiers éléments de soutien (130) agencés au niveau du premier dispositif de soutien (120) comprennent dans chaque cas une surface de soutien (136), qui est prévue pour entrer en contact dans chaque cas avec une surface de contact d'un côté inférieur (222) du premier corps prothétique (221) situé à l'opposé de la première gencive (220) ;
• adapter les formes des surfaces de soutien (136) de telle sorte que les formes représentent dans chaque cas une empreinte négative de la forme de la surface de contact particulière ; et
• produire le premier dispositif de soutien (120), en utilisant le modèle informatique tridimensionnel du premier dispositif de soutien (120) incluant des surfaces de soutien adaptées (136),
le procédé comprenant en outre les étapes consistant à :
• fournir un modèle informatique tridimensionnel d'un élément d'attache (140) générique, qui est conçu pour appliquer une pression sur un second côté du dispositif d'occlusion (110) faisant face à la direction opposée au premier côté, et sur un second côté du premier dispositif de soutien (120) faisant face à la direction opposée au premier côté, pour fixer les premières dents (210), qui sont agencées et alignées au moyen du dispositif d'occlusion (110), dans la première gencive (220) du premier corps prothétique (221) qui est soutenu au moyen du premier dispositif de soutien (120), l'élément d'attache (140) comprenant une ou plusieurs arcades élastiques (170) ;
• déterminer une constante d'élasticité pour la ou les arcades (170) avec laquelle la pression prédéfinie est appliquée sur le dispositif d'occlusion (110) et le premier dispositif de soutien (120) lorsque la première prothèse dentaire (200) est agencée entre le dispositif d'occlusion (110) et le premier dispositif de soutien (120) ;
• adapter l'épaisseur de matériau de la ou des arcades (170) du modèle informatique tridimensionnel de telle sorte qu'une ou plusieurs arcades (170) ont la constante d'élasticité déterminée ; et
• produire l'élément d'attache (140), qui est conçu pour appliquer la pression prédéfinie sur le dispositif d'occlusion (110) et le premier dispositif de soutien (120), en utilisant le modèle informatique tridimensionnel de la ou des arcades (170) ayant l'épaisseur de matériau adaptée.

12. Procédé selon la revendication 11, dans lequel le procédé comprend en outre les étapes consistant à :
• fournir un modèle informatique tridimensionnel d'une seconde prothèse dentaire à produire, dans lequel la seconde prothèse dentaire comprend une pluralité de secondes dents artificielles ayant une occlusion prédéfinie, qui sont agencées en une seconde gencive artificielle d'un second corps prothétique ; et
• générer de secondes impressions de côtés supérieurs de couronne dentaire des secondes dents dans un second côté du modèle informatique tridimensionnel du dispositif d'occlusion (110) faisant face à la direction opposée au premier côté, dans lequel les couronnes dentaires des secondes dents peuvent être positionnées pour agencement et alignement,
pour produire le dispositif d'occlusion (110), le modèle informatique tridimensionnel du dispositif d'occlusion (110), incluant les première et seconde impressions du côté supérieur de couronne dentaire des première et seconde dents, étant utilisé.

13. Procédé selon la revendication 12, dans lequel le procédé comprend en outre les étapes consistant à :
• fournir un modèle informatique tridimensionnel générique d'un second dispositif de soutien destiné à soutenir un second corps prothétique de la seconde prothèse dentaire comprenant la seconde gencive, comprenant un ou plusieurs seconds éléments de soutien, qui sont agencés sur un premier côté du second dispositif de soutien, dans lequel le ou les seconds éléments de soutien agencés au niveau du second dispositif de soutien comprennent dans chaque cas une surface de soutien, qui est prévue pour entrer en contact dans chaque cas avec une surface de contact d'un côté inférieur du second corps prothétique situé à l'opposé de la seconde gencive (220) ;
• adapter les formes des surfaces de soutien de telle sorte que les formes représentent dans chaque cas une empreinte négative de la forme de la surface de contact particulière ; et
• produire le second dispositif de soutien, en utilisant le modèle informatique tridimensionnel du second dispositif de soutien avec des surfaces de soutien adaptées, et/ou
l'élément d'attache (140) conforme au modèle informatique tridimensionnel de l'élément d'attache (140) générique étant conçu pour appliquer une pression sur un second côté du premier dispositif de soutien (120) faisant face à la direction opposée au premier côté, et sur un second côté du second dispositif de soutien faisant face à la direction opposée au premier côté, pour fixer les secondes dents, qui sont agencées et alignées au moyen du dispositif d'occlusion (110), dans la seconde gencive du second corps prothétique qui est soutenu au moyen du second dispositif de soutien, la ou les arcades élastiques s'étendant depuis le premier dispositif de soutien (120) jusqu'au second dispositif de soutien, la constante d'élasticité de la ou des arcades (170) avec laquelle la pression prédéfinie est appliquée sur les premier et second dispositifs de soutien étant déterminée lorsque les première et seconde prothèses dentaires sont agencées entre les premier et second dispositifs de soutien, l'épaisseur de matériau de la ou des arcades du modèle informatique tridimensionnel étant adaptée de telle sorte que la ou les arcades ont la constante d'élasticité déterminée, et l'élément d'attache (140) étant produit en utilisant le modèle informatique tridimensionnel de la ou des arcades ayant l'épaisseur de matériau adaptée.

14. Procédé d'utilisation d'un dispositif auxiliaire de liaison (100) destiné à lier une pluralité de première dents (210) en une première gencive artificielle (220), le dispositif auxiliaire de liaison (100) comprenant :
un dispositif d'occlusion (110) pour agencer et aligner les premières dents (210) les unes par rapport aux autres conformément à une occlusion prédéfinie ;
un premier dispositif de soutien (120) destiné à soutenir un premier corps prothétique (221) de la première prothèse dentaire comprenant la première gencive (220), comprenant un ou plusieurs éléments de soutien (130), qui sont agencés sur un premier côté du premier dispositif de soutien(120) ; et
un élément d'attache (140) destiné à fixer les premières dents (210), qui sont agencées et alignées au moyen du dispositif d'occlusion (110), dans la première gencive (220),
sur un premier côté, le dispositif d'occlusion (110) comprenant de premières impressions (112) des côtés supérieurs de couronne dentaire des premières dents (210) conformément à l'occlusion prédéfinie, dans laquelle les couronnes dentaires (212) des premières dents (210) peuvent être positionnées pour agencement et alignement,
l'élément d'attache (140) étant conçu pour appliquer une pression sur un second côté du dispositif d'occlusion (110) faisant face à la direction opposée au premier côté, et sur un second côté du premier dispositif de soutien (120) faisant face à la direction opposée au premier côté, pour fixer les premières dents, qui sont agencées et alignées au moyen du dispositif d'occlusion (110), dans la première gencive (220) du premier corps prothétique (221) qui est soutenu au moyen du premier dispositif de soutien (120),
l'élément d'attache (140) étant conçu pour appliquer une pression prédéfinie sur le dispositif d'occlusion (110) et le premier dispositif de soutien (120),
le procédé comprenant les étapes consistant à :
• agencer et aligner les premières dents (210) dans le dispositif d'occlusion (110), dans lequel les couronnes dentaires (212) des premières dents (210) sont positionnées dans les premières impressions (112) du dispositif d'occlusion (110) ;
• introduire un agent de liaison dans la première gencive (220) ;
• introduire les premières dents (210) dans la première gencive (220) ;
• fixer les premières dents (210) dans la première gencive (220), dans lequel le côté inférieur (222) du premier corps prothétique (221) est soutenu par le premier dispositif de soutien (120) et, en utilisant l'élément d'attache (140), une pression est appliquée sur le second côté du dispositif d'occlusion (110) et sur le second côté du premier dispositif de soutien (120) ;
• faire durcir l'agent de liaison ; et
• retirer le dispositif auxiliaire de liaison (100).

15. Procédé selon la revendication 14, dans lequel le dispositif auxiliaire de liaison (100) est en outre conçu pour agencer, aligner et fixer une pluralité de secondes dents artificielles à lier en une seconde gencive artificielle d'une seconde prothèse dentaire, la première prothèse dentaire (200) étant prévue pour une première mâchoire, et la seconde prothèse dentaire étant prévue pour une seconde mâchoire, la seconde mâchoire étant une mâchoire opposée à la première mâchoire,
le dispositif auxiliaire de liaison (100) comprenant un second dispositif de soutien destiné à soutenir un second corps prothétique de la seconde prothèse dentaire comprenant la seconde gencive, comprenant un ou plusieurs seconds éléments de soutien, qui sont agencés sur un premier côté du second dispositif de soutien,
sur un second côté faisant face à la direction opposée au premier côté, le dispositif d'occlusion (110) comprenant de secondes impressions de côtés supérieurs de couronne dentaire des secondes dents conformément à l'occlusion prédéfinie, dans laquelle les couronnes dentaires des secondes dents peuvent être positionnées pour agencement et alignement, et
l'élément d'attache (140) étant conçu pour appliquer une pression sur le second côté du dispositif d'occlusion (110) par l'intermédiaire d'un second côté du second dispositif de soutien faisant face à la direction opposée au premier côté, la pression appliquée étant en outre conçue pour fixer les secondes dents, qui sont agencées et alignées au moyen du dispositif d'occlusion (110), dans la seconde gencive du second corps prothétique qui est soutenu au moyen du second dispositif de soutien,
le procédé comprenant en outre les étapes consistant à :
• agencer et aligner les secondes dents dans le dispositif d'occlusion (110), dans lequel les couronnes dentaires des secondes dents sont positionnées dans les secondes impressions du dispositif d'occlusion (110) ;
• introduire un agent de liaison dans la seconde gencive ;
• introduire les secondes dents dans la seconde gencive ; et
• fixer les secondes dents dans la seconde gencive, dans lequel un côté inférieur d'un second corps prothétique est soutenu par le second dispositif de soutien et, en utilisant l'élément d'attache (140), une pression est appliquée sur le second côté du second dispositif de soutien de telle sorte que la pression est appliquée sur le second côté du dispositif d'occlusion (110) par l'intermédiaire du second dispositif de soutien et de la seconde prothèse dentaire.
